# EUROPEAN PATENT APPLICATION

(11) **EP 1 906 349 A1**
(43) Date of publication of application: **02.04.2008**
(21) Application number: 07021701.3
(22) Date of filing: 02.07.2003
(51) Int. Cl.: G06Q 20/00

(54) **Payment and transaction system using digital mobile telephones**

(62) Divisional of application: 03738142.3
(71) Applicant: Mobipay International, S.A., 28108 Alcobendas (ES)
(72) Inventor: Garcia Ruano, Luisa, 28031 Madrid (ES); de Casso Besterrechea, Ignacio, 28005 Madrid (ES); Sánchez Santos, Gerardo, 28027 Madrid (ES); Jiménez Sánchez, Arturo, 13360 Cocuellamos (ES)
(74) Representative: Ungria Lopez, Javier

(57) **Abstract**

Allows for the use of any type of mobile telephone as an activating equipment for payment devices using any mobile telephone network employing any technology in any country connected to the system. Includes a group of payment and operations processing centres (1) in different countries, which are interconnected through international addressing processors (2) to carry out transactions and payments among users-payers and beneficiaries associated to the system in either the same or different countries. The centres (1) have a specific structure in order to allow for different types of purchases, consultations, modifications and the authentication of payment devices. The invention allows for all of the different messages exchanged to use voice messaging. In addition the invention allows for the use of a mobile telephone of a beneficiary/merchant as a POS (22) to carry out transactions.

## Description

### TECHNICAL FIELD OF THE INVENTION

The invention in question applies to the industrial field of electronic transactions, relating to commerce and payment systems, within the field of mobile telephony, authentication and digital signatures.

### BACKGROUND OF THE INVENTION

In the prior state of the art it is known as the use of payment systems and procedures by means of the mobile phone of the user or payer within a commercial establishment that is equipped with a point of sale terminal (POS) that includes a digital mobile telephone to carry out the transactions.

In this regard, it should be mentioned that European patent application EP-00202720.9 describes a transaction procedure that allows for the use of any type of mobile telephone as a means of payment in different purchase modalities using the GSM (Global System Mobile) mobile telephony network, and without any modification to the mobile telephone being required, which allows any user who has a mobile telephone to contract all of the functions and payment services, and all without the need for a credit card. Accordingly, it constitutes a payment transaction center that is equipped with the different mobile telephone communication capacities with the corresponding communications equipment as generally exists in the mobile telephone network, and which further comprises means of identifying the type of mobile telephone making the payment and thereby allowing the payment and transaction center to establish communications with any type of mobile telephone using the mobile telephone network, which is not allowed to happen in any of the prior arts mentioned in said application.

Another patent that should be mentioned is the unpublished Spanish patent number 200200576 which describes a transaction and payment system using mobile telephones and, in addition to allowing for the use of any mobile telephone, allows for the operation with different mobile telephone networks that employ the GSM (Global System Mobile) technology.

No prior state of the art, nor the mentioned documents, describe a system that in addition to allowing for payments to be made using any type of mobile phone, also allows for transactions to be made using different mobile telephone networks from any country or employing a different technology than the mobile phone in question, so that the system con encompass any mobile telephone user in any country regardless of the mobile telephone network contracted, the technology employed by the network or the payment and transaction center used.

Consequently, there currently exists no system that allows for payments and transaction to be made internationally by means of a mobile telephone.

### OBJECT OF THE INVENTION

The purpose of the invention in question is to overcome the inconveniences of the prior state of the art through a system which allows for the use of any type of mobile telephone as a means of activating means of payment and instruments using any mobile telephone network employing any technology in any country connected to the system, whereby we foresee multiple operation and payment processing centers in different countries to which the users-payers and beneficiaries of each country are associated and which are interconnected among themselves by means of international addressing processors used to carry out transactions and payments between associated users-payers and beneficiaries within the same or different countries, as well as means to identify the technology of the mobile telephone network of each user and the type of mobile telephone used to make to corresponding payments.

The invention allows for different types of purchases wherein a product or service is associated to a reference that allows for purchases to be made from a vending machine, advance payments for products to be picked up after the purchase, payments among individuals, recharge and download mobile telephone content, Internet purchases, catalogue purchases, telesales, payment of invoices and deliveries, pay television, and even electronic signatures.

Another goal of the invention is to allow for making micropayments, that is very small payments.

The system used by the invention also allows for consultations and modifications by the beneficiaries by means of the Internet in relation to the payment methods, references associated to the products or services, and the data associated to each beneficiary.

This system also allows for consultations and modifications by users-payers through the mobile telephone in relation to payment methods and the data of each associated user-payer.

Another operation that the invention can be used for is the authentication of payments. It will also be possible for returns to be made.

The invention will also allow for the possibility of the messages exchanged to use voice messaging.

In addition, the invention will allow for the beneficiary to use a mobile telephone as a point of sale terminal (POS).

### DESCRIPTION OF THE INVENTION

To achieve the previously mentioned objectives, the invention provides a system to process payments and transactions between users-payers and the beneficiaries which are associated to this system and at least one means of payment subscribed to an account of at least one financial institution associated with a financial entities processor. In addition, the users-payers are subscribed to a mobile telephone network, a condition that is not required for beneficiaries, which may or may not be subscribed to such a network. However, in any case, the transaction and payment must be made by using at least one communication by means of a digital mobile telephone with the financial entities processors being interconnected among themselves and to the financial institutions by conventional means. The financial institutions communicate among themselves and with the financial processing centers to exchange data by conventional means.

The invention is characterized by comprising a plurality of operation and payment processing centers in different countries to which the users-payers and beneficiaries in each country are associated, and which are interconnected among themselves by means of international addressing processors for the realization of transactions and payments among associated users-payers and beneficiaries within the same or different countries, by means of:

Telecommunications controller means with numerous different-technology mobile telephone networks supporting different mobile telephone technologies, to which the users-payers and beneficiaries are selectively associated, and which communicate selectively with the mobile telephone of any user-payer identified by a telephone number or other reference, or with the communications equipment of the beneficiary identified by a specific communications equipment identifier, with each telecommunications means controller comprising a plurality of communications controllers;

Communications controllers connected with the different financial entities processors to which the users-payers and beneficiaries of any country are associated to communicate selectively with the financial entities processor of an associated user-payer or with the financial entities processor of an associated beneficiary;

An operation processor to selectively communicate with the telecommunications controller means or with the communications controller means and selectively receive first the identification data of an associated user-payer, and subsequently thereto, second layer data identifying the associated beneficiary through the telecommunications means, or receive in addition a third layer of data identifying a reference related to an associated beneficiary through the telecommunications means controller, with the operation processor selectively generating a request for the validation of an associated user-payer, of an associated beneficiary, or of a product reference, or of any combination thereof;

The operation processor includes means of identification of the data referring to the different transaction and means of payment received selectively in addition to the first, second or third information mentioned above;

An wallet processor that is connected to the operation processor, and which accesses a storing means with at least the identification data on each associated user-payer and linking them to a mobile telephone number or reference number assigned to each associated user-payer; to process the identification data of an associated user-payer received in a validation request of an associated user-payer, and generate a message validating the corresponding user-payer; with the storing means containing in addition to the identification data, the data on the means of payment corresponding to each associated user-payer and links to the identification data and with a financial institution identification processor to which each means of payment is associated;

A merchant processor that is connected to the operation processor and which accesses a secondary storing means with at least the first layer of information identifying each associated beneficiary and linking that information to the identifying code for each communications equipment unit of each associated beneficiary, to process the second layer of identification data of an associated beneficiary, received in a validation request from a beneficiary and generate a validation message of the associated beneficiary; with the secondary storing means also including secondary information on the identification of the means of payment of each associated beneficiary, and which is linked with the first layer of information identifying each associated beneficiary and with the identification of the financial entities processor to which the means of payment of each beneficiary are associated, so that the operation processor module can selectively obtain the validation message of an associated beneficiary together with the means of payment of said associated beneficiary; and with the identification of the financial entities processor to which the beneficiary is associated;

A product references processor that is connected to the operation processor and which accesses third storing means with at least first information on the identification of a plurality of product references, each of which at least is linked with the identification of an associated beneficiary and selectively with at least the identification of the price/currency of a product or service or with a communications equipment identifier of a beneficiary to process the third layer data of identification of a product reference received in a reference validation request, and generate a product reference validation message that selectively includes the identification of the beneficiary, the price/currency of the product or service, identification of the associated beneficiary, or the identifier of the communications equipment of an associated beneficiary or any combination of the foregoing;

With the wallet processor comprising:

First detection means to selectively obtain the means of payment of a associated user-payer, of an associated beneficiary, or of the common means of payment of an associated user-payer and an associated beneficiary, to selectively generate a transaction authentication request message whenever there occurs the selective generation of a validation message of an associated user-payer or of an associated beneficiary or whenever a validation message has been generated regarding an associated user-payer, an associated beneficiary and an associated product reference, and selectively send said authentication request message to the mobile telephone of an associated user-payer; selectively comprised of the authentication message of the means of payment of the associated user-payer, of the associated beneficiary, or the common means of payment of an associated user-payer and an associated beneficiary; a request for the selection of at least a means of payment of an associated user-payer or of a common means of payment of an associated user-payer and an associated beneficiary; identification of the associated beneficiary; and selectively a product or service and price of the product or service of an associated beneficiary;

Second detecting means to obtain a response message to the authentication message sent, which is selectively comprised of the security parameter (e.g. password) or an encrypted sequence related thereto and at least the means of payment selected by the associated user-payer; with said second detecting means accessing the first storing means which further comprises third information on the selected identification of an authentication referring to the realization of the authentication directly in a financial entities processor of an associated user-payer, authentication in a financial entities processor of an associated user-payer through the financial entities processor of an associated beneficiary, or delegated authentication in the wallet processor; with the authentication including the confirmation of the security parameter or of the encrypted sequence that is associated at least to the means of payment selected by the user-payer and confirmation of at least that the said selected means of payment is associated to the first information identifying the associated user-payer; in order, selectively, once the authentication data is verified, to perform a delegated authorization confirming that the means of payment selected can support the transaction, carrying out the transaction in the financial entities processors and sending the results to the associated user-payer and beneficiary;

The first storing means comprise fourth information identifying a user-payer associated to remote payment and operation processors accessed by an wallet processor to process the first layer data and detect the identification of a user-payer associated with a remote payments and operations processor, generating a routing message that includes at least the first data, a validation request, authentication of a user-payer associated to a remote payments and operations processor, and the means of payment of the associated beneficiary; and with the third storing means including second identification information on the product references associated to remote payments and operations processors to generate, when the product references processor processes the third layer data received in a product reference validation request, and when a product reference identification associated to a remote payments and operations processor is detected, a routing message that includes at least the third layer data and the results of a validation of the associated user-payer;

The payments and operations processor further comprises a routing processor, to process routing messages, which is connected to the operations processor and accesses fourth storing means with at least first identification information of at least an international addressing processor and send from there the routing message to the remote payments and operations processor and thereby validate the user-payer product reference or beneficiary which are associated to the remote payments and operations processor, and processing the authentication or generating a routing message that selectively contains an authentication request message, resulting in a validation and an authentication or a transaction;

The payments and operations processor is comprised of a technology detector processor that selectively accesses the first storing means that include fifth information identifying the mobile telephone network and technology used by each associated user-payer, and six information identifying the technology of the mobile telephone of each associated user-payer and linking it to the associated telephone number; or accessing second storing means that contain third information identifying the mobile telephone network and its technology, associated to each associated beneficiary, and fourth information identifying the technology of associated two the communications equipment of each associated beneficiary; to allow for the selective communication with the mobile telephone of a user-payer or with the communications equipment of a beneficiary by means of the mobile telephone network to which the said it user-payer or beneficiary is subscribed.

The payments and operations processor is also comprised of an invoicing and transactions management processor that is connected to a seventh storing means housing the identification of the different transactions performed, with each transaction identification being related to the corresponding type of operation, the identification of the user-payer making the transaction, the amount, currency, and identification of the associated beneficiary involved in the transaction. It is also worthy of note that, conventionally, following an authentication, an authorization of the transaction is carried out so that the financial institution of the payer (issuing entity) confirms that the means of payment can support the transaction to authorize it, but this circumstance is left out of the description due to it being carried out by conventional means among the financial institutions and not being an object of the invention. There is also the possibility that the authorization can be made in a delegated manner in the local authorization processor within the payment and operations center, as will be described further on for the case of micropayments.

Accordingly each time an authentication is made it is followed by the corresponding authorization, which is not included herein except for the case of micropayments.

In addition, when we state that an authentication is made in a financial entities processor, it means that it is made by said processor or by the financial institution, as the case may be, which has no impact at all on the invention. This is why we use the term financial entities processor or financial institution interchangeably to simplify the description.

By using the structure described, the transactions in payments between users-payers and beneficiaries within the same contrary are carried out through the payments and operations processor of said country to which each of the users-payers and beneficiaries are associated. Accordingly, transactions between users-payers and beneficiaries in different countries are made through the payments and operations processors corresponding to each in their own contrary and to which they are associated, and these processors interconnects to each other through the international addressing processors.

There is also the possibility that a payments and operations processor of one country may be connected to the financial entities processor of other countries and, by means of roaming gateways, to the mobile telephone network of such countries, which would allow them to act as a processor within the scope of a particular region. For example, the processor in one country may operate in one or more countries and, accordingly, the users-payers and beneficiaries of such countries would have to be associated to the payments and operations processor of the country that manages it.

in either of the two cases, the minimal mobile telephone communication that must be made to carry out a transaction or payment encompasses any mobile telephone technology and any type of mobile telephone, so that the system can be used in any country regardless of the technology employed for their mobile telephone networks and regardless of the type and technology of the mobile telephone used by the user-payer in that the technology detector processor identifies both the technology of the network and of the mobile telephone being used for the communication, which will be explained in further detail further on.

Accordingly, the detector would select among the various mobile telephone communication technologies used among the GSM networks, including GSM (Global System Mobile), CDMA (Code Division Access), TDMA (Time Division Access), and 2.5G and 3G systems such as GPRS, EDGE (Enhanced Data GSM Evolution), CDMA One, UMTS (Universal Mobile Telecommunications System), and CDMA 2000.

The technology of the mobile telephone itself can be of any of those currently existing in the state of the art. In the case of GSM networks, the technology of the terminals or mobile telephones may be of the type that have the capacity for USSD (Unstructured Supplementary Service Data), MAP (Mobile Application Part) version one or version two, or mobile telephones with capacity for STK (Sim Application Toolkit). In addition to any of the above-mentioned types of networks, the terminals or mobile telephones may also have applications using WAP (Wireless Application Protocol), J2ME (Java 2 Platform, Micro Edition), BREW (Binary Runtime Environment for Wireless), and combinations thereof, which would provide said terminals with a storing means for the information on the corresponding applications (WAP, STK, J2ME, or BREW). The same characteristics exist in the communications equipment of an associated beneficiary comprised of a mobile telephone.

Also, if a single mobile telephone includes various capabilities or communications applications, the system would detect it, as will be discussed in greater detail further on.

The first data identifying an associated user-payer includes the telephone number thereof, or another means of identifying the terminal and user, such as a PAN code (Private Account Number) assigned to each payments and operations processor within the system, or an EAN code (PAN in barcode format).

We will now describe the different modes of functioning of the invention's system for making payments and transactions between users-payers and beneficiaries within the same country, that is, associated with the same payments and operations processor. However, all of these modes of functioning are also applicable to transactions made between users-payers and beneficiaries in different countries, that is, associated with different payments and operations processors, which are also described further on.

In accordance with one embodiment of the invention, the equipment of the beneficiary is comprised of a conventional POS (Point-of-sale Terminal), which is connected by conventional means to the financial entities processor with which it is associated. A conventional POS is that which does not have a direct connection with a payments and operations processor, and is normally managed by third parties such as, for example, financial entities processors, with whom it communicates by means of a conventional landline or wireless connection.

In this case, if a user-payer makes a purchase through this POS, the beneficiary introduces the identification of the user-payer and the transaction data, and sends a transaction request message to the financial entities processor to which it is associated, which detects the means of payment contracted by the beneficiary, and the beneficiary is then validated which generates a validation message of a beneficiary that is comprised of the means of payment and the first identification data of an associated user-payer.

This validation message is sent to the operations processor through the Communications controller means and the data is used to validate the user-payer in the wallet processor, which then sends the above-mentioned authentication message.

After carrying out the transaction the results are sent directly to the conventional POS of the associated beneficiary by the financial entities processor, while the same results are sent to the user-payer through the wallet processor of the payment and operation processor mentioned above.

A transaction request may also be generated in the mobile telephone of a user-payer by introducing the reference related with the identification of an associated beneficiary and, selectively, at least the identification of a product or service and price of said product or service, which is sent to the payments and operations processor over the mobile telephone network by dialling the identification number of the payments and operations processor. In addition, the transaction request includes the identification of the user-payer, which is detected in the communication made over the mobile telephone network, just as it would conventionally be carried out to send the transaction request. This way, the transaction request is received by the operations processor through the telecommunications means controller, and the validation of the reference is carried out in the references processor, based on which the beneficiary is identified to carry out the validation thereof as commented above. Next, the validation of the user-payer is carried out in such a way as to detect the wallet processor of the reference validation message; beneficiary and user-payer generate the authentication request message and upon receiving the response to the authentication request carry out the transaction in the manner mentioned above.

It is also worthy of note that the invention plans for each means of payment of each associated user-payer to be related with a different security parameter, or conversely, for each means of payment of associated users-payers to be linked with the same security parameter, which obviously must be different for each user-payer associated. In addition the first storing means is includes the identification of a security parameter associated with the wallet processor to carry out the delegated authentication and allow for additions, deletions, consultations and modifications to the first storing means.

Accordingly, there are two types of highly differentiated security parameters: those relating to authentications in the financial entities processors and those relating to the wallet processor.

The communications equipment of a beneficiary may be comprised of a cellular POS, which basically consists of a point-of-sale terminal with a wireless connection to a mobile telephone network and through it to the payments and operations processor to carry out the transaction either initiated by the POS itself or by the mobile telephone of the user-payer.

In this case, the response message on a transaction is sent to the cellular POS of the beneficiary and to the mobile telephone of the user-payer through the telecommunications controller means , regardless of whether the transaction request was generated by the cellular POS of the beneficiary or by the mobile telephone of the user-payer. Similarly, a transaction initiated by the cellular POS is received through the telecommunications controller means.

In on embodiment of the invention, the first information of identification of a plurality of references included in the third storing means are related with a mobile telephone recharge service, so that when a transaction request is sent that contains a reference related to a recharge service it is detected by the references processor, which detects the identification of the beneficiary, which in this case is a mobile telephone network/operator. In addition, the reference can be associated with a recharge price, and the said prize can be included in a transaction request so that the validation of the beneficiary and the user-payer is carried out, and an authentication request message is generated. Along these lines, it should be mentioned that it is necessary for the operations processor to be aware of the mobile telephone number to be recharged, so that said number can be included in the transaction request and in the response message to the authentication request, so that in this case the authentication message further comprises a request for the introduction of the telephone number to be recharged.

Once the operations processor detects, in either of the two ways already mentioned, the telephone number to be recharged, it may optionally generate and send a message requesting verification that the mobile telephone number detected admits recharging by the mobile telephone network operator.

When the operator has verified that the telephone number admits recharging, it generates a message to send to the operations processor to carry out the authentication of whether the telephone number to be recharged has received a transaction request or carry out the transaction when the telephone number to be recharged receives, in addition to the response message, and authentication request.

Immeanstely thereafter, and having received the results of the transaction, the operations processor generates a recharge order for the mobile telephone operator to carry out, and receives the results of the recharge, to send through the wallet processor, to the mobile telephone of the associated user-payer.

This same mode of functioning applies to the case where the user-payer wants to download mobile telephone content, but, in this case, on receiving the results of the transaction, the download begins from the corresponding server through the mobile telephone network and to the mobile telephone number detected in the transaction request or in the authentication request response message. Obviously, whether or not recharging is allowed is not verified.

In accordance with the invention, to establish the communication from the payments and operations processor with the communications equipment of a beneficiary, it is necessary to know the operating system thereof. To this end, the references processor, when validating the reference, will include in said validation the identification of a communications equipment that is associated to said reference, so that when detected by the operations processor, it generates, together with the beneficiary validation request, a validation request of the communications equipment of the beneficiary; this is sent to the merchant processor, which generates the validation of said beneficiary and the validation of the communications equipment of the beneficiary, which includes the validation of the data referring to the operating system of said communications equipment to establish appropriate communications therewith.

An example requiring the validation of the communications equipment would be when the equipment of the beneficiary is comprised of vending machines wherein users-payers may carry out purchases, and therefore represent cellular point-of-sale terminals with a mobile telephone connection or device which allows the vending machine to communicate with the payments and operations processor. In this case, the identification of a plurality of references included in the third storing means are linked with a vending machine, so that upon detecting a transaction request that includes a reference associated with such vending machine, the references processor generates a reference validation message that includes the identifier for the vending machine and the operations processor generates and sends to the machine a message to initiate the purchase that includes at least a message to the user-payer by means of the vending machine's screen to select the product to be purchased, which may also include the identification of the associated user-payer. To do so, the vending machine includes means of detecting the message to initiate the purchase by selectively displaying a message on its screen requesting that a product be selected, which may optionally include the identification of the associated user-payer so that following the said selection by the user-payer, the vending machine generates and sends to the operations processor a message indicating the selection made and at least the amount and currency or product code. This message is detected by the first detection means of the wallet processor which generates the authentication request message and the subsequent transaction in the manner already described.

The results of the transaction are sent to the vending machine which, upon detecting a valid transaction, issues the request and product, or, in the event the transaction is not authorized, generates an error message.

The possibility of a product code is included within the foreseen telemetry services of the payments and operations processor for beneficiaries that operate vending machines. These services include, for example, remote maintenance of product prices and consultations on operation figures (using a Web interface) as well as product shortage advisories, malfunction advisories, etc.

The invention's system also will allow for making pre-paid purchases. To this end, the first information identifying a plurality of references included in the third storing means are related with a pre-paid purchase service, with the third storing means also including information related to a reference with a locator in order for the operations processor to detect a valid transaction result in the prepaid purchase, generating a prepaid purchase message that contains the results of the transaction, a locator, and, selectively, the product or service. This locator can be random.

In this case the communications equipment of the beneficiary is comprised of a cellular POS with a receipt printer to which the operations processor sends the locator obtained and the results of the transaction. To this end, when the operations processor receives a valid transaction result, it sends, on the one hand, confirmation of the prepaid purchase to the payer-user, as well as, at least, the results of the transaction and a locator.

In addition, it sends a prepaid purchase message to the receipt printer which includes, at least, the results of the transaction, locator, and reference, as well as, optionally, extra information on the product or service, all of which is printed out.

In this way, the user-payer may collect the product purchased at the retail outlet of the associated beneficiary, which, upon confirming that the locators coincide, hands the product over to the user-payer. Communication may also be established by the payments and operations processor by means of the Internet as will be described further on.

Prepaid purchases may also be made using the communications equipment for travel reservations, tickets for leisure events, rentals and the like, so that, similarly, both the locator and the transaction results are sent to the communications equipment so that the user-payer may directly receive the tickets, travel documents, or other goods purchased or rented based on the locator.

Based on this description, can be seen that both the cellular POS comprised of a vending machine and that the receipt printer would not initiate a transaction request, but rather all transactions are initiated by the user-payer.

In another realization of the invention, the equipment of the beneficiary is comprised of a virtual point-of-sale terminal connected to the payments and operations processor by means different from a mobile telephone network, such as the Internet. Accordingly, the payments and operations processor includes an Internet processor with all of the corresponding interfaces for connection to the other telecommunications network; connection interfaces with the operations processor, with the references processor, and with the merchant processor; means of selective identification of a request received from the communications equipment of a beneficiary referring to a response, a receipt, a request to generate a reference or group of references, a consultation request for data in the second and third storing means, or a request for modification of the data in the second and third storing means; with the Internet processor further comprising means of selective identification of a request received from the operations processor referring to a notification on the results of a transaction, of a confirmation of a purchase reference that had been previously requested by the beneficiary and which is associated in the third storing means, or a consultation of stock levels of at least one product of an associated beneficiary.

The second storing means also contain fifth information on the selective identification of Internet and e-mail addresses which are linked to the second layer data identifying associated beneficiaries to communicate with the communications equipment of the beneficiary online using the Internet or off-line by means of e-mail.

The means of selective identification of the Internet processor comprise an inquiry module that is connected to an access control module that accesses the merchant processor to obtain the data on an associated beneficiary. In addition, the access control module is comprised of means of authentication of an associated beneficiary to authenticate said beneficiary, with said authentication consisting of confirming the identification of the beneficiary and of a password received in a request coming from the communications equipment of the associated beneficiary.

This structure allows, upon receipt by the operations processor of the results of an operation, such as the results of a transaction, for the generation of a notification request on the results of said operation to the inquiry module of the Internet processor and thereby obtain the data on the associated beneficiary, the e-mail address thereof, or the IP address thereof. In the case that an e-mail address is detected, the inquiry module is connected to an encryption module and email generator to encrypt the notification request adapted to the format appropriate for e-mail messages, and, through an email controller, included in the connection interfaces to the communications network different from the mobile telephone network, to send it to the corresponding email address with the second layer data identifying the associated beneficiary.

In the case of the operations processor generating a notification request on the results of an operation, referring to an Internet address, the inquiry module obtains the data on the associated beneficiary and the IP address. In this case, the connection interfaces for the communications network, different from the mobile telephone network, is comprised of an Internet controller that is connected to the inquiry module to send thereby the notification request to the associated Internet address for the communications equipment of the beneficiary, and receive a response recognizing receipt of said notification of the results of the transaction, which the inquiry module delivers to the operations processor.

This configuration allows for making purchases through the communications equipment of a beneficiary that is comprised of a virtual point-of-sale terminal to which a user-payer gains access through communications equipment, such as, for example, a personal computer. In this way, once the product to be purchased is selected, there are two possibilities: that the product be associated to a reference, wherein case the user-payer sends said reference by means of his mobile telephone and a transaction request that contains the said reference; or that the product selected is not associated to any reference, wherein case the communications equipment of the beneficiary generates a reference generation request that is received at the Internet processor, which, after authenticating the beneficiary, in the manner discussed above, sends it to the references processor, which generates the requested reference and associates it to the beneficiary, the product, and the specified price, and stores said reference in the third storing means and sends it to the equipment of the associated beneficiary through the inquiry module and the Internet controller, with the reference then being received by the communications equipment of the beneficiary, which then informs the user-payer thereof.

In addition, the invention's system allows for the possibility of receiving a reference within a transaction request, when the references processor detects that a reference has been created based on a reference generation request, it can confirm that said reference generation request was sent by the communications equipment of the beneficiary to which said reference is associated. To this end, when processing the third layer data contained in a reference validation request, the references processor verifies whether or not it is a reference created based on a reference generation request, and generates a confirmation request confirming that the reference was requested by the beneficiary to which it is associated, sending said reference through the operations processor to the inquiry module to obtain the data of the associated beneficiary and send the request to the communications equipment of the associated beneficiary through the Internet controller. The response received from the communications equipment of the associated beneficiary is delivered to the operations processor, which, in the event that the response indicates that said detected reference had truly been requested by the communications equipment of the beneficiary, then carries out the transaction in the manner commented above.

In addition, the system of the invention allows for confirming that a product, the transaction whereby is being handled, does exist in stock at the beneficiary, in other words, that said product is available. This circumstance is especially useful when making purchases through virtual point-of-sale terminals, but can similarly be applied in any case whenever desired.

To this end, the merchant processor, prior to the generation of an user-payer authentication request message by an wallet processor, generates a confirmation request on whether the associated beneficiary has the required product available, sending said request through the operations processor to the inquiry module of the Internet processor to obtain the data on the associated beneficiary and, subsequently, send the request to the communications equipment of said beneficiary through the Internet controller, and receive the response from the associated beneficiary and deliver it to the operations processor so that if the latter detects that the beneficiary does have the product available so that the transaction can go forward in the manner described above.

This structure allows purchases to be made over the Internet, to which and the first information identifying a plurality of references contained in the third storing means are linked to a purchase of a product or service by Internet, wherein case the transaction request is received at the Internet processor in the manner commented above and, after fulfilling the transaction, the results of said transaction is selectively sent to the equipment of the beneficiary based on the Internet address or e-mail address as commented above.

The structure of the Internet processor also allows for the beneficiary to be a supplier of software, so that in the event that a reference generation is requested, it will include in addition to the reference generation request, a request for the decryption of the software, which is sends by means of the wallet processor to the mobile telephone of the user-payer together with the result of the transaction. Accordingly, the merchant encrypts the file to be delivered with the decryption key and downloads it to the communications equipment (personal computer of the user-payer), who can then proceed to decrypt or unlock the file downloaded.

The structure described also allows for the communications equipment of the beneficiary, which communicates with the Internet processor, to constitute an invoice issuer which generates and sends a reference generation request which further comprises information on the type of invoice, the amount, the currency, and due date, so that a reference can be generated that is associated to this data and thereby allow the payment of invoices based on the reference number obtained.

This is also applicable in the event that the communications equipment of the beneficiary is comprised of a pay TV decoder controller wherein the reference is associated to a television program so that upon receiving the result of a transaction it can activate the decoder and allow for the associated television program to be seen.

The beneficiary's communications equipment can also be comprised of a server with downloadable mobile telephone content, so that obtaining the reference associated to the download of said content allows for said download in the same manner as that described above.

Another case could be where the communications equipment of the beneficiary is associated to a delivery service that generates and sends a reference generation request that includes, at least, information on the product to be deliver and the price to carry out the payment of the delivery notes/invoice.

In this case, payment can be made in two ways, the delivery notes/invoice can be prepaid, that is, payment in advance of the product being delivered, or cash on delivery, that is payment when the product is actually received by the user-payer. Accordingly, to make a payment in this way, the user-payer sends a transaction request that contains a reference associated to the delivery notes and the type payment to be made.

When prepayment of a delivery note is detected, the transaction is carried out in the manner already commented, and when cash on delivery is detected, a reference generation request is issued to be associated with the payment on delivery, which is sent to the communications equipment of the associated beneficiary so that when the references processor detects a cash on delivery reference it carries out the transaction in the manner already commented.

The invention also allows for carrying out return transactions for all purchases made. The functioning is the same as that described for purchases with the only difference being that the operations processor detects a return operation after validating the user-payer and the beneficiary carries out the authentication and the subsequent transaction. In a return operation there is also the possibility that the authentication of the user-payer is not performed.

In one embodiment of the invention, the communications equipment of associated beneficiary is comprised of a virtual point-of-sale terminal for electronic signatures, which generates a reference generation request for a digital signature. Accordingly, it is first necessary to generate a digital signature certificate, which is an operation initiated by an associated user-payer. When the operations processor detects a digital signature certificate registration operation, a generates one public key and one private key for the associated user-payer, obtaining through the merchant processor and from the second storing means, a menu of the certifying authority centers (Cas) associated with the payment and operations provider, which sends to the mobile phone of the user-payer a request to select one of said certifying authorities, and request to introduce a digital signature security parameter, and upon receipt sends to said user-payer a response that contains the requested data, with the operations processor calculating the hash for the security parameter and with the results encoding the private key and storing the encrypted data, generating a locator linked to send encrypted data.

Thereafter, the operations processor sends to the selected certifying authority, through the communications controller, the public key of the associated user-payer together with a locator and the identification data of the associated user-payer. The associated users-payers identify themselves with the respective certifying authority in the manner specified by said authority, such as, for example, by means of a locator, and said authority generates a certificate for the digital signature that contains the public key of the associated user-payer and sends the electronic signature certificate to the operations processor.

At this point, the realization of the electronic signature is carried out through the communications equipment of an associated beneficiary, such as a digital signature point-of-sale terminal that generates a reference generation request for a digital signature together with the document to be signed and selectively with the relevant parts thereof selected by the associated user-payer. This data is processed in the references processor, which generates the reference and stores it in the third storing means together with the document and selectively the relevant data, sending all of this to the digital signature point-of-sale terminal so that the user-payer can initiate the digital signature operation by means of sending the reference generated using his or her mobile telephone. The operations processor detects a digital signature operation when receiving the reference generated, and after validating the user-payer, beneficiary and reference, the wallet processor generates an authentication request message that includes a request for the introduction of the security parameter for the digital signature, the hash of the document and, selectively, the sensitive parts thereof, so that, upon receipt of the security parameter for the digital signature by the operations processor, it calculates the hash, decrypts the private key of the associated user-payer and calculates the hash for the document encrypted with said private key of the associated user-payer, and sends it to the point-of-sale terminal together with the certificate. The results of the transaction are then sent to the user-payer and associated beneficiary.

The locator generated with the digital signature may be used to consult signed documents. When the operations processor receives a digital signature locator, it detects a document consultation operation and responds by showing the signed documents identified thereby.

In this way, the system of the invention can be used for the authentication of third parties, such as in the case of electronic signatures.

Another case of authentication of third parties is the Visa 3 domain authentication model, which consists of requesting verification of a means of payment associated to a particular user-payer from the payments and operations processor, to which end, the communications equipment of a beneficiary, comprised of a virtual point-of-sale terminal, generates a transaction request that contains a means of payment verification request associated to the user-payer. The virtual point-of-sale terminal first consults the means of payment directory of the financial institution, obtaining therefrom a URL (Uniform Resource Locator) of a payments and operations processor whose Internet processor communicates using said URL to receive the verification request, and wherein the authentication request message generated in the wallet processor is comprised of a request to introduce the security parameter and verified means of payment. In this way, when the payments and operations processor receives a verification request for a means of payment, through the Internet processor, after validating the user-payer and the corresponding means of payment whereby verification is desired, it sends an authentication request for the user-payer to introduce the security parameter for the means of payment, validating said means of payment, and sending the results to the virtual point-of-sale terminal of the beneficiary.

In addition, the Internet processor also allows for consultations and modifications to the second and third storing means, whereby the Internet processor includes an e-commerce processor that is connected to the Internet controller to allow access to the Internet processor by one of the previously described communications equipment. The e-commerce processor is connected to the access control module to selectively detect a consultation or modification request for either the second or third storing means and then perform the authentication of the associated beneficiary and selectively process the request through the merchant processor or the references processor, which will selectively perform the consultation or modification and send the results to the communications equipment of the associated beneficiary by means of the access control module, e-commerce processor, and Internet controller.

To allow for this functionality, the e-commerce processor is comprised of a graphical user interface which shows, on the equipment of the associated beneficiary, the different possibilities for consultations or modifications.

The same functionality may be carried out by a systems analyst or administrator, whereby purpose they must possess communications equipment that is connected to the Internet processor of the payments and operations processor. In this case, the connection of the system administrator's communication equipment is realized through a private network controller that forms part of the connection interface of the Internet processor with the communications network different from mobile telephone network.

In addition, in this case, the private network controller is connected to a merchant data web administration module that houses the different services offered to associated beneficiaries, to allow access through a private network from the communications equipment of a systems administrator.

In this case it is also necessary to perform the authentication of the system administrator's communications equipment, and the merchant data web administration module must be connected to the access control module to detect a request for a new entry, consultation or modification in the second or third storing means originating with a system administrator's communications equipment to allow the consultation or modification following said validation.

The merchant data Web administration module is comprised of a graphic user interface that shows the system administrator the different consultation and modification options that the payments and operations processor offers the associated beneficiaries.

In any of the operations described above wherein the access control module of the Internet processor accesses the merchant processor or the references processor, it should be noted that it is carried out through an applications server or module to selectively establish the connection between the Internet and the private network and said merchant or references processors.

Another of the operations that is allowed by the system of the invention consists of allowing for payments and transactions to be made among individuals, that is, among the users-payers, wherein case the beneficiary is an associated user-payer. In this case, the validation of said beneficiary is made through the wallet processor, with the transaction being carried out in the manner already described once the operations processor detects that it is a payment operation between individuals through its standard identifying means. In this case, the user-payer introduces the identification of the beneficiary and the amount to be paid to generate a transaction request.

Payments among individuals also have a second modality that consists of allowing for deferred payments to be made among individuals, wherein case the transaction is carried out in two different stages.

In the first stage, only the authentication of the user-payer is performed, and in the second stage, that of the beneficiary is performed in the manner described below.

To this end, the third information for the selective identification of an authentication contained in the first storing means refers, selectively, to the realization of a user-payer authentication within a financial entities processor to which he or she is associated, or to the authentication of a beneficiary within the financial entities processor to which he or she is associated, with said authentications being linked to a deferred payment operation among individuals, to selectively perform one of said authentications upon the detection by the operations processor identifying means of a deferred payment operation among individuals received through a telecommunications controller.

Accordingly, when a user-payer sends a transaction request for a deferred payment among individuals using his or her mobile telephone, and including in said request the identification of the beneficiary and the amount of the payment, the second detecting means of the wallet processor detects an authentication of a user-payer within the financial entities processor to which he or she is associated, which upon completion of the transaction sends the results of the authentication to the mobile telephone of the associated user-payer, and simultaneously, the operations processor generates a reference generation request associated to a deferred payment among individuals, which is sent to the references processor for execution, with the resulting reference being stored in the third storing means together with the data referring to the deferred payments operation among individuals. The said reference, together with the transaction data, is sent to the mobile telephone of the associated beneficiary, which in this case, as commented earlier, is also an associated user-payer.

In this way, the second stage is begun when the associated beneficiary generates a transaction request that contains the reference that was generated in the references processor and associated to the deferred payment among individuals, so that upon receipt by the operations processor, it causes the wallet processor to generate an authentication message wherein the means of payment are those of the associated beneficiary, sending it to said beneficiary so that he or she can select which means of payment he or she wishes to use to receive the said deferred payment so that the authentication of said beneficiary can be performed within the financial entities processor to which he or she is associated and the transaction can then be performed with the results being sent to the mobile telephone of the associated beneficiary.

Associated users-payers may also use their mobile telephones to consult such items with a financial entities processor to which he or she is associated as, for example, latest movements, or available balance on a particular means of payment, whereby he or she would generate a consultation transaction request that is detected by the identifying means of the operations processor and subsequently, the wallet processor validates the user-payer and generates an authentication message that includes the means of payment of the said associated user-payer, a request for the introduction of the security parameter, a request for selecting at least one means of payment, as well as a request to introduce the parameters of the consultation to be made. The transaction is then carried out within the financial entities processor, which sends the results of said consultation/transaction to the operations processor so that the wallet processor can send the results to the mobile telephone of the user-payer.

Another operation allowed by the invention is the ability to make modifications to the different data associated to a user-payer by means of the mobile telephone. In this case, the transaction request is comprised of the identification of a parameterisation operation which allows for changes to be made in, for example, the security parameter associated with the wallet processor, the language to be used for communications, default means of payment, or for requesting an additional confirmation message to be sent to the user-payer. This transaction is detected in the identifying means of the operations processor, which validates the user-payer, and with the wallet processor generating the authentication message comprised of the means of payment of the user-payer, a request for the introduction of the security parameter, a request for the selection of at least one means of payment, and request the parameters to be modified, so that the response message to the authentication request message contains the parameters to be modified in the transaction, which are sent to the financial entities processor to which the user-payer is associated so that following said modifications the response, in the form already described, can be sent to the mobile telephone of the corresponding user-payer. Accordingly, this characteristic allows for changes in security parameters, means of payment, or any other operation relating thereto.

In this case the security parameter is linked to the wallet processor, which carries out the authentication. To this end, the first storing means include the identification of a security parameter associated to the wallet processor, to carry out delegated authentication, consultations and modification of the information contained in the first storing means.

Users-payers may also use their mobile telephones to make inquiries of the wallet processor, such as the latest movements or the balance available or spent with a means of payment. In this case, the identifying means of the operations processor detects a consultation operation within the wallet processor, which, after validating the associated user-payer, generates an authentication message that contains the means of payment of the user-payer, a request for the introduction of the security parameter, a request for the selection of at least one means of payment, and a request for the introduction of the parameters to be consulted.

In this operation, the security parameter verified is also the one that is associated to the wallet processor.

To carry out all of the functions described, the references processor includes an administration module that is connected to the third storing means, and the operations processor through an interface to receive the references and validate them, and to the merchant processor by means of an interface for delivering the identification of the associated beneficiary based on the reference received, or send/receive a reference associated to a remote payments and operations processor. In addition, the administration module is connected to the routing processor by means of an interface for carrying out the access to the references from or towards a remote payments and operations processor, and automatic maintenance module that accesses the third storing means through the administration module to detect and eliminate expired references, and a codification module to encode the references using a defined algorithm and store them in the third storing means.

As can be seen from this description, it is clear that there are different types of references which, for example, can be classified based on:
- Functionality
   - Operation references: these identify purchase operations of one or more products or services with a specific associated price. This covers the needs, for example, of the operations carried out over the Internet, order taking, recharging telephones, downloading of intellectual property, etc.
   - Point-of-sale terminal references: these identify a terminal or device that acts as a point-of-sale, the data and operating system whereby is stored in the references processor (16). These refer to special types of point-of-sale terminals where the user initiates the transaction, such as with vending machines.
      Operation references, meanwhile, can be classified according to:

- Origin and time generated:
   - Pre-generated: when the merchant uses a Web administration tool to request it. The references generated are sent to the merchants who include them within their system and offer them to users for the purpose of making payments. These may be used when the price of the product or service is known before hand.
   - Generated online: Rather than being generated using a Web administration tool, the merchant (for example a virtual POS) upon the receipt of any purchase request from a user, communicates with the payments and operations processor (1) and request the generation of a reference by providing the necessary data (identification of the merchant, amount of the transaction, currency, etc.) and the payments and operations processor returns a reference (and, if appropriate, a locator as described above) which the merchant then passes on to the user. This is used, for example, in virtual points of sale such as e-commerce shopping carts, where the final price is not necessarily known.
- Based on permanence:
   - Single use, which expire after the transaction and are deleted from the third storing means for reassignment to other merchants. These can be associated with, for example, a single copy of the product, such as downloadable music, or to a group of products, such as an online shopping cart.
   - Multiple use; the users-payers always use the same reference for making payments, which at the same time is associated with a particular product or service. These are references that are published, such as, for example, book of the month in an online bookshop, or for a super deluxe hamburger offer on display in a restaurant. The delivery of the product may require the use of a locator.
- Based on geographic scope:
   - References for national use, which do not allow for international purchases, therefore, must be circumscribed to a local references processor.
   - International references, which are those used for purchases by any user-payer within the invention's system regardless of the country from which the transaction originates.
   - Multinational references, a subgroup of the above, are used to facilitate the dialogue with the mobile telephone when the payer and merchant belong to payments and operations processors (1) in different countries. In this case, the payments and operations processor generates references that are sent to the rest of the payments and operations processors with the information needed to carry out the request of the means of payment and the security parameter. In this way, when a payer initiates the transaction with a reference that does not belong to the payments and operations processor, if said reference is registered as external (multinational), the request of the means of payment and security parameter are handled directly and the operation is subsequently routed to the payments and operations processor of the acquirer, which manages the context of the transaction.

For reasons of functionality, the reference generation request carried out online can be only of single use, and, for reasons of efficiency, multinational references will only be allowed for multiple use references.

In addition to all the above functionalities, the wallet processor includes an administration module comprised of the first and second detecting means, which is connected to the first storing means and to an interface for executing additions, deletions and modifications of means of payment, either by a systems analyst of the payments and operations processor or by a systems analyst or administrator of the financial entities processor. In addition, the wallet processor includes a messaging processor which is connected to the first storing means, to the administration processor and to an interface through which it connects to the technology detecting processor and the telecommunications controller means, for communicating with the mobile telephone of the user-payer. The wallet processor is also comprised of an authentication processor that is connected to the first storing means, the administration processor and to an interface to allow it to carry out the validation of the users-payers associated to the authentication of the security parameter related to the wallet processor, a delegated authentication and send to the international addressing processors the authentication requests for users-payers associated to remote payments and operations processors.

It is also important to note that the invention calls for the possibility of a transaction referring to admission control. When an admission control transaction is detected by the identifying means of the operations processor, the wallet processor generates a delegated authentication request in the payments and operations processor, which is comprised of a request for the introduction of the security parameter for the wallet processor, which would allow for admission control to buildings, entertainment premises, or grounds.

All of the preceding operations can be carried out among users-payers and beneficiaries of different countries. To this end, a when the wallet processor detects that the user-payer is not associated to the corresponding payments and operations processor, it generates a routing message that contains a validation and authentication request for a user-payer associated to a remote payments and operations processor, with said request also including the means of payment of the associated beneficiary, so that the authentication is carried out in the remote payments and operations processor, which sends the results of the validation authentication request through the international addressing processor to the payments and operations processor to which the relevant beneficiary is associated. Based on these results, the payments and operations processor carries out the transaction and, upon completion, generates a routing message with the results of the transaction for delivery to the user-payer through the payment processor to which he or she is associated.

In this case, the messages are sent to the mobile telephone of the user-payer, arriving by means of the mobile telephone network of the country where the beneficiary is located, and from the mobile telephone network to which the user-payer is associated, by means of the system that is commonly referred to as roaming.

This structure allows for purchases to be made overseas through the business of a beneficiary wherein the transaction request is sent from the communications equipment of said beneficiary.

There can also be the case where the transaction request is sent from the mobile telephone of the user-payer that is currently outside of his or her own country. This request reaches the remote payments and operations processor of the user-payer over one of the mobile telephone networks existing in the country or region of the beneficiary and is available for use by the user-payer under the said roaming system. In this case the references processor detects that it is a reference associated to a remote payments and operations processor and generates a routing message that contains the third identification data of a beneficiary associated with a remote payments and operations processor. This is sent through the international addressing processor to said remote payments and operations processor, which validates the reference and generates an authentication and validation request message that also contains the means of payment of the associated beneficiary, to carry out the validation authentication in the manner described above. In addition, it is also worthy of note, that the process is the same in the event that the user-payer is in his or her own country and makes a purchase from an associated beneficiary of another country, wherein case the messages are sent to the mobile telephone of the user-payer solely across the mobile telephone network to which he or she is subscribed.

The fourth identification information on a user-payer associated to a remote payments and operations processor included in the first storing means selectively contain the identification of the country code for the mobile telephone numbers of the country of origin corresponding to the mobile telephone in question and the payments and operations processor to which the user-payer is associated, as well as the country code of a PAN code for the country of the remote payments and operations processor and a country code of an EAN code, to allow the routing messages generated to detect the country codes.

Similarly, the third identification information on references associated to remote payments and operations processors included in the third storing means, contain selective identification of the country code of the payments and operations processor to which the reference is associated, to generate the routing message upon detection thereby of the country code.

In order for all of the above functionalities to be possible, the international addressing processor contains a connection and access controller, with a plurality of routing processors, that is governed by means of a routing manager that accesses fifth storing means that include at least the first identification information on the international identification country codes of a user-payer associated to a remote payments and operations processor, second information on references associated to the remote users-payers and third identification information on the path to follow to send/receive the routing messages described above.

In the event of international transactions and payments it is necessary that the first and second storing means comprise identification information on the language of each associated user-payer and beneficiary, so that the selective communication with the communications equipment of an associated beneficiary or with the mobile telephone of an associated user-payer receives the relevant data in the appropriate language.

The identification of language and currency can also be applied to the case wherein transactions and payments are made through a single payments and operations processor, that is, for users-payers and beneficiaries within the same country.

In all of the above mentioned modalities, a rejection message is generated whenever the validation message for a user-payer or a beneficiary is not issued, or an associated reference is not valid, the authentication data cannot be verified or the transaction could not be completed. As mentioned above, the invention also allows for the communications equipment of an associated beneficiary to be comprised of a mobile telephone, constituting and referred to herein as a POS, and identified by a mobile telephone number, and selectively related to a reference associated with the first information included in the third storing means, which in turn is associated with a selective sequence of messages requesting data to establish the operations processor, upon detecting by means of the identifying means a transaction request originating with a mobile telephone acting as a point-of-sale terminal, or with the mobile telephone of a user-payer referring to a mobile telephone as a POS; and exchange messages with the mobile telephone POS and obtain, selectively, the data referring to the operation to be carried out, the first identification data of an associated user-payer, security parameter of an associated beneficiary, price of the product or service, and the applicable currency.

To obtain the security parameter of a beneficiary, the invention calls for the second storing means to include sixth identification information on the security parameter associated to the first identification information for an associated beneficiary, so that when the operations processor detects a transaction request originating in a mobile telephone POS, it generates an authentication message on the associated beneficiary that includes the identification of the beneficiary and a request for the introduction of the security parameter which is sent to the POS of the beneficiary. When the operations processor detects the response, it requests that the merchant processor authenticate it, which it does by accessing the second storing means.

Transaction requests originating with a mobile telephone as a POS can be purchase operations, returns, or consultations on the transactions carried out.

When the operations processor receives a consultation operation on a transaction carried out, originating with a mobile telephone as a POS, the beneficiary is validated and authenticated in the manner described above, and after obtaining the identification of an associated user-payer, amount, currency, and, selectively, the date of the transaction; all of this is sent to the transaction and invoicing management processor, which accesses the seventh storing means to confirm that the transaction had been carried out, and sending the result to the mobile telephone POS of the associated beneficiary.

In this way, in the case of a beneficiary that wants to make a transaction request by means of his or her mobile telephone POS, the said beneficiary introduces an operation code representing the mobile telephone POS to communicate with the payments and operations processor, wherein the validation of the beneficiary is carried out, and messages are interchanged with the mobile telephone POS to obtain the data relating to the associated user-payer, the security parameter of the associated beneficiary, to authenticate said beneficiary, and the data relating to the transaction such as the price of a product or service or currency.

Similarly, when a user-payer wants to request a transaction referring to a mobile phone as a POS, it generates a transaction referring to said mobile POS, and after its validation and that of the user-payer, the operations processor generates successive messages to the mobile phone POS requesting the data referring to the transaction, which the beneficiary introduces into his mobile telephone in response to send messages. Once all of the transaction data has been received, including the security parameter of the beneficiary to carry out the authentication, the transaction is carried out as commented above.

The cellular POS's can also carry out consultations on previous transactions, wherein case, the operations processor would receive a prior transaction consultation originating with the cellular POS. After obtaining the identification data of an associated user-payer, amount, currency, and, selectively, date of the transaction, the information is sent to the invoicing and transactions management processor, which accesses the seventh storing means to confirm that the transaction was carried out, and sending the results to the cellular POS of the associated beneficiary. Accordingly, in this case no authentication of the associated beneficiary is carried out.

In the beginning of this section we stated that the telecommunications controller means were comprised of a plurality of communication controllers, which, in one example of the realization of the invention, comprise a USSD controller (Unstructured Supplementary Service Data) which includes first storing means with the information on the functioning of the payments and operations processor, protocol translation that converts the USSD strains into the protocol used by the payments and operations processor and vice versa to detect whether the information received should be sent to the operations processor or to the wallet processor, a switching device that accesses the second storing means and the routes to follow to receive information and send it to the operations processor or the wallet processor in accordance with the established routing.

This allows for exchanging messages using the USSD strings employed over the GSM network.

When the operations processor detects a transaction request in a USSD session initiated from a mobile telephone POS, after validating the beneficiary within the merchant processor, it sends a menu selection with the different options available, and once the associated beneficiary selects one of the options and responds, it sends a new menu requesting the data needed to carry out the selected transaction, repeating the process in the USSD session -which remains open until the require data is obtained,- which includes a request for the introduction of the security parameter of the associated beneficiary to carry out the authentication, and wherein the authentication message of a user-payer and the results of the transaction are sent to the mobile telephone of the associated user-payer through the wallet processor, establishing a USSD session with the mobile telephone of the said user-payer.

Similarly, to allow for communication over the GSM network, the invention calls for the telecommunications controller means to include an SMS controller comprised of the first storing means with information on the functioning of the payments and operations processor, protocol translation to convert SMS messages into the protocol used by the payments and operations processor, and vice versa, to detect whether the information received is sent to the operations processor or to the wallet processor. In addition, the SMS controller is equipped with a switching device that accesses the second storing means and the routes to follow and send the information received from the operations processor or from the wallet processor in accordance with the established routes.

In the case of a mobile telephone acting as a point of sale terminal or an STK enabled mobile telephone of a user - payer, the phones have an STK application referring to the functioning of the payments and operations processor. This application is downloaded from an STK application server through an OTA server (Over the Air) and an SMS message center. This application displays a menu with available transactions and, once selected, another prompting for the introduction of the data needed to carry out the transaction selected. This data can include, if needed, the security parameter of an associated beneficiary. The STK application communicates with the mobile telephone POS or the STK enabled mobile telephone of a user-payer by means of proactive commands.

Each message sent from the payments and operations processor to the mobile telephone POS or to the mobile telephone of a user-payer and vice versa, employs SMS messaging capabilities.

In addition, the STK application can store information in the memory of the SIM card of the mobile telephones used as a POS or the mobile telephones of users - payers which, of course, are STK enabled, thereby allowing users-payers and beneficiaries to consult this information, for example prior transactions, at any time.

The messages exchanged between the mobile telephone POS and the payments and operations processor are encrypted using 3DES (Triple Data Encryption Standard) with a symmetric key cipher which is stored in the payments and operations processor and linked to the security parameter of each associated beneficiary, and by another cipher comprised of 16 keys, only one of which is selectively activated from the operations processor, and is randomly changed over time.

The messages exchanged between the mobile telephones of users-payers and the payments and operations processor are similarly encrypted using the 3DES (Triple Data Encryption Standard) with a symmetric key cipher stored in the payments and operations processor and linked to the security parameter of each associated user-payer, as well as by another on the mobile telephone itself which is comprised of an IMSI (International Mobile Subscriber Identity).

Accordingly, when an associated beneficiary initiates a transaction by means of an STK enabled mobile telephone used as a point of sale terminal, the application selectively requests the identification of the user-payer, amount, and security parameter of the associated beneficiary. It then generates an SMS message using the data introduced and sends it to the payments and operations processor which, once detected, and after completing the transaction, sends the results back also using SMS.

In the case of a transaction initiated by a user-payer by means of an STK enabled mobile telephone, the application displays a menu with the different operations available and, once the selection is introduced, opens another menu requesting the data needed to complete the selected transaction. It then generates and sends an SMS message that contains an authentication request which activates the STK application and displays a menu requesting the introduction of the security parameter and of a means of payment, generating an SMS message with the information introduced and sending it to the payments and operations processor which, once detected and the transaction is completed, sends the results back via the SMS message center.

In addition, the invention allows, both on GSM networks as well as CDMA/TDMA networks, for the messages sent from the operations processor to be voice rather than text, to which the beneficiary or user-payer responds by introducing the various data requested either using the keypad or by voice. Accordingly, the telecommunications controller means include an IVR controller (Interactive Voice Response) which is connected to a conventional IVR device, which, uniquely, is equipped with the first storing means with information on the functioning of the payments and operations processor and a connection interface based on the TCP/IP protocol (Transmission Control Protocol/Internet Protocol) with a secure connection. The IVR device is connected to a PBX switchboard (Private Automated Branch Exchange) to communicate with the different mobile telephone networks and exchange messages with the different mobile telephones of the associated users-payers and the communications equipment of beneficiaries with voice recognition mechanisms.

When the communication is made from the mobile telephone of a user-payer or from the communications equipment of a beneficiary, with IVR, a call tone is received as well as an individualized welcome message, to assure the authentication of the IVR.

Accordingly, the operations processor generates a selective series of messages requesting data to establish, upon detecting a transaction request handled by an IVR device, voice instructions referring to the transaction menus to selectively obtain the data needed for the transaction to be carried out. In the case of a mobile telephone used as a POS, it also requests that the beneficiary introduces his or her security parameter to perform the authentication in accordance with that already described.

When the operations processor detects a transaction request in an IVR session from a mobile telephone POS, after validating the beneficiary within the merchant processor, it sends a voice menu with the selection of the different operations available. After the beneficiary selects the desired operation using either the keypad or voice instructions, the selection is sent to the operations processor which then opens a new voice menu requesting the data needed for the selected transaction, and repeating the process in the IVR session which remains open until the said needed data is received, including the introduction of the security parameter of the associated beneficiary, as well as an authentication message of a user-payer. The results of the transaction are sent to the mobile telephone of the associated user-payer through the wallet processor.

To carry out all of the functionalities described above, the merchant processor includes an administration module that is connected to the second storing means and a connection interface with the operations processor so that it may carry out additions, deletions and modifications to the associated beneficiary identifiers and the corresponding means of payment. This can be carried out either by a systems analyst of the payments and operations processor, or by a systems analyst or administrator of the financial entities processor. In addition the merchant processor includes an authentication processor that is connected to the second storing means, to the administration processor, and to the interface to allow it to perform the validation of the associated beneficiaries, and the authentication of the security parameter related with the associated beneficiary. In addition, it also allows for communications through an intelligent network, for advanced CDMA/TDMA mobile telephone networks. To which end, the telecommunications controller means include an intelligent network controller that contains protocol translation to convert the protocol used by the payments and operations processor to that of the intelligent network and vice versa, thereby allowing for communications between the payments and operations processor and a service control point (SCP) of an intelligent network that contains information on the functioning of the payments and operations processor. In this case, to carry out the communications through the intelligent network, it is necessary that the mobile telephones of the users-payers and the communications equipment of the beneficiaries be capable of generating a trigger for the intelligent network to send a transaction request, detected within a mobile switch center (MSC) on the intelligent network, and send it to the payments and operations processor to allow the mobile telephone of an associated user-payer or the communications equipment of an associated beneficiary to communicate with the payments and operations processor over the intelligent network. The trigger signal originating with the communications equipment of associated beneficiary, comprised of a cellular POS, contains identification information on the associated user-payer, a product or service, and the corresponding price of the product or service.

The intelligent peripheral (IP) of the intelligent network includes, selectively, pre-recorded messages requesting the various data from associated users-payers and, also selectively, from the communications equipment of associated beneficiaries, to send the messages according to the pre-recorded voice instructions in the same manner as that for the IVR device described above.

There is also the possibility that the SMS controller described above be connected to an SMS center of the intelligent network to request the various data from the mobile telephones of the associated users-payers and, selectively, from the communications equipment of associated beneficiaries by sending SMS messages.

In addition, as described for communications with each of the different technologies of the mobile telephone networks, and with each of the different types of mobile telephones, the corresponding technologies must be detected by means of the technology detector described in the beginning of this section.

To this end, it is important to note that the sixth information included in the first storing means refers to the identification of the mobile telephone network and that associated to each associated user-payer, and each sixth information referring to the technology of the each mobile telephone of each associated user-payer, as well as each third information included in the second storing means referring to the identification of the mobile telephone network of each associated beneficiary, as well as the fourth information referring to the technology of each communications equipment of each associated beneficiary, when the identification code is a telephone number or another number related thereto, or is an international mobile equipment identifier (IMEI) of a GSM network, that is where it each mobile telephone within the GSM network is identified by an IMEI number assigned by the telephone manufacturer as a unique identifier.

This circumstance also exists for CDMA/TDMA networks, but in this case the international identifier is an electronic serial number (ESN) that uniquely identifies each mobile telephone associated with a CDMA/TDMA mobile telephone network.

Both the IMEI and the ESN are stored on a node of the mobile telephone network, as is standard, so that upon establishing communications these nodes are accessed to update the information on the technology of the terminals or mobile telephones, and the networks of each associated user-payer and associated beneficiary.
to the send, the telecommunications controller means include an HTTP controller (Hypertext transfer protocol) in order for the technology detection controller of the payments and operations processor to be able to communicate with each mobile telephone network, with said processor accessing the fifth and sixth information contained on the first storing means or the third and fourth information contained on the second storing means to update the third, fourth, fifth, and sixth information, which is selectively associated to expiration dates and update schedules.

The invention also allows for the possibility that prior to any communication of the wallet processor with the mobile telephones of associated users-payers, or the communications of the operations processor with the communications equipment of associated beneficiaries, the said wallet processor, or the said operations processor must first generate a request to obtain the identification of the technology of the mobile telephone network and of the said mobile telephone of the associated user-payer, or of the communications equipment of the associated beneficiary, from the technology detecting processor, which would then access the fifth and sixth information on the first storing means or the third and fourth information on the second storing means to obtain said information and selectively send it to the wallet processor or the operations processor as appropriate, which then select a telecommunications means controller of those described above depending on the technology detected.

The technology detecting processor verifies the expiration date of the fifth and sixth information, or of the third and fourth information, and selectively sends said information to the wallet processor, or to the operations processor as appropriate, provided said information has not expired; otherwise, it generates a request to detect the technology of the mobile telephone network, and of the mobile telephones and communications equipment, to update said fifth and sixth information or third and fourth information as appropriate.

Another possibility offered by the invention is that the mobile telephone network generate and selectively send updated information referring to the fifth and sixth information, or the third and fourth information, as appropriate, wherein case the technology detecting processor returns the result of the updating to the network of the mobile telephone.

Regardless of the form wherein the technology is detected, there is the possibility that a request to obtain the technology of a mobile telephone network and the technology of a mobile telephone of an associated user-payer, or of the technology of a mobile telephone network and the technology of the communications equipment of an associated beneficiary, refer to a plurality of fifth and sixth, or third and fourth information, so that the updating of the users-payers and/or the beneficiaries can be performed at the same time, wherein case the response from the mobile telephone network includes a plurality of updated information on the fifth, sixth, or third and fourth information.

The sixth information identifying the technology of the mobile telephone of each associated user-payer included in the first storing means referred to a plurality of technologies associated to a priority, and such a way so as to indicate, whenever it is detected that a mobile telephone is associated with various technologies, that that of the highest priority is selected for the communication with the mobile telephone of the associated user - payer.

The beginning of this section we also commented that there is the possibility that the payments and operations processor perform a delegated authorization, wherein case it must first have carried out a delegated authentication was in the payments and operations processor. To perform the delegated authorization, the payments and operations processor includes a local authorization center so that the authorization is sent to said local authorization center rather than to the financial entities processors.

This authorization is especially useful for cases wherein micropayments are made, that is, payments of very small amounts. For this, the second identification information on the means of payment of each associated user-payer included in the first storing means must be associated to a maximum purchase amount and to an identification of the local authorization center, so that upon receiving a transaction request, and validating the associated user-payer, the wallet processor generates a validation that includes an indication of the existence of at least a means of payment associated to a maximum amount. In addition, it is necessary that the beneficiary accept micropayments, to which end the first information identifying each associated beneficiary included in the second storing means are selectively associated to a maximum amount, and to an authorization profile for the beneficiary which refers to: online authorization indicating that delegated authorizations are not allowed, off-line authorization indicating that only delegated authorizations in transactions of below a specific amount are allowed, or mixed authorization off-line and online indicating that one or the other authorization wherein the transaction amount is below or above a specified amount is allowed, so that in validating the associated beneficiary, the merchant processor generates a validation message that includes an indication of the authorization profile of the said beneficiary.

Accordingly, the authorization is made in the local authorization center whenever the amount does not exceed the established maximum and the merchant authorizes it, or, conversely, is carried out in the financial entities processor if the amount does exceed said maximum or the merchant does not authorize transactions with a delegated authentication.
to perform local authorization, accordingly, when it is detected that the validation message for the associated user-payer indicates that, at least, one that means of payment is associated to a maximum amount, and the validation message for the beneficiary indicates that the authorization profile of said beneficiary is online, the wallet processor generates an authentication message that includes the match of means of payment admitted by the beneficiary with the means of payment of the user-payer which are associated with a maximum amount, so that the user-payer may select a means of payment that is associated to a maximum amount.

Upon detecting a means of payment associated to a maximum amount within the response message to the above authentication message, a delegated authorization request is generated in the local authorization center identified based on the identification of the selected means of payment associated to a maximum amount.

The request for delegated authorizations is received by the local authorization center and verifies the status in the first storing means of second identification information on the means of payment associated to each associated user - payer which are linking to a maximum amount, to carry out said delegated authentication and authorization and send the result of the transaction to the user-payer and beneficiary.

In addition, the local authorization center is equipped with the means to subtract all payments made during an pre-established period of time from the maximum authorized amount so that purchases do not exceed the maximum established and authorized by the merchant, or, otherwise, it is carried out in the financial entities processor if the amount exceeds the established maximum or the merchant does not authorize transactions with delegated authorization. The said authorization center accesses the seventh storing means included in the payments and operations processor to obtain an available net balance, less previous transactions within the period, and generates a rejection message when the amount of the transaction exceeds said net balance. Accordingly, the authorization center does not allow for expenditures above the established maximum amount within a pre-established period, for example one day.

The local authorization center includes a batch processor that is connected to the seventh storing means to store the various transactions carried out during the pre-established period of time, with the batch processor sending the different transactions to the corresponding financial entities processors through the communications controller upon the termination of the pre-established period, and the said financial entities processor performs the debits and credits for the users-payers and beneficiaries respectively.

In the technology of mobile telephones, those having WAP, STK, J2ME, and BREW applications are included, as mentioned above, which are identified in the fifth, sixth or third, fourth information of the first and second storing means respectively.

Mobile telephone technology includes mobile equipment that contain WAP, STK, J2ME, and BREW applications, that perform some of the functions assigned to the payments and operations processor to simplify the functioning, such as, for example, the matching of means of payment, so that the mobile telephones with the mentioned technologies contain information on the means of payment to which the users-payers are associated, to receive an authentication request that includes a request to introduce the security parameter and the means of payment of the associated beneficiary. Accordingly, it is the telephone of the user-payer that establishes the common means of payment shared by the associated user-payer and the beneficiary.

To this end, the sixth information in the first storing means are linked with the identification of the mobile telephones that have said technology and the information on the means of payments stored locally, to generate the authentication request.

In addition there is also the possibility that the mobile telephones of the previously mentioned technologies allow for the verification of the security parameter, whereby purpose they have the ability to store an activation key for the security parameter, a random parameter, and cipher key, all of which had been previously generated and stored selectively in the financial entities processor of the user - payer, to carry out the selective authentication therein or in the local authorization center. To this end, the mobile telephone of the user- payer must have a means of encrypting the key with a random parameter to generate an encrypted sequence that contains the key and the standard parameter, with the encrypted sequence being selectively stored in the first storing means of the wallet processor or in the financial entities processor of an associated user-payer, to carry out the authentication by means of the confirmation that the stored encrypted sequence coincides with that received from the mobile telephone. Accordingly, the authentication may be performed in a delegated manner within the wallet processor to which the user-payer is associated, by means of confirming that the encrypted sequences correspond or are equally in the financial entities processor.

In addition, the mobile telephones with the indicated technologies have the means to generate, based on an activation key, a request to introduce the security parameter, which following introduction is stored, so that upon introduction when requested an encrypted sequence is sent to the payments and operations processor in response to an authentication request message. In this way the security parameter is solely known by the user-payer and is stored on the mobile telephone thereof, with only the encrypted sequence being sent.

In the case of the authentication being carried out within the financial entities processor of an associated user-payer through the financial entities processor of an associated beneficiary, the communication controller means again encrypt the already encrypted sequence when sending the authentication.

In the case of a WAP enabled mobile telephone, it should also be noted that to establish the different functionalities mentioned above, it is necessary that the telecommunication controller means include a WAP Push controller which includes storing means for WAP applications (Wireless Application Protocol) linked to the functioning of the payments and operations processor including the text messages to be sent in WML (Wireless Mark-up Language), to communicate with a mobile telephone using WAP and WML messages through a WAP gateway and any mobile telephone network, given that WAP protocols are independent of the carrier and use the mobile telephone network. The protocol used between the WAP Push and the WAP gateway is known as PAP (Push Access Protocol), while that used between the WAP gateway and the mobile telephone is known as POVAP (Push over the Air Protocol).

When the payments and operations processor needs to send a message to one or more mobile telephones, it generates a conventional push request written in WML using the conventional element p to indicate the phrases that should be displayed on the screen of the mobile phone and using the conventional element input to allow the introduction of the security parameter.

The mark-up language WML script is used to confirm within the very mobile telephone that the security parameter introduced has a valid format and to avoid the transmission of incorrect data chains.

When a transaction request is generated by a mobile telephone, said transaction request contains a WAP address assigned to the payments and operations processor, so that when the mobile telephone sends the request it displays a WML page with the selection menu for the operation to be carried out and, subsequently, one for introducing the data required by the operation selected, using the conventional elements p and option, to make the desired selection, with the information requested being displayed in WML.

The System Uses the Standard Security Protocol WTLS (Wireless Transport Layer Security) of the WAP Stack based on SSL (Secure Sockets Layer) to establish the authentication of the mobile telephone and of the WAP Push controller. The WTLS protocol selectively supports cryptography and PKI (Public Key Infrastructure), WIM, and WPKI based on the required level of security.

Regarding STK, J2ME and BREW enabled mobile telephones, it should be noted that these store selection menus of the operation to be carried out and of the introduction of data referring to the operation performed, delegating the functionality to the very mobile telephone.

The invention system allows for the possibility that a transaction request include an operation code, an identification code for the gateway with the payment in operation processor, security parameter, and means of payment, and combinations thereof, wherein case the payments and operations processor carries out the validation of the users-payers, merchants, and references in the manner described, with the only difference being that the number of messages that must be sent to the users-payers is reduced. The codes and parameters is not included are requested by the payments and operations processor by means of guided menus.

There is also possibility that the mobile telephones can be substituted for other mobile equipment capable of wireless communication, such as PDAs and laptop computers.

In the communication between the payments and operations processor and the financial entities processors, among others, three protocols are used, specifically: PRICE (Procedures for the Integrated Connection of Establishments), PUC (Unified Commercial Protocol) and PUM (Unified Mobile Protocol), which are based on the recommendations of ISO (International Standards Organization).

PRICE and PUM are used in the handling of accounting transactions arising from the use of credit and debit cards.

The PRICE protocol uses procedures to incorporate the equipment of conventional beneficiaries, which is also based on ISO 8583.

The PUM protocol has been specified to define the messages exchanged and operations with means of payments using the mobile telephone as an activator of the transactions. It is an AD-HOC development.

The three protocols use the so-called bitmap concept, under which each data element is assigned a position indicator within a control field or bitmap. The presence of a data element in a specific message is indicated by a "1" in the assigned position. The absence of a data element is indicated by a "0" in the assigned position.

Each message identified in the three protocols is comprised of the following sequence: identifier of message type, one or two bitmaps and a series of data elements in the order established by the representation of the bitmap.

The message type indicator is a numeric field wherein the version number of the message, message class, message function, and transaction originator are indicated.

The second component of the messages is one or two bitmaps wherein each bit signifies the presence or absence in a message from the data element associated with this particular bit. The primary bitmap is always present and represents the most frequently used data elements. The second bitmap represents the least frequently used data elements.

The third component of the messages is the data elements. The presence of a data element is indicated by the bitmap or the type of message.

The PUM protocol includes, prior to the message type identifier, a dialog control heading to control and synchronize the dialog following applications of the two extremes of the interface.

The messages defined in the protocols "PRICE and PUC" are as follows:
- Accounting request/response for authorization, approval or guarantee of funds for an accounting transaction.
- Accounting communications/response to communicate the authorization of an accounting transaction (sale and returns) in local mode.
- Cancellation communication/response to notify of the cancellation of an accounting operation.
- Settlement communication/response for the settlement of accounting sessions.
- Administrative request/response for session totals.
- Administrative notification to inform of the receipt ot unrecognizable messages.
- Authentication request/response to request authentication in the payments and operations processor which operates in the communication equipment of beneficiaries not directly connected to the payments and operations processor.
- Administrative notification for the confirmation of operations to user/payers and beneficiaries.
- Dialog control messages.
   In addition, the PUM protocol includes the following messages:

- Request/response for authorization for recharging of mobile telephones, request for balance and movements and changes to security parameters. In the event that the recharge is carried out through a processor that is connected to the mobile telephone network operator instead of said operator directly connecting to the payments and operations processor.
- Cancellation communication/response to cancel changes to security parameter is in telephone that recharging.
- Request for administrative response for authentication of account holder and obtaining means of payment.
- Administrative notification for the confirmation of operations for users-payers and beneficiaries.
- Administrative request/response for requesting the management of references.
- Request/response for updating of files online to manage additions, modifications and deletions of the users-payers and the means of payment.
- Dialog control messages.

All of the operations performed in the payment operations processor are registered in an invoicing and transactions management processor, included in said payment operations processor to allow for invoicing and obtaining account histories, as well as for the payments and operations processor to access the different data processors.

### BRIEF DESCRIPTION OF THE FIGURES

Figure 1.- shows a functional block diagram of the payments and operations processor in a country that is connected to a plurality of mobile telephone networks with different technologies within the same country, as well as a plurality of financial entities processors within said country to which the users-payers and beneficiaries are associated, to allow international and local transactions and payments.
Figure 2.- shows a functional block diagram of a possible example of the realization of the Internet operations processor that allows for purchases and transactions over the Internet.
Figure 3.- shows a functional block diagram of a realization of the references processor.

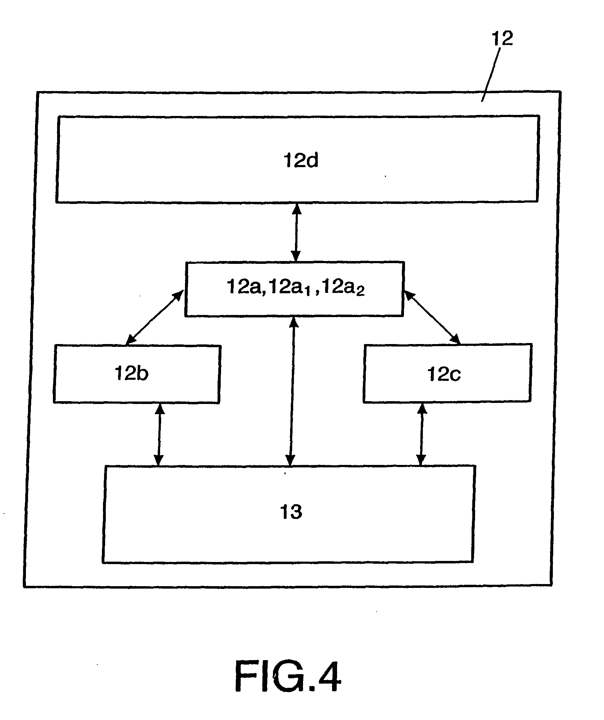

Figure 4.- shows a functional block diagram of a realization of the wallet processor.
Figure 5.- shows a schematic diagram explaining a purchase carried out by a user-payer while outside of his or her own country, and, accordingly, the purchase is made from a merchant that is associated to a payments and operations processor that is different from the payments and operations processor of the said user-payer, and wherein the communication equipment of the beneficiary is a cellular POS (8).
Figure 6.- shows a similar example as for the above, but with the difference of the communications equipment of the beneficiary being a conventional point-of-sale terminal (9).
Figure 7.- shows a functional block diagram of a possible configuration of the international addressing processor.
Figure 8.- shows a functional block diagram which highlights the telecommunication controller means included in the payment and operations controller to allow for communications through the GSM mobile telephone network.
Figure 9.- shows a functional block diagram which highlights the telecommunication controller means included in the payment and operations controller to allow for communications through the CDMA/TDMA mobile telephone networks.
Figure 10.- shows a functional block diagram wherein the communication from a payments and operations processor to the mobile telephone of an associated user-payer, or to the communications equipment of an associated beneficiary, is carried out using voice messaging. It also shows the telecommunication controller means included in the payments and operations processor to carry out this function.
Figure 11.- shows a functional block diagram wherein the mobile telephone is used as a WAP terminal to which functions that are normally carried out by the payments and operations processor can be delegated to simplify the transactions.
Figure 12.- shows a functional block diagram as the same as the previous but in this case the mobile telephone is STK enabled.
Figure 13.- shows a functional block diagram as a same as figures nine and 10, but with the difference being that in this case the mobile telephone is J2ME enabled.
Figure 14.- shows a functional block diagram that is the same as figures nine through 11, but in this case the mobile telephone is BREW enabled.

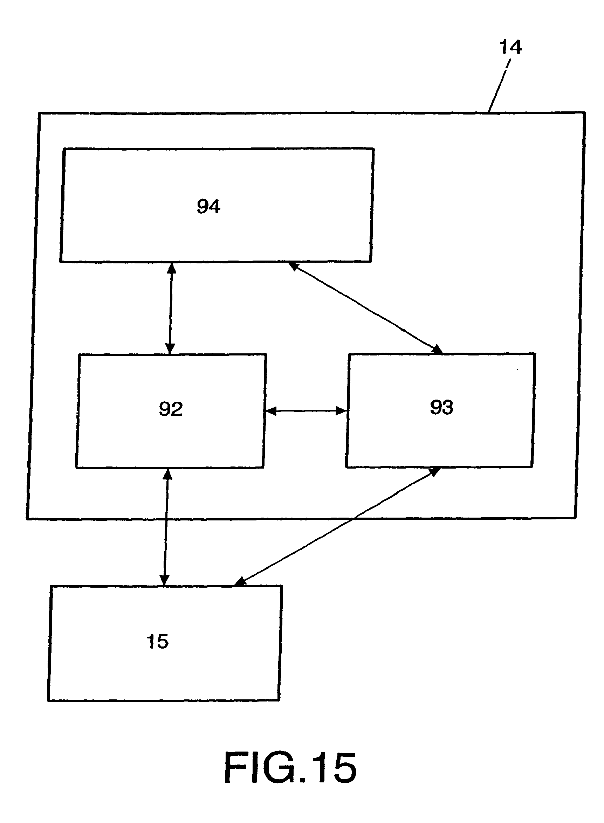

Figure 15.- shows a functional block diagram of a realization of the merchant processor.

### DESCRIPTION OF THE REALIZATION FORMS FOR THE INVENTION

Below we have described the invention by means of the figures commented above.

The invention is comprised of a plurality of payments and operations processors (1) interconnected among themselves through addressing processors (two), so that, for example, each of the payments and operations processors (1) is installed in different countries and allow for communication among themselves through international addressing processors (2) as will be described further on.

The different users-payers (5) and beneficiaries (6) of each country are associated with the payments and operations processor (1) in their own country.

Each of the payments and operations processors (1) is connected to a plurality of mobile telephone networks (3) and to a plurality of financial entities processors (4), belonging to the same country as the payments and operations processor.

The users-payers (5) are clients of at least one of the mobile telephone networks (3) and have a mobile telephone (7) while the beneficiaries (6) may or may not be clients of a mobile telephone network (3), depending on the communications equipment possessed, as will be described further on.

In addition, the users-payers and beneficiaries are clients of at least one financial institution, with which they have contracted at least one means of payment associated to a bank account within the said financial institution, which, in turn, is associated with a financial entities processor (4).

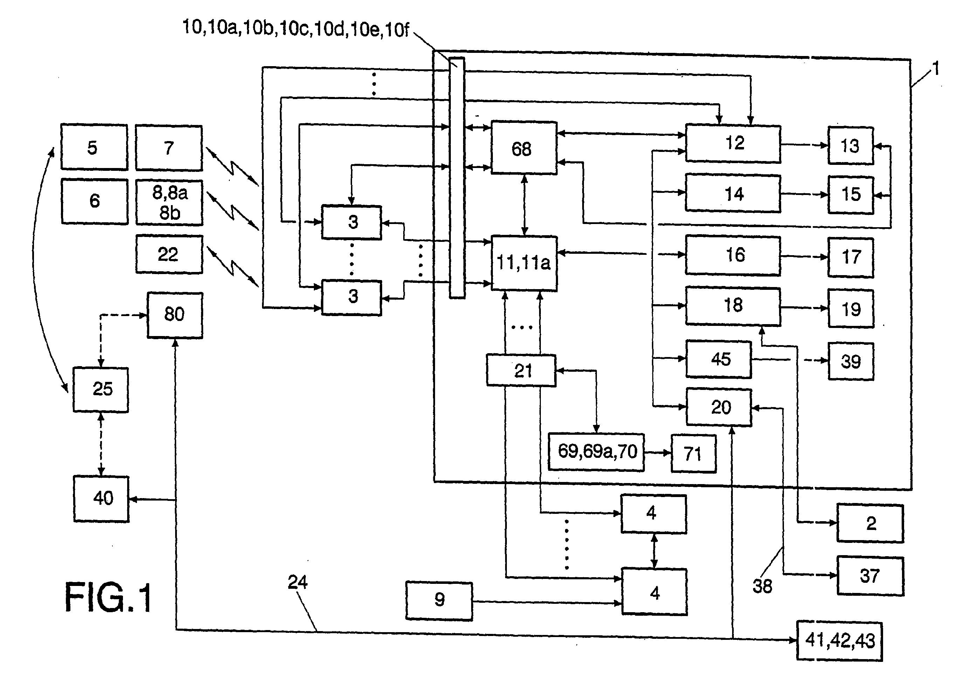

The financial institutions and the financial entities processors (4) are connected conventionally comprising a network over which they exchange the various data by conventional means. To simplify figure 1 we have only included the financial entities processors (4), and, moreover, the operations which through out this document are indicated as being carried out by the financial entities processors. The operations can in fact be carried out by said processors or by the financial institutions themselves without it having any affect on the invention. Thus, for example, when this document states that an authentication is carried out within or by the financial entities processor, the operation may in fact be carried out either by the financial entities processor or by the financial institution without it having any impact on the functioning or operation of the invention.

For information purposes only, it should be noted that there are financial institutions that issue and operate means of payment or offer other classes of goods and services to the account holders of the means of payments, and, accordingly, allow the users-payers (5) to receive services, acquired goods and make and receive payments or be authenticated by means of a means of payment issued or operated by said financial institution or under the instructions thereof. Said financial institution issuers are associated to a financial entities processor (4) of the users-payers (5), the designation that we have applied throughout according to that expressed earlier, to refer to the financial entities processor or to the financial institution.

We should also note that the financial institutions of which the beneficiaries are clients, are acquiring financial institutions and allow for the acquisition from the beneficiaries of credit rights that derive from their transactions with users-payers using means of payment for those transactions, and allow the beneficiaries to provide services, sell goods, make or receive payments, and authenticate users-payers by means of the means of payment. As indicated, the acquiring financial institutions are associated to the financial entities processors of the beneficiaries, again, the designation we have used tnrougnout this document for purposes of simplification, given that the communications between the financial entities processors (4) and the financial institutions are carried out conventionally and do not represent an object of this invention.

Along these lines, we should clarify that each time that we referred to a payment, it is intrinsically tied to the concept of liquidation and is the process of financial adjustments that perform the banks among themselves, in client accounts, as a result of the credits and debits generating therein, and are therefore not within the scope of the system of the invention, which solely acts as an activator of the liquidation payment but does not process as such either payments or liquidations.

There is also the possibility that the processors to be independent of financial institutions, with whom the payments and operations processor would communicate and wherein the payers are account holders of cards different from means of payment, but it will end thereto.

This structure allows for transactions and payments to be carried out among users-payers and beneficiaries of the same or different countries, with the transactions between payers and beneficiaries within a same country being carried out through the payments and operations processor of the country, while those between users-payers and beneficiaries in different countries are carried out through the payments and operations processors corresponding to each in their own country and between them through an interconnection by means of international addressing processors (2) in the manner that will be explained further on.

Another possibility is for the payments and operations processor (1) of one country to be connected to the financial entities processors (4) of other countries and, through roaming gateways, to the mobile telephone networks of other countries, thereby allowing it to act as a regional processor. In this way, the payments and operations processor (1) may operate in one or more countries.

Firstly, a description is provided for the different purchase and transaction modalities that users-payers (5) can perform with beneficiaries (6) within a single country. Accordingly only one payments and operations processor (1) is involved.

Therefore, a user-payer (5) may make on-site purchases, that is, those purchases wherein he or she goes to the establishment of the beneficiary (6) to buy goods or services. In this case the user is a payer (5).

The beneficiaries (6) may or may not be clients of a mobile telephone network, but in any case the beneficiary (6) must have communications equipment which, according to one realization, consists of a conventional POS (point of sale terminal) (9), that is, a POS that does not have a direct connection with the payments and operations processor (1) and normally is administered by third parties such as, for example, financial entities processors (4) with which it communicates by means of a landline, wherein case the beneficiary (6) is not client of a mobile telephone network, or by means of a wireless connection, or, in another realization, and the communications equipment consists of a POS (8) that includes a mobile telephone, hereinafter cellular POS (8), wherein case said beneficiary (6) would be a client of a mobile telephone network (3) through which it communicates directly with the processor (1). It may also be that the beneficiary uses a mobile telephone as a POS (22) (mobile telephone as POS), wherein case the beneficiary (6) must also be a client of a mobile telephone network.

Each of the payers (5) are assigned a security parameter that consists of a secret identification key that is selectively related with the identification of the payer by means of the mobile telephone number, or Mobile Station Integrated Services Digital Network Number (MSISDN), or a specific number assigned thereto, such as a PAN (Private Account Number) of the system, or an EAN (PAN code in barcode format), which, in turn, is related with a means of payment contracted respectively by the users-payers with financial institutions.

Next we describe an on-site purchase which serves as the basis for the description of the successive payment and transaction modalities that will be described.

In the case of an on-site purchase wherein the beneficiary is equipped with a cellular POS (8), the payer (5) informs the beneficiary (6) of his or her telephone number, PAN, or EAN, as appropriate, with which the beneficiary generates a transaction requests that includes the identification of the payer, the identification of the beneficiary, and the data for the purchase, such as product identification and price, to which end the associated beneficiary introduces said information into the cellular POS (8) and sends it to the payments and operations processor (1) across the mobile telephone network (3), by introducing the network number of the payments and operations processor (1). The identification of the beneficiary is implicit in the communication made with the mobile telephone network, using conventional caller ID.

The transaction request enters into the payments and operations processor (1) through the telecommunication controller means (10), to be explained further on, which deliver the request to an operations processor (11), which is equipped with the means to identify (11a) the type of operation and of the originating communications equipment and activate a sub-process corresponding to the operation and the POS, that is, in this case, identifying that it is a purchase operation originating with a cellular POS (8). The operations processor (11) then generates a verification request of the identification of the associated beneficiary, hereinafter beneficiary validation request, which it sends to the merchant processor (14), which accesses the second storing means (15) of at least the first identification information on each associated beneficiary within the system and the related identification code for each communications equipment of each associated beneficiary. In addition the second storing means comprise second identification information on the means of payment of each beneficiary, which are related with the first identification information of each of the beneficiaries, and with the identification of the corresponding financial entities processor to which each said beneficiary is associated. Accordingly, upon identifying the beneficiary, the merchant processor generates a beneficiary validation request which it delivers to the wallet processor (12) through the operations processor (11) together with the means of payment of the validated beneficiary.

The operations processor generates a request for the validation of an associated payer, which it sends to the wallet processor (12), which, in turn, accesses the first storing means (13) of at least the first identification information on each associated payer within the system and related to a mobile telephone number (7) of each payer, or with the PAN or EAN, so that based on the payer identification it verifies the data and generates a payer validation message. In addition, the first storing means (13) comprise second identification information on the means of payment that are contracted by each payer (5) and which are related with the first information and with the identification of the financial entities processor to which the means the payment of each payer is associated.

The wallet processor (12) detects the payer and beneficiary validation messages and, by means of the first detection means (12a₁), obtains the common means of payment thereof to generate a transaction authentication request message and send it to the mobile telephone (7) of the payer (5) through the telecommunications controller (10) and the network (3) to which the payer (5) is subscribed, with the previous detection, as explained further on, of the technology of the network to which the payer is subscribed and the technology of the mobile telephone used by said payer. The communications between the wallet processor and the mobile telephone (7) of the payer (5) is always carried out through the telecommunications controller (10).

The transaction authentication request message includes the common means of payment of the payer and the beneficiary involved in the transaction, a request to introduce the security parameter, and a request to select at least one common means of payment of the payer and the beneficiary, as well as the identification of the beneficiary and, optionally, the identification of the product and price thereof.

The payer receives the authentication request message by mobile telephone (7) and introduces the data requested and sends a response message that contains the security parameter in the selected means of payment, to carry out the authentication based on the three possible scenarios as explained below.

To this end, the wallet processor (12) is comprised of second detecting means (12a₂) which obtain the response message and access the first storing means (13) which also comprise third information identifying the type of authentication to carry out, which are associated to the second identification information on the means of payment, and are indicative of the realization of authentication directly in the financial entities processor (4) of a payer, authentication in the financial entities processor (4) of a payer through the financial entities processor (4) of the beneficiary, or a delegated authentication in the wallet processor (12).

It should also be noted that following the said authentication, the authorization of the transaction is carried out. To do so, the financial institution of the payer (issuer) verifies that the means of payment can support the transaction amount to authorize it. This is carried out by conventional means and, therefore, has been left out of the description in that is not an object of the invention. However, said authorization may also be delegated to a payment and operations center as shall be described further on for the case of micropayments. Accordingly, every time an authentication is carried out, the corresponding authorization is also performed although it is not expressly mentioned in this document except for those cases of the said micropayments.

As indicated, the different financial entities processors (4) are interconnected by conventional means to exchange information among them. It can result that the financial entities processor (4) of the beneficiary is the same as that for the payer, wherein case it would not be necessary to exchange information among financial entities processors (4), but it can also happen that the financial entities processors of the payer in the beneficiary are different, wherein case this exchange of information would be necessary.

In the event that it is detected that the authentication must be carried out directly in the financial entities processor of a payer, the wallet processor (12) delivers the response message to the authentication message to the operations processor (11), together with the identification of the financial entities processor to which the means of payment selected by the payer is associated, and sends the authentication response message to the communications means controller (21), which identifies the corresponding financial entities processor (4), and sends the authentication response message to the identified financial entities processor of the payer so that prior to sending the security parameter is encrypted. The financial institution of the payer verifies that the means of payment selected corresponds to the payer so that after the financial entities processor (4) carries out the authentication, the results of the confirmation of the security parameter is returned to the operations processor through the communications controller, and the transaction is processed together with the results of the authentication in the financial entities processor (4) of the beneficiary, which executes the transaction through the traditional financial networks. The financial entities processor of the beneficiary then sends the results of the transaction to the communications controller (21), which forwards it to the operations processor (11), from where it is sent to the beneficiary (6) through the mobile telephone network (3) by means of a telecommunications controller (10) and similarly is sent to the wallet processor (12) from which is sent to the mobile telephone (7) of the payer (5) through the mobile telephone network thereof (3) by using the telecommunications controller (10).

In the event that it is detected that the authentication must be carried out directly in the financial entities processor of an associated payer (issuer) through the financial entities processor of an associated beneficiary, the authentication is sent together with the information on the transaction and with the identification of the financial entities processor of the beneficiary to the communications controller (21), which encrypts the security parameter together with the identification of the selected means of payment for subsequent delivery to the financial entities processor of the beneficiary (acquirer), which uses the data in the authentication response from the financial entities processor of the payer (issuer) sending it the encrypted transaction data and security parameter for authentication and the authorization of the transaction, with the clearance and settlement being processed between the issuer and the acquirer by the means defined between the corresponding financial institutions, sending the results to the financial entities processor of the payer, and from there to the payer and the beneficiary in the manner already described through the payments and operations processor (1).

In the event that a delegated authentication is detected by the payments and operations processor (1), the authentication is carried out in the wallet processor, as previously described. Subsequently, the operations processor communicates with the POS of the beneficiary and with the mobile telephone (7) to send a notification of the results of the transaction.

The operations processor communicates with the invoicing and management processor, which is where the transaction history is stored, to store the results of the transaction, which should at least contain information on: the identification of the operation, such as, for example in operation number and/or authorization number, type of operation, identification of the user-payer, amount, currency, and identification of the associated beneficiary.

In the event that the operation is a return rather than a purchase, the beneficiary introduces in the POS the identification data for the user-payer, and the amount and currency corresponding to the goods being returned.

All transactions carried out by the system are registered in the transaction history by the operations processor which communicates with the invoicing and transaction management processor (45) which stores a registry of each of the transactions carried out by associated users and beneficiaries, regardless of type, that is, purchase, return, consultation or parameterization.

Access to these histories is available for consultations on commercial operations, such as, for example, in the case of returns, and histories entered into the invoicing and transaction management processor, inter alia.

There is also the possibility that in on-site purchases, the beneficiary (6) is equipped with a conventional POS (9) for example, managed by a financial entities processor. Wherein case, the beneficiary (6) introduces the identification of the associated payer into the conventional POS, as well as the data relating to the transaction, such as type of operation, product and price, and sends this data to said financial entities processor (4) to which the beneficiary (6) is subscribed.

Subsequently, the financial entities processor accesses its database, validates the beneficiary and generates a validation message that it sends together with the identification of the payer and the means of payment of the beneficiary to the operations processor (11) through the controller (21).

The payer is then validated in the manner already commented and an authentication request message is generated, repeating the process described for the cellular POS (8), with the difference being that once the transaction is completed, the sending of the results of said transaction to the beneficiary (6) are carried out directly from the financial entities processor (4) to the conventional POS (9).

The message that contains the results of the transaction also indicates the various data of the transaction such as type of operation, identification of the beneficiary, product and amount.

The invention system also allows for a payer (6) to use his or her mobile telephone (7) to initiate a transaction or purchase operation, which, in one example of the realization of the invention, is based on the use of a reference comprised of the following fields: format, references processor to generate the reference, length of the field indicated by the references processor generating the reference, the reference, and, selectively, a control digit that is calculated based on the formula that is commonly referred to as LUHN for references of more than four digits.

To allow for the functioning of the payments and operations processor (1) in this modality, the invention allows for a references processor (16) that is connected to third storing means (17) of at least first information identifying a plurality of references of distinct types, as was described in the section titled "Description of the Invention", with at least each one being related with the identification of a beneficiary and, selectively, with at least the identification of the price for a product or service and the identification of a communications equipment of the beneficiary, in accordance with the type of reference (POS), so that to carry out the transaction, the payer keys into his or her mobile telephone (7) an identification of the purchase operation by reference number, and sends it to the payments and operations processor (1) through the mobile telephone network (3) to which he or she is subscribed, where it is received in the telecommunications controller (10) which delivers it to the operations processor (11), wherein the first identifying means (11a) detect that it is a purchase by reference number and proceeds to carry out the validation of the payer in the manner already described, whose identification is made based on the communication with the mobile telephone network as normally occurs. Subsequently, it generates a validation request for the reference and sends it to the references processor (16), which checks the format of the reference (structure, control digit, length, etc.) for correctness according to the standards established by the center, so that the operation is not rejected. It then extracts the references processor code to verify whether the reference belongs to this or another references processor. If the reference belongs to another identifiable references processor, the reference is routed in a manner to be explained further on. The reference is then checked against the listing in the first information of the third storing means (17) to see if it is valid, a concept which will similarly be described further on, and if the reference is not found or if it has expired, the operation is refused; if valid, the data to which it is associated, for example amount, currency, identification of the beneficiary, identification and operating system of the beneficiary's equipment (POS), etc. is returned to generate a reference validation message that includes said data and send it to the operations processor (11), which, based on the identification of the beneficiary included in the reference data, generates a beneficiary validation request message and, selectively, a POS identification validation message. In the event that the validation of a reference includes the identification of a POS, to allow communications therewith, the validation of the POS identification is sent to the merchant processor, which after validating the beneficiary, validates the corresponding POS, with the validation message returning the operating system of the POS to allow for the operations processor to open a dialogue with said POS and obtain the remaining operation data as may be needed.

When the wallet processor (12) detects the three mentioned validations, it generates the authentication message described above.

At this point, the process is repeated in the manner described above until completion by means of sending the transaction results to the payer in the beneficiary.

In one of the pay by reference modalities of the invention, the reference refers to a POS for recharging prepaid mobile telephone cards, wherein case the beneficiary is in the mobile telephone network operator (3) having issued the card, and is identified by means of the introduction of the telephone number to be recharged as is described below.

In this case a payer (5) introduces a reference representing the recharge operation and, optionally, the telephone number to be recharged. This request is received by the operations processor (11) whose first identifying means (11a) detects that the operation is a reference purchase and carries out the validation of the payer, reference and associated beneficiary in the manner already described. Subsequently, the operations processor (11) generates, optionally, a verification request message to check whether the mobile telephone number detected allows for recharging, sending said message to the mobile telephone network operator (3) through the controller (10). The operator verifies that the telephone number received is associated with a prepay scheme, and generates a message that it sends to the operations processor (11) to carry out the authentication in conformity with that already described in the previous examples.

There's also a possibility that in a recharge operation, the authentication message further comprises the request described above, a request for the introduction of the mobile telephone number to be recharged, wherein case this number is received in the response message to the authentication request and not in the transaction request, and it is at this time that the operations processor generates the message to verify whether the telephone number to be recharged belongs to a prepaid scheme, and upon receiving said response message, and having verified with the operator that said telephone number allows prepayment, the authentication and transaction are carried out in the manner already described. The verification with the operator that the telephone number belongs to a prepaid scheme can be optional.

In any of the cases of recharging, upon receiving the results of the transaction, a recharge order is generated and sent to the operator/carrier of the mobile telephone network, and upon receipt of the results of the recharge, sends it through the wallet processor (12) to the mobile telephone (7) of the payer (5) having requested the recharge.

Similarly, the invention allows for the purchase of operator logos, ring tones, games, and applications that can be downloaded to the mobile telephone of an associated payer. In this case the functioning is the same as that described as for the first case of payment by reference, with the difference being that the beneficiary is the mobile telephone operator, so that upon receiving the results of transaction, the operator generates or allows for the download of the content to the mobile telephone (7) of the payer (6).

Another modality of pay by reference, is that associated to a cellular POS comprised of a vending machine (8a) with a wireless telephone connection that allows for communications with the payments and operations processor (1). In this case, when the operations processor (11) detects that it is a purchase by reference, it carries out the validation of the payer, the reference, the beneficiary, and the point of sale terminal. Upon validating this last and detecting that it is a vending machine with a wireless telephone connection, it generates and sends to the vending machine, across the corresponding mobile telephone network (3) a message to initiate the purchase which includes at least the type of message (greetings, product selection, etc.), and, optionally, the identification of the payer, with the vending machine (8a) being enabled to detect such an initiation message to display on its screen the type of message and, optionally, the identification of the payer, and a request to select the desired product. The identification of the payer may consist of a nickname, or the last six digits of his or her mobile telephone, so that the said payer is informed that the message does refer to him or her. After the payer makes the desired selection, the vending machine generates and sends a message to the operations processor (11) with the results of the product selection, which includes at least the type of message, a response code to indicate whether the product was selected or not, the amount, currency, and, optionally, the product code, which is detected by the first detection means (12a₁) of the wallet processor (12) to generate an authentication request message.

This the case wherein the operations processor, in addition to generating a beneficiary validation message, also generates a message to validate the cellular POS (8), which, as described earlier, is carried out by means of the merchant processor to allow the operations processor to establish medications with the vending machine (8a) according to the process described. In general, this operation is necessary whenever the payments and operations processor establishes communication with the POS of a beneficiary.

Next, the authentication and transaction are carried out in the manner described previously, but with the difference being that upon the vending machine receiving a valid transaction result, it issues the product selected or generates a message error indicating that the transaction had been declared invalid.

Another pay by reference modality allowed by the invention calls for the reference to be associated to a cellular POS (8b) which allows the prepayment of purchases with the product to be collected at a later date (order taking) or for the prepayment of a product to be delivered at a later date, such as for example the order of takeout food to be picked up or delivered after a certain amount of time.

In this case, when the operations processor detects by means of the identifying means that the operation is a purchase by reference, it carries out the validation of the associated payer, reference, beneficiary, and POS in the manner already discussed, but with the difference being that in this case the POS is comprised of a receipt printer (8b) connected to a mobile device, in such a way that the third storing means (17) include third information associated to a locator reference so that upon validating the reference in the references processor (16), it accesses the third information order to obtain a locator reference, which may be random. The locator reference is related with the product, the price, and with the receipt printer (8b), and upon the operations processor (11) receiving valid transaction results (after carrying out the authentication and the transaction), it generates a prepaid purchase message for a product to be collected or delivered at a later time, which includes at least the results of the transaction, identification of the product, price and the locator reference, sending the message to the mobile telephone of the associated payer and to the receipt printer for printing. In this way, when the payer arrives at the merchant beneficiary to collect the purchase, upon specifying the locator receipt, which identifies the product for the beneficiary, the identification of the payer and that the transaction has been performed correctly, so the beneficiary completes the transaction with the delivery of the product. In this manner, all the products ordered have been previously paid, avoiding the receipt of the orders that have not been previously paid.

This same operation is also valid for the purchase of theatre and concert tickets, travel tickets and in general any product that requires prepayment, but in this case the POS would be virtual (40), as will be described further on.

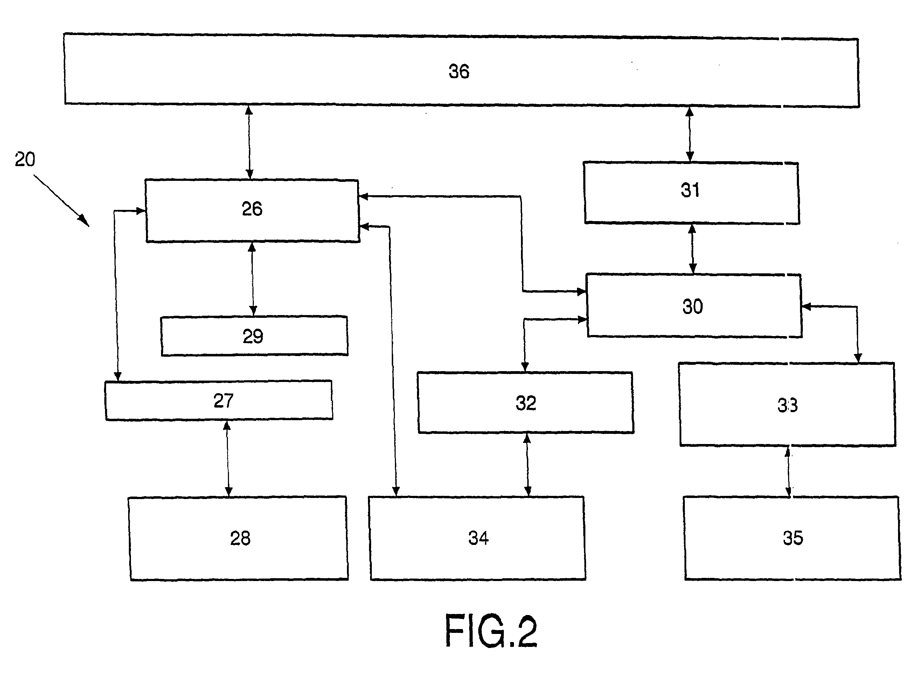

It is also a possibility that the communication with the receipt printer be carried out over the Internet, as will be described further on. Another modality of the reference applies to purchases over the Internet. Accordingly, the payments and operations processor (1) also is equipped with an Internet processor (20) (figures 1 and 2) and connects through an Internet network (24) different from a mobile telephone network to a communications equipment (40) of an associated beneficiary.

An embodiment of the invention also allows for the equipment of the beneficiary to be virtual POS (40) which is accessed by the payer by means of communications equipment (25) such as a personal computer to carry out the purchase of a product or service which is selected via the virtual POS (40), which displays a reference related to the desired product and the said virtual POS (40). Subsequently, the payer (5) introduces the reference code for the purchase and the identification of his or her mobile phone (7) and sends a transaction request to the payments and operations processor (1) that contains said data. The operations processor (11), by means of the identifying means (11a) detects whether it is a reference transaction referring to a virtual POS, and carries out the process described previously, that is the validation of the payer, of the POS, of the reference, and of the associated beneficiary, authentication, realization of the transaction, and lastly communicating the results of the transaction to the associated payer by means of his or her mobile telephone (7) and to the beneficiary (6). However in this case, that of a virtual POS (40), the second storing means (15) comprise sixth information identifying, selectively, an Internet address or an e-mail address related with the second identification data of an associated beneficiary, so that upon the operations processor (11) receiving the results of a transaction, identified by the identifying means (11a) it send the results of said transaction to the Internet processor (20), which receives it through an interface (36) and delivers it to the inquiry module (26) which accesses the merchant processor (14) to obtain the fifth information identifying an Internet address or an email address associated to the beneficiary. If the inquiry module detects an Internet address, it encrypts the results of the transaction by means of an encryption manager (29) and sends the encrypted message to the virtual POS (40) of the beneficiary (6) through an email manager (27) and a Web controller using SMTP (Simple Mail Transfer Protocol) (28), so that the e-mail manager (27) generates the correct e-mail format and sends a notification off-line through the controller (28) which constitutes the interface with the network (24).

In the event that the inquiry module (26) detects that the virtual POS (40) is associated to an integrated Internet operation, the transaction results message is sent online through an HTTP/HTTPS Web controller (Hypertext transfer protocol/Hypertext transfer protocol secure) (34), from which, using conventional security mechanisms, it is sent to the virtual POS (40).

In another payment modality of the invention, there is a possibility for a payer (5) to select a product or service in a virtual POS (40) that is associated to an integrated Internet operation with the reference being generated by the payments and operations processor (1). In this case the virtual POS (40) generates a reference generation request online that is sent to the Internet processor (20), together with the identification of the beneficiary and a password to authenticate the beneficiary over the Internet. The Internet processor (20) receives the request through the controller (34) and delivers it to the inquiry module (26) which accesses an access control module (30) wherein the merchant authentication is carried out conventionally over the Internet by use of a password and the identification of the beneficiary. Once the beneficiary is authenticated and it has been verified that it is authorized to request the generation of a reference, the inquiry module (26) receives the authentication and sends the reference generation request to the references processor (16), which is obtained through the third storing means (17) wherein the references are stored together with the product and service data, price, currency, and the identification of the associated beneficiary, and it sends it over a return path to the virtual POS (40) so that the references are obtained in the personal computer (25) of the buyer (5) which generates a transaction request that contains the reference by means of his or her mobile telephone (7), repeating the process already described in previous examples, but with the difference being that in this case and prior to generating the authentication request message, there is a possibility that the merchant processor (14) generate a confirmation request that the associated beneficiary does have available the product identified, which is sent through the operations processor (11) of the inquiry module (26) which obtains the data from the associated beneficiary in the manner already described and sends the stock confirmation request to the communications equipment (4) of said associated beneficiary through the Web controller (34) so that the virtual POS (40) verifies the stock levels for the product associated to the reference received, and sends a result by return path to the operations processor (11) so that if the beneficiary does have the product in stock the transaction continues in the form already described; otherwise the transaction is rejected in the payer is informed of the situation by means of his or her mobile telephone (7).

When the inquiry module (26) receives a reference generation request it generates a session code that is sent to the virtual POS (40) and associates it to the transaction in progress. Said session code is added to the different information, such as the reference generated or the stock confirmation request, for the POS to confirm that the session code received coincides with that received at the beginning of the transaction.

Any of the previous cases of payment over the Internet, can be combined with the prepay modality so that together with a reference generation request, a locator generation request is sent in the same way as for the prepay purchase or order taking module, for the purchase of theatre and concert tickets, travel tickets and other tickets of any kind, rentals, etc., so that once the result of the transactions are obtained, they are sent together with the locator to the virtual POS (40) in the manner already described, and to the mobile telephone (7) of the payer (5), who can then collect or receive the product in the manner described earlier.

In one realization of the invention, the beneficiary is a supplier of software. In this case, once the payer selects the file desired, the virtual POS (40) generates a reference generation request together with a locator generation request so that once the transaction is fulfilled in the manner already described, upon receiving the transaction notification in the virtual POS (40), this last encrypts the file together with the locator and authorizes the download to the payer, who uses said locator to decrypt the file received on the mobile telephone.

In addition, the Internet processor (20) includes an e-commerce processor (32) that is connected to the Web controller (34) to allow for the access to the Internet processor from the communications equipment of an associated beneficiary over the Internet, and perform consultations or modifications to the reference data associated thereto, such as, for example, additions, deletions, consultations or modifications of reference numbers. To this end, the processor (32) provides a graphic user interface that allows for the user merchant to access and manage their data over a secure connection and using their default Web navigator.

When a beneficiary wants to carry out an operation of consultation or modification, he or she generates a message detailing the operation to be performed, which is received in the processor (32) through the Web controller (34) and is delivered to the access control module (30) which carries out the authentication of the associated beneficiary in the form already mentioned based on the identification of the beneficiary and the password thereof, and through an application server module (31) that sends the request to the operations processor that detects the type of operation by means of the identifying means (11a) and delivers the data to the merchant processor (14), to the references processor (16) or to both to carry out the operation requested, and accessing, respectively, the second and third storing means (15 and 17), so that after the requested operation is carried out, the results are sent by return path to the virtual POS. The application server (31) establishes the relation between the Internet and the processors 14 and/or 16.

There is also possibility of allowing for these types of operations, consultations or modifications by means of the communications equipment (37) of a systems administrator, who would access over a private network (38) whereby purpose the Internet processor (20) includes an HTTP/HTTPS private network controller (35) that is connected to a merchant data web administration module (33) that stores the different services offered to associated beneficiaries and constitutes a graphical user interface with the operator that is equivalent to that provided by the processor (32) already described, in such a way that, similarly, it receives the request to authenticate the administrator by means of the access control module (30) and repeat the process in the form described for an associated beneficiary to modify, consult, or create new access possibilities for the consultations and/or modifications which are allowed for associated beneficiaries. In this case, the application server (31) establishes the relation between the private network in the processors 14 and/or 16.

Another example, the validation of an associated beneficiary that requests the generation of a reference, is carried out by verifying that said beneficiary is authorized to make such a request. Within the purchase by reference function, the invention allows for the payment of invoices referring to accounts, taxes, or other fees. In this case, the equipment of the beneficiary is an invoice issuer (41) that generates and sends a reference generation request to the Internet processor (20) over the Internet (24) in the form already described, so that the third storing means (17) store the reference generated together with the data for the invoice and send it to the issuer (41). When a payer wants to pay an invoice, he or she introduces the associated reference for the appropriate invoice and generates a transaction request, repeating the process in the form already described, but with the difference that in this case the transaction result is also sent to the invoice issuer (41) through the Internet processor (20) in the manner described for the previous cases.

Obviously, the system of the invention can be employed for the payment of catalogue purchases and teleshopping, wherein the products are associated to a reference number which has previously been stored in the third storing means (17), and which are associated to the corresponding beneficiary.

In this case, the transaction is made in the same way as for the first case described for purchase by reference.

In addition, the invention also allows for the purchase of pay-per-view television programs wherein the communications equipment of the beneficiary is a decoder for pay-per-view television (42) and wherein the reference is associated to a television program, with the process following the same form as for the first case of purchase by reference, but with the difference being that when the communications equipment (42) receives the transaction results, it generates the signal activating the decoder of the payer and thereby allowing the program to be viewed.

Another payment by reference modality is the payment of delivery notes for the delivery of products. In this case the equipment of the beneficiary is a delivery company (43) and as for the previous cases, generates and sends a reference generation request that contains at least information referring to the delivery product and price to store said information in the third storing means (17) and the reference generated together with the delivery notes data.

In this case, the associated payer sends a transaction request that contains the reference associated to the delivery notes and a means of payment in advance or for payment of cash on delivery, with the validation of the payer, the reference and the merchant being validated in the form already described. However, in this case, the difference is that the identifying means (11a) of the operations processor detects that the associated reference indicator is a delivery note and that the modality is payment of a delivery notes. This detection is carried out by the said means within the operations processor. If the modality selected by the payer is prepayment, the process continues in a manner described in the first example of payment by reference. However, if the payer selects payments of cash on delivery, this is detected by the identifying means of the operations processor, which generates a reference generation request in the references processor (16), associated to cash on delivery payment. After the generation and storage of the reference together with the associated data for the cash on delivery payment, it is sent to the communications equipment (43) of the associated beneficiary.

When the merchandise is delivered to the payer and acknowledged thereby, the payment by reference process begins by using a reference associated to cash on delivery payment with the transaction being carried out in the form already described in the first example of payment by reference.

The system of the invention also allows for carrying out transactions needed for authentication services such as in the case of digital signatures of electronic documents.

This requires a prior step consisting of obtaining the registration of a digital signature certificate, whereby the user-payer, using his or her mobile telephone, introduces an operation code that is sent to the payments and operations processor, which detects that it is an operation for the registration of a digital signature certificate and consults with the merchant processor for a list of authorized certifying authorities (CA) which have been approved by the payment and operations processor (1) and are stored in the second storing means, and sends this data so that the user can select one of the certifying authorities. Then a public key and a private key are generated for the user -payer, and a message is sent thereto requesting that he or she select an authorization parameter for the digital signature. Once this is received, the hash is calculated (summary algorithm) for the security parameter of the signature selected by the user and with the resulting cipher, the private key that was generated. This data is encrypted and stored in the first storing means (13). Subsequently, the operations processor (11) requests that the references processor generates a locator which is delivered to the user.

Subsequently, the payment and operations processor (1) sends the public key of the user to the certifying authorities selected by the user, together with the identification data and the locator. Following the procedures established by the certifying authority, the user identifies himself or herself, such as, for example, by means of the locator, and the certifying authority then generates a certificate for the user which has been encrypted with his or her public key and sends it to the operations processor (1). The certificate is stored in the first storing means and, given that the public key can be extracted, this data does not need to be maintained separately.

In this case, the communication equipment of associated beneficiary is made up of an electronic signature POS (80) that is accessed by the payer either in person or remotely using a personal computer (25) in the manner already commented, allowing the user to view the documents and the data that the user desires and the hash for the document to be signed, and selects to perform the digital signature through the payments and operations processor (1). As from this point, the digital signature POS (80) generates a reference generation request that is sent together with the document to be signed to the Internet processor (20), which receives it through the Internet controller (34) and the process already described for the reception of a reference generation request is repeated, but with the difference being that in this case upon generating the reference, it is stored in the third storing means (17) together with the document received. Next, the reference is sent to the digital signature POS (80) to inform the user-payer of said reference, who then initiates a transaction request that includes the reference generated.

When the operations processor (11) receives said reference and detects that it is an digital signature and performs the validation of the payer, reference and beneficiary in the manner already described and then generates an authentication request message that contains a request to introduce the security parameter and the hash of the document to be signed, and the sensitive data, if any, selected by the user.

In this way, the user can confirm by means of the hash that the document that he or she is going to sign is anyone demonstrated to the merchant, avoiding any replacement of the document.

When the signature security parameter reaches the payments and operations processor, it is used to calculate the hash needed to decrypt the private key of the user. After calculating the hash for the document and encrypting the private key of the user, which constitutes the signature thereof, the payments and operations processor (11) delivers to the signature POS (80) the signed document accompanied by the certificate of the user mentioned above, which guarantees that the user signature identified by the certifying authority is valid. The user is informed upon the successful completion of the signature process and, in addition, the locator can be delivered thereto to allow said the user to more easily consult the signed documents by means of the Web interface of the payment and operations processor (1). The invention stores the signed documents, for example, in the invoicing and transaction manager processor (45) which acts as a repository.

In addition, the system of the invention allows for the authentication of a PAN number for financial and other cards to be able to check the true identity of the car carrier, whether it be an operation involving a purchase or any other type, such as control of presence or admission, or to authenticate the user of a medical insurance card, etc., to avoid the repudiation of the operations. For example, we described the authentication of cards in making payments on the Internet (Visa 3 domain authentication model), whereby a payer after making a purchase through a virtual POS (40), introduces the card number corresponding to a means of payment. In response the virtual POS consults the issuing entity for the means of payment in the directory of said means of payment and obtains a URL (Uniform Resource Locator) referring to the payments and operations processor (1) so that through the URL communicates with the payments and operation processor through the Internet processor (20) in the manner commented on previously, in which communication a verification request for the card number (means of payment, which is associated to the PAN of the cardholder) is sent, so that the data reaches the operations processor (11) through the Internet processor (20) in the manner already described above, and the validation of the beneficiary and the payer is carried out, generating an authentication message that contains the means of payment of the card and a request to introduce the security parameter associated with the wallet processor.

Upon receiving the response message to the authentication request, it is detected that the operation is a delegated authentication within the wallet processor (12), with the authentication being carried out and communicated by mobile telephone to the payer in the manner already described, and to the virtual POS (40) through the Internet processor (20). In this way, the virtual POS (40) knows that the card selected does in fact belong to the beneficiary and is currently valid.

The system of the invention also allows for the communications equipment of an associated beneficiary to be comprised solely of a mobile telephone (22) that is used as a POS, hereinafter mobile telephone as a POS. This possibility is expressly planned for merchants that travel or for those cases where the operations volume and cost do not justify the installation of a cellular POS or of a conventional point of sale terminal.

In this case, as for the previous ones, the mobile telephone as a POS must be inscribed in the payments and operations processor (1) and the second storing means must contain the various data associated to the beneficiary and the mobile telephone as a POS in the same manner as was described for the previous examples.

In this case, if the beneficiary initiates the transaction, it also generates the transaction request, as for the previous cases, which is sent to the operations processor (11) through the corresponding mobile telephone network (3), and by means of the identifying means (11a) of the operations processor (11) which detects that it is an operation originating with a mobile telephone as a POS and validates the associated beneficiary in the manner described previously, but with the difference being that in this case once said validation is concluded, the operations processor establishes an exchange of messages with the mobile telephone as a POS to obtain the various data needed for the transaction, as described below.

It should also be noted that the mobile telephone as a POS is identified by its telephone number, and, selectively, related with a reference in the first information included in the third storing means (17) which, in turn, is associated to a selective sequence of messages requesting data, which selectively refer to the operation to be carried out, the first identification data of an associated user-payer, security parameter of an associated beneficiary, price of the product or service, and the currency to be used.

In this case, the beneficiary is also authenticated, whereby purpose the invention calls for the second storing means to include sixth information identifying a security parameter associated to the first identification information for an associated beneficiary, in order for the operations processor to detect a transaction request originating with a mobile telephone as a POS, and generate an authentication message for the associated beneficiary that includes the identification of a beneficiary and a request for the introduction of a security parameter which is sent to the POS of the beneficiary. When the operations processor detects the response, it requests that the merchant processor (14) authenticate it, which does so by accessing the second storing means (15).

The transaction request originating with a mobile telephone as a POS can include purchase operations, returns or consultations on the transaction history.

When the operations processor receives a consultation on a prior transaction originating with a mobile telephone as a POS, it requests the data identifying an associated user-payer, amount, currency, and, selectively, the date of the transaction. This information is sent to the invoicing and transaction management processor, which accesses the seventh storing means to verify whether the transaction record exists, sending the results to the mobile telephone as a POS of the associated beneficiary.

In this way, in the case of a beneficiary that wants to consult a previous transaction by means of the mobile telephone as a POS, it would enter the operation code representing the mobile POS to communicate with the payments and operations processor, which validates the beneficiary, and initiates a process of exchanging messages with the mobile telephone as a POS to obtain the data relating to the associated user-payer, the security parameter of the associated beneficiary, to authenticate said beneficiary, and the data relating to the transaction such as price of a product or service, or transaction currency.

Similarly when a user-payer wants to request a transaction referring to a mobile telephone as a POS, he or she would generate a transaction with a reference associated to said mobile telephone as a POS, and after it and the user-payer are validated, the operations processor generates successive messages to the mobile telephone as a POS requesting the data referring to the transaction, to which the beneficiary would respond introducing them into the mobile telephone as the messages are received. Once all of the needed data on the transaction is received, the process continues as commented earlier.

Further on in this document, we will describe in greater detail the different transaction functions of the mobile telephone as a POS.

The cellular POS's (8) can also carry out consultations on previous transactions, wherein case, when the operations processor (11) receives a transaction comprised of a consultation on a prior transaction, originating with a cellular POS (8), after obtaining the identification data of an associated user-payer, amounts, currency, and, selectively, the data transaction, the relative information is sent to the invoicing and transactions management processor which accesses the seventh storing means to confirm that the transaction record does exist, sending the results of the consultation to the cellular POS of the associated beneficiary. Accordingly, in this case, the authentication of the associated beneficiary is not performed.

As will be explaining greater detail further on, the request messages sent to the mobile telephone as a POS may be pre-recorded voice messages so that when received by the mobile telephone as a POS, the beneficiary introduces the responses to the voice messages received.

In order for the operations processor to issue the different messages it contains tables/files with a code for each of the different possibilities for messages that include the dialogues with the mobile telephone.

In this example of a realization, it should be noted that there is the peculiarity that the mobile telephone as a POS cannot print the sales receipts, so the transaction result message is not sent by short message as a ticket. This limits the number of short messages that may be stored on a mobile telephone as a POS, so, in this case, there is a possibility that the merchant processor (14) store the messages in the second storing means (15) so that they may be consulted from the mobile telephone as a POS by using consultation operations as described above.

It should also be noted that the third storing means (17) include second information identifying the reference is associated to remote payments and operations processors (1'), based on which it is determined whether the reference can be accessed from a remote payments and operations processor as will be described further on for international transactions and payments. In addition, the third storing means (17) include fourth information associated to the first, second and third information referring to the expiration of references so that they may establish different types of references, as was indicated in the section "Description of the Invention".

In addition, the system of the invention also allows for payments among individuals, wherein case the beneficiary is an associated payer. In this operation, an associated payer initiates the transaction from their mobile telephone (7) by introducing the identification of the beneficiary, who is another associated user-payer, and the amount to be paid. This message is received in the operations processor (11) which, by means of the identifying means (11a) detects that it is a transaction among individuals and performs the validation of the associated beneficiary, which in this case is another associated user-payer. The validation is carried out in the wallet processor (12) accessing the first storing means (13) in the same way as for the validation of an associated payer.

Thereafter, the validation of the payer is performed in the manner described.

The rest of the operation is the same as that described previously, with the only difference being that the results of the transaction are sent to the beneficiary (user) through the wallet processor (12) instead of directly from the operations processor (11) due to it being a another user-payer.

Another modality of payments among individuals is the case wherein a deferred payment is made. In this case, the transaction is carried out in two stages in accordance with the following. In the first stage, the beneficiary and the payer are validated in the manner described, but in this case the operations processor (11) detects by means of the identifying means (11a) that it is a deferred payment among individuals. Also, the third information selectively identifying an authentication contained in the first storing means (13) refers, selectively, to the realization of an authentication of a payer.

The charge against the means of payment of the payer, and the credit to the means of payment of the beneficiary, are pending execution, and the next step is the generation of the authentication results in the operations processor (11), being sent in the manner already described by the wallet processor to the mobile telephone (7) of the payer (5) and, simultaneously, the operations processor generates a reference generation request associated to a deferred payment among individuals in the references processor (16) which generates said reference and stores it in the third storing means (17) together with the transaction data, and then sends it to the mobile telephone of the associated beneficiary, who, as mentioned, is also an associated user - payer.

Having received the reference, the associated beneficiary is now in a position to initiate the second stage by generating a transaction request by reference which is sent in the manner already commented to the payments and operations processor (1), the operations processor of which detects whether it is a deferred payment reference and performs the validation of the associated beneficiary, which in this case is an associated payer in the manner already commented, to send the authentication message to the mobile telephone of the associated beneficiary so that said beneficiary may select the means of payment wherein it wishes to receive the payment, detecting the response in the authentication request referring to an authentication of a beneficiary in the financial entities processor to which it is associated, with the credit being made in the means of payment selected by the beneficiary who then receives the transaction results in his or her mobile telephone.

Another of the operations that may be carried out by means of the system of the invention, are consultations of a payer to the financial entities processor to which it is associated, such as for example, balance and latest movements inquiries. To this end, the user-payer generates with his or her mobile phone (7) a message representing a consultation operation, which is detected by the identifying means (11a) of the operations processor, with the validation of the user-payer being performed in the manner already described. The said processor then generates an authentication message wherein the means of payment are solely those of the user-payer and further comprises a request to introduce the parameters to be consulted. The user-payer then selects the means of payment to be consulted and introduces the security parameter and the consultation to be made, sending the corresponding response message to the authentication message. Next the operations processor (11) sends the consultation to the financial entities processor (4) corresponding to the means of payment selected and receives a response together with the data corresponding to the consultation made by the user-payer, which is sent through the wallet processor (12) to the mobile telephone (7) of the associated payer.

The same operations may be carried out in the wallet processor, wherein case a consultation operation of a user-payer is detected thereby. In this case, the authentication is carried out in the wallet processor which verifies that the security parameter received coincides with that stored in the first storing means and corresponds with that of the said processor. Subsequently, the inquiry is fulfilled and the data obtained is sent to the user-payer.

Another of the operations made possible by the system of the invention consists of a parameterization operation, acting on the various data associated to a user-payer. In this case, the user-payer sends a message requesting a parameterization operation that is detected by the identifying means (11a) of the operations processor and the validation of the user-payer is carried out in the manner already described. Next, an authentication message is generated wherein the means of payment refer only to the wallet processor of the user-payer, and also include a message requesting the introduction of the parameters to be modified. Upon receiving said authentication message in the mobile telephone (7) of the user-payer (5), the said user-payer introduces the security parameter and those parameters that he or she wishes to modify, which can include changes to the security parameter, language, default means of payment, etc.. Next, the operations processor sends a message to the wallet processor (12) where the modifications are made and from which an operation response message is sent to the mobile telephone (7) of the payer (5).

In this case the security parameter is associated to the wallet processor, by means of which the authentication is made to allow the required parameterization.

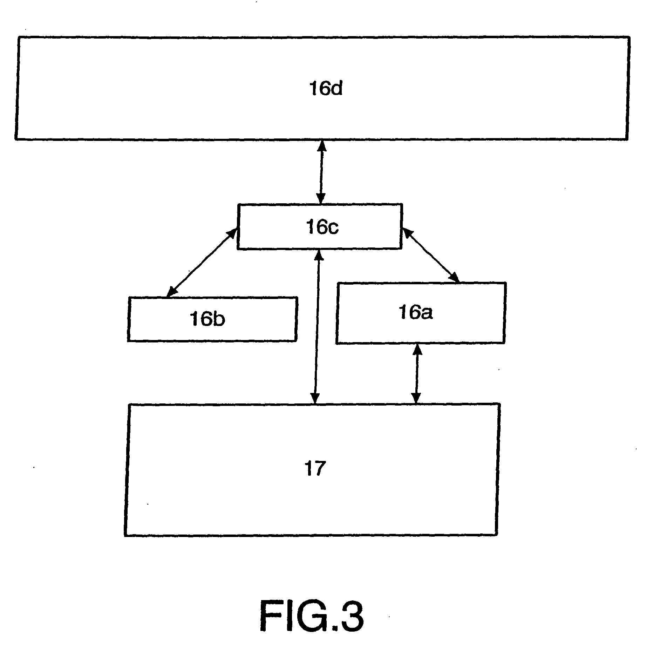

To carry out all of the functionalities described for the references processor (16), it is equipped with an automatic maintenance module (16a) (figure 3) of the information in the third storing means (17) to detect and eliminate expired references. This processor also is equipped with an encoding module (16b) to encode the references in accordance with the fields identified earlier and based on a defined algorithm. These are stored in the third storing means. In addition, the references processor is equipped with a connection interface (16d) to the other processors numbered herein as 11, 12, 14, 18 and 20, and an administration module (16c) that governs the functioning of the references processor (16).

Similarly, in order for the wallet processor (12) to perform all of the functions described, it is equipped with an administration processor (12a) that includes the first, second and third detector means (12a₁ and 12a₂ described above) and which implement administrative operations in the information contained in the first storing means (13) to allow access to the financial entities processors to perform additions, deletions and modifications to the means of payment of associated users-payers. In addition, the administration processor (12) allows for access of the invoicing and transaction management processor (45) to store therein the different operations carried out by the wallet processor.

To this end, the administration processor is connected to interface (12d) through which it connects to the different processors included under the payments and operations processor (1).

In addition, wallet processor (12) is equipped with a message processor (12b) that communicates with the administration processor (12a) with the first storing means (13) and with the interface (12d) so that the administration processor (12a) may carry out the detection of the technology as will be described further on.

To establish communications through the corresponding mobile telephone network, the wallet processor (12) is equipped with a message processor (12b) that is connected to the administration processor (12a), the first storing means (13) and the interface (12d) to allow it to send messages establishing sessions and maintaining dialogs with the mobile telephones of the users-payers.

The connection of the messaging processor (12b) with the interface (12d) allows for communication with a technology detecting processor (68) and with the telecommunications controller (10).

Lastly, the wallet processor (12) includes an authentication processor (12c) that is connected to the first storing means (13) to carry out the validation operations on users-payers, and the verification of the security parameter referring to the wallet processor, such as, for example, in the case of purchase operations, balance inquiries and latest movements, parameterization, with delegated authentication. In addition, it carries out the rerouting to the international addressing processor (2) and authentication requests of the users-payers associated to a remote payments and operations processor, as will be described below. Regarding the merchant processor (14) this is comprised of an administration module (92) connected to the second storing means (15) and to the connection interface (94) with the operations processor (11) to perform additions, deletions and modifications of beneficiaries with the associated means of payment either by a systems analyst of the payments and operations processor (1), or by a systems analyst or administrator of a financial entities processor. Moreover, the merchant processor includes an authentication processor (93) connected to the second storing means, the administration processor (92) and to the interface (94) to allow for the validation of the associated beneficiaries and the authentication of the security parameter related to the associated beneficiary.

In all of the operations initiated by the users-payers we have described the process wherein he or she introduces the different data of the transaction as they are required by the payments and operations processor (1), but there is also the possibility that the user-payer introduces all or part of the data needed to carry out the transaction, in one transaction request, so that in the case of introducing only part of said data, the rest of the needed data are requested in the manner described.

In addition, it should also be noted that the first storing means (13) store the information referring to the different languages within a single country, thereby allowing for a choice of language wherein to operate and for the various data that is exchanged with the mobile telephones of the user-payers and the communications equipment of the beneficiaries.

Below we describe the functioning of the system in the case of an associated payer making purchases or carrying out transactions in a country different from his or her own, or making purchases or carrying out transactions from his or her own country with a beneficiary in another country, and, accordingly, associated to a remote payments and operations processor (1') different from that of the payer.

To allow this functionality, the first storing means (13) include fourth identification information on payers associated with remote payments and operations processors (1'). Said fourth information is used to identify country codes, for example the country codes of the mobile telephone numbers of the country that each mobile telephones belongs to and the payments and operations processor to which each is associated. There is also the possibility that the country codes be a standard country code, for example a prefix representing each of the payments and operations processors of each country as defined under ISO/IEC 7812-1:1993 issued by the American Bankers Association. This is a PAN code that represents the country of a payments and operations processor and can also be an country code of an EAN code of the above PAN.

In addition, to allow this functionality, the payments and operations processors (1, 1') include a routing processor (18) connected to the fourth storing means (19) of at least the first information of identification of at least one international addressing processor (2).

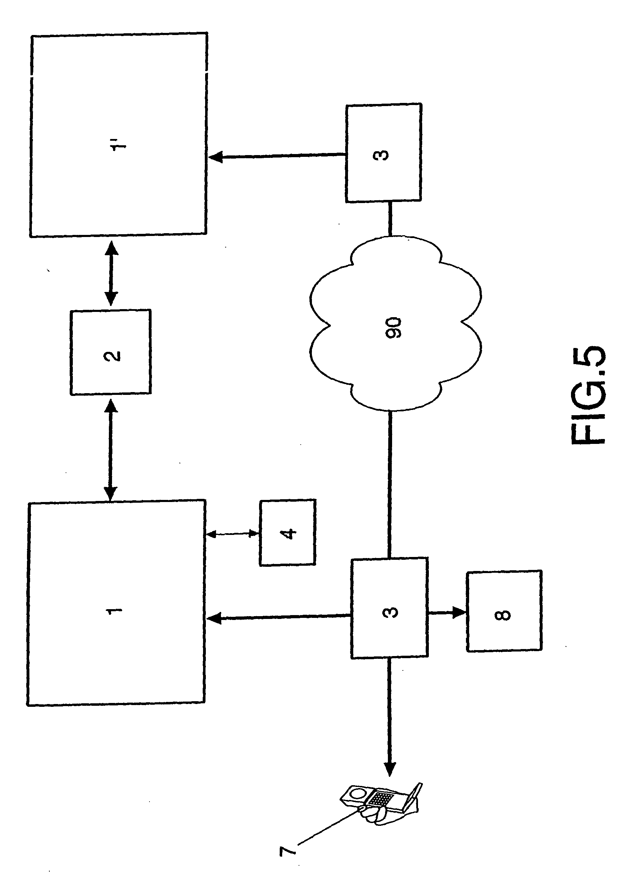

Thus, in the case wherein a payer makes a purchase overseas (figure 5), the beneficiary generates a transaction request wherein the identification of the payer includes one of the above-mentioned prefixes, so that said transaction request, indicating a cellular POS (8) reaches the telecommunications controller (10) of the payments and operations processor (1) to which the beneficiary is associated. Through the mobile telephone network thereof (3). Firstly, the validation of the beneficiary is carried out in the payments and operations processor to which it is associated, as has been explained previously, and the means of payment of the said beneficiary are introduced into the wallet processor (12). Next, the request is picked up by the operations processor (11) which generates a validation request and authentication of the associated payer, which is sent to the wallet processor (12), which, on accessing the fourth information of the first storing means, detects that the prefix is of a payer associated to another remote payments and operations processor (1'), and generates a routing message that is sent to the routing processor (18) consisting of a validation and authentication request of the remote payer together with the data on the means of payments admitted by the beneficiary, which also sends it, accessing the fourth storing means (19) and the international addressing processor (2). Lastly, and in the manner which will be discussed in greater detail further on, the message is routed from the international addressing processor (2) to the remote payments and operations processor (1') to which the payer is associated, where it is received in the wallet processor (12) whose identifying means (11a) detect that it is a remote validation and authentication request. After performing said validation in the manner already described, it generates a routing message that contains the results of the validation and the means of payment selected by the payer and sends it through the routing processor (18) of the remote payments and operations processor (1') and through the international addressing processor (2) to the payments and operations processor (1) to which the beneficiary is associated.

The wallet processor (12) of the payer carries out the validation thereof in the form already commented as well as performing the authentication as similarly described above. However, the difference is that the authentication request is sent from the remote payments and operations processor (1') to the mobile telephone network of the payer and is received by the payer in his or her mobile telephone (7) through one of the mobile telephone networks (3) of the country wherein the beneficiary resides. Accordingly said mobile telephone networks of the different countries of the beneficiary and the payer communicate with each other by means of a conventional international roaming gateway (90). The response introduced by the payer in his or her mobile telephone (7) is received by the mobile telephone network (3) to which he or she is associated through the international gateway (90) and from one of the mobile telephone networks (3) of the country wherein the beneficiary resides, sending the response to the remote payments and operations processor (1') to which the payer is associated, which generates a routing message that contains the results and sends it by means of the international addressing processor (2) to the payments and operations processor (1) to which the beneficiary is associated.

The operations processor (11) of the payments and operations processor to which the beneficiary is associated receives the results of the authentication and requests the transaction from the financial entities processor to which the beneficiary is associated. After receiving the results of the transaction, it generates a routing message that includes the said results of the transaction to send it to the remote payments and operations processor (1') to which the payer is associated, and from there, using roaming, route it to the mobile telephone (7) of the associated payer.

The results of the transaction are sent to the communications equipment of the associated beneficiary at the same time and in the manner already described.

For the case wherein the communications equipment of the associated beneficiary is a conventional POS (figure 5), the process is similar to that described for this case, but with the difference being that the validation of the beneficiary is carried out in the financial entities processor in the manner described in the previous case, which sends it, together with the means of payment, to the operations processor (11) of the payments and operations processor (1) to which the beneficiary is associated, and then generates a routing message that contains an authentication and validation request of an associated payer for the remote payments and operations processor (1'), launching the process indicated for the previous case but with the difference that the transaction results are sent to the conventional POS (9) from the financial entities processor to which the beneficiary is associated.

There is also the possibility that the payer be the one to request a transaction from a foreign beneficiary, introducing the data in his or her mobile telephone in conformity with the different modalities previously described for a payer and beneficiary within the same country, regardless of whether the payer is in his or her own country or in another country.

On this point, it should be noted that the third storing means (17) include second information of an identification of reference associated to remote payments and operations processors (1') to detect an identification of an associated reference for a remote payments and operations processor and generates a routing message to validate the reference in the payment and the operations processor to which it is associated.

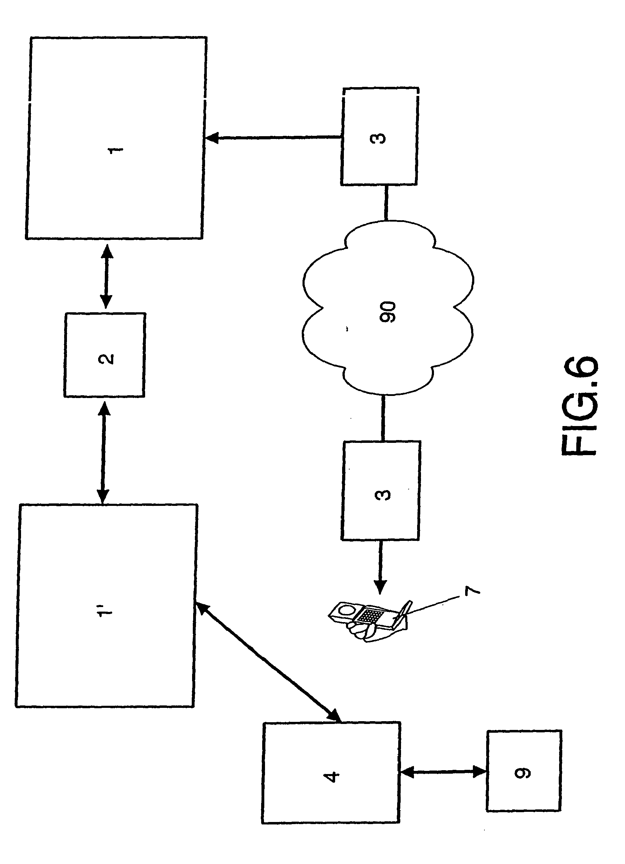

Accordingly, in the case wherein a payer is abroad (figure 6) and makes a purchase by reference, the transaction request is sent through one of the mobile telephone networks (3) of the country wherein the said payer is located through the international gateway to the mobile telephone network (3) to which the payer is associated. From there is sent to the remote payments and operations processor (1') to which the payer is associated, which validates the payer in the manner already described and upon detecting that the reference is associated to a payments and operations processor (1) it generates a routing message that includes a reference validation request, the reference and the validation of associated payer. This routing message, in the manner already described, is sent to the payments and operations processor (1) to which the beneficiary is associated, where the reference and associated beneficiary are validated and a routing message that includes and authentication request for the payer is generated, repeating the process described previously, that is, an authentication message is sent through the addressing processor (2) to the remote payments and operations processor (1') where the payer is authenticated. Communications are handled through the gateway (90) and one of the mobile telephone networks (3) of the country wherein the payer is temporarily located, receiving the authentication in the payments and operations processor (1) of the beneficiary upon receiving the authentication, with the transaction then being carried out in the manner already described and the transaction results being sent to the communications equipment of the associated beneficiary and to the mobile telephone (7) of the associated payer through the remote payments and operations processor (1') thereof, using the corresponding mobile telephone network, international gateway (90) and one of the mobile telephone networks of the country wherein the said payer is temporarily located.

For the case wherein the payer introduces a reference corresponding to an associated beneficiary of a remote payments and operations processor, through his or her mobile telephone within his or her own country, the process is identical to the previous one with the only difference being that the communication with the payments and operations processor of the payer (1') is carried out directly through the habitual mobile telephone network and not through a conventional international gateway (90) nor with the participation of other mobile telephone networks in other countries.

To carry out international transactions, the system of the invention calls for both the first storing means (13) and the second storing means (15) to include identification information on the language of the associated payers and beneficiaries so that the transactions and corresponding data in messages are carried out in the language corresponding to each associated beneficiary and payer.

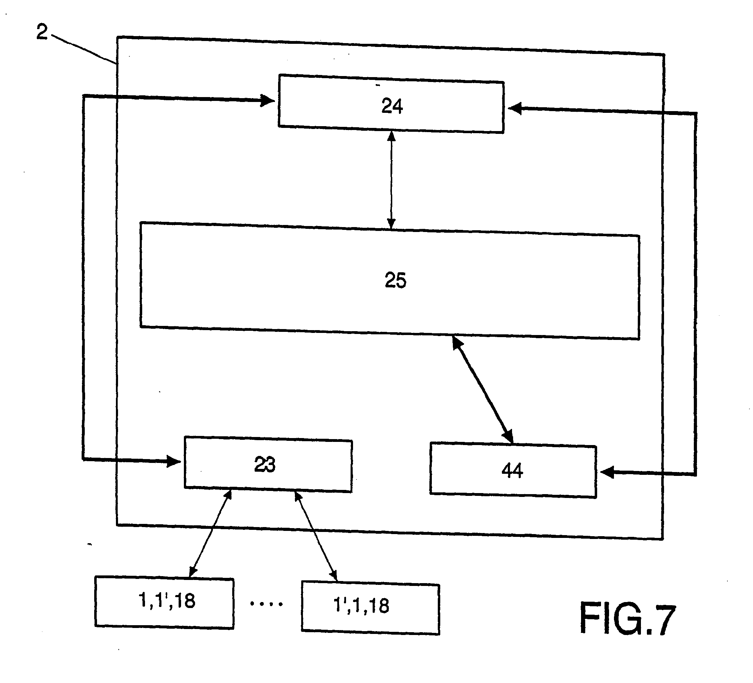

For the international addressing processor (2) (figure 7) to carry out all of the functions commented above, it includes an access controller (23) that is connected to a plurality of routing processors (18) of different payment and operation processors (1, 1') to allow for communications among them. In addition the access controller (23) governed by means of a routing manager (24) that accesses fifth storing means (25) which include, at least, the first identification information on the international identification and prefixes of a payer of associated to a remote payments and operations processor, second information on references associated to payers associated to remote payments and operations processors, and third information identifying the route to follow, to, upon receiving a routing message, access the fifth storing means and determine the route to follow to send and receive the routing messages as had been described for the previous cases.

The addressing processor (2) includes a management module (44) wherein all of the operations carried out are stored.

Regarding the routing processors (18), it should be noted that these may be connected to a plurality of international routing processors (2) so that on receiving a routing message they access the fourth storing means (19) and identify the addressing processor to which they should address the routing message.

In addition, the routing processor (18) is connected to the communications equipment of a systems operator to allow for additions, deletions and modifications of the routes so that the system remains versatile and allows for all of the different communications between the various payments and operations processors (1, 1').

Next, we describe the different telecommunication and controller means (10) that comprise the payments and operations processor (1) to allow for the realization of communications with the different types of mobile telephones (7) and communications equipment (8, 8a, 8b, 22) of the different technologies of mobile telephone network, such as GSM networks, TDMA (Time Division Access) networks and CDMA (Code Division Access) networks.

The detection of the technology of each mobile telephone by the payments and operations processor (1) is explained further on. Following said detection, the appropriate telecommunications controller is selected, as it is also explained further on.

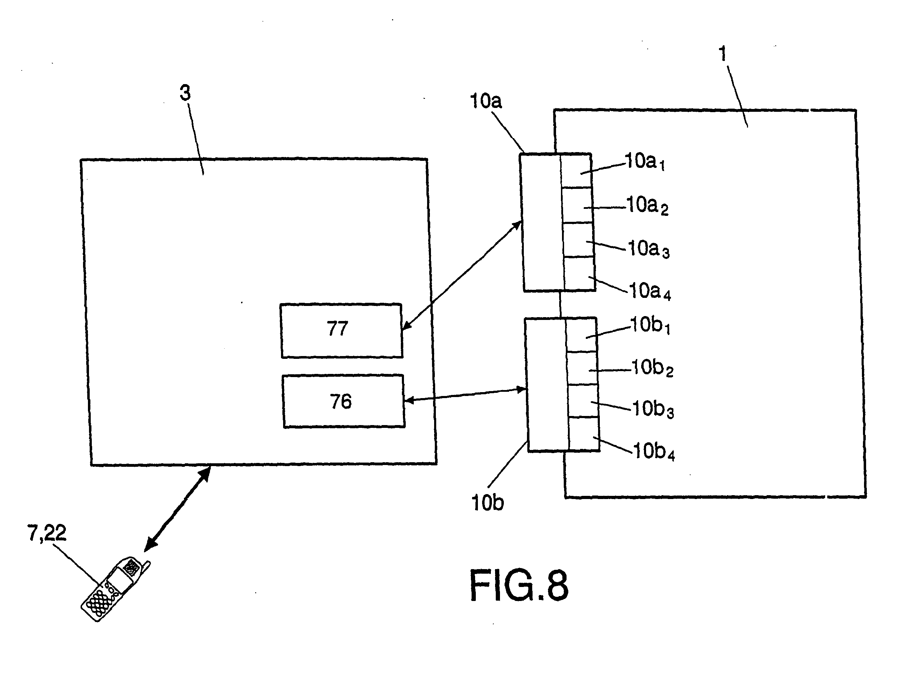

When the mobile telephone initiates the operation, it is the telephone network which recognizes the technology of the terminal or mobile telephone in a conventional manner and communicates with the appropriate telecommunications means controller. As per that shown on figure 8, we describe the case of the communication being carried out through a GSM mobile telephone network (Global System Mobile) between the payments and operations processor (1) and the mobile telephone (7) of an associated payer, and with the communications equipment of an associated beneficiary comprised of a cellular POS (8) or a mobile telephone as a POS (22) whereby the controller (10) includes a USSD controller (10a) (Unstructured Supplementary Service Data) and an SMS controller (Short Message Service) (10b) to select one of said controllers, 10a or 10b, depending on the technology of the mobile telephone (7) or of the mobile telephone as a POS (22); hereinafter we will refer to both 7, 22 as mobile telephones to simplify the description.

The different technologies that can be used by the different mobile telephones 7, 22 in a GSM network consist primarily of their being enabled for USSD MAP (Mobile Application Part) version 1, or version 2, (as described in European patent number EP-00202720), so that if the mobile telephone is USSD version 2 enabled, the USSD controller 10a is selected for sending the USSD stacks from the payments and operations processor (1) to the mobile equipment, such as, for example, in authentication requests and transmission of transaction results.

In the case of the mobile telephone being enabled for USSD version 1, the requests from the payment operations processor to the mobile telephone are carried out through the SMS controller 10b to send a class 0 short message that is displayed on the screen. Next, the MAP version 1 enabled telephone initiates the USSD session and the dialogues are established between the user-payer in the wallet processor of the payments and operations processor and are carried out through said session.

The USSD controller 10a communicates with the USSD Center (77) of the mobile telephone network (3) and the SMS controller (10b) communicates with the SMS Center (76) of said mobile telephone network (3) to achieve the previously described options. The structure of the mobile telephone network is not described in greater detail in that it is not an object of the invention and is very well known in the prior state of the art.

To carry out these communications, the USSD controller (10a) is equipped with at least the first storing means (10a1) which include information on the functioning of the payments and operations processor (1) and a protocol translator (10a2) that converts the USSD stacks into the common protocol used internally by all of the payments and operations processors (1), which in the example of the realization, refers to one of the current standard protocols existing in the prior state-of-the-art, for example, XML messages (Extensible Mark up Language) and vice versa. This information allows for the detection of to whom the information received will be directed through the network (3), specifically, the operations processor (11) or the wallet processor (12).

In addition, the USSD controller (10a) is equipped with a switching module (10a3) that accesses the second storing means (10a4) which includes information on the route to follow based on the information received for sending them to the operations processor (11) or the wallet processor (12).

This configuration allows for when a USSD stacks is sent to the payments and operations processor (1) which contains information referring to, for example, an authentication response, or a transaction request, the USSD controller analyzes the stack and bundles it with the internal protocol message that it delivers to the switching module and (10a₃) which, with the help of the second storing means, determines the route to follow to send it to the operations processor (11) or to the wallet processor (12) depending on the message received.

In the case wherein the mobile telephone technology used is USSD MAP version 2, all communications are carried out through the USSD controller (10a), unlike the case of USSD MAP version 1 enabled telephones which send USSD stacks received from the USSD controller (10a), when communications are initiated in the mobile telephone. In the cases wherein the payments and operations processor (1) initiates the communication with the mobile telephone, for example to send an authentication request, it uses short message class 0 as had been described above.

Regarding cellular POS's (8) which represent the equipment of the beneficiary, it should be noted that these are comprised always of a POS with a USSD MAP version 2 enabled mobile terminal, and, accordingly, communications are always carried out through the USSD controller (10a).

Regarding mobile telephones as a POS with USSD network menus, we describe below the communications of a mobile telephone as a POS with the payments and operations processor.

The following is in a step by step breakdown of the exchange of messages:

The beneficiary initiates a USSD session from its mobile telephone, introducing a sequence that indicates a transaction request. Through the operations processor, which maintains the context of the transaction, this request reaches the administration processor (92) of the merchant processor, which verifies the data of the beneficiary. If the beneficiary is validated, the operations processor sends a menu of the available transactions to the mobile equipment of the beneficiary (purchase, return, consultation).

The beneficiary introduces the relevant selection for the desired transaction. Assuming that the beneficiary introduces the purchase option, the operations processor requests that the beneficiary, within the USSD session, introduce the amount of the purchase/sale. The beneficiary introduces the amount, and sends it to the payments and operations processor. The payments and operations processor, through the operations processor, requests that the beneficiary introduce the transaction currency for the purchase/sale. The beneficiary introduces the currency selection and sends it to the payments and operations processor. The payments and operations processor, through the operations processor, asks the beneficiary to introduce the payer identification. The beneficiary introduces the identifier of the mobile telephone of the payer. Next, so that the merchant authorizes the transaction, the operations processor will send, through the open USSD session, the request for the security parameter of the beneficiary. The beneficiary enters the security parameter and said information is delivered to the operations processor, which communicates with the authentication processor (93) of the merchant processor (14) to authenticate the merchant.

The payment operations processor, through the wallet processor, initiates, for example, a USSD session in the mobile telephone of the payer, displaying the information relating to the purchase/sale transaction. At this point, if the payer desires to complete the transaction with the default means of payment, he or she introduces the security parameter for said default means of payment. If another means of payment is desired, the said means of payment is selected by means of the associated security parameter, and this choice is sent to the payments and operations processor.

The wallet processor verifies the data of the user-payer.

If all of the data that is correct and the user-payer has been validated, the payments and operations processor, through the operations processor, handles the authorization of the transaction and sends, firstly, the confirmation of the transaction to the mobile telephone as a POS of the beneficiary. The payments and operations processor (1) through the wallet processor sends the confirmation of the transaction to the mobile telephone of the payer.

In either of the cases, the various communications over the GSM network include the authentication mechanisms for the mobile telephone and encryption of the communications that are conventionally used by the GSM network, and which are described in the European patent EP-00202720.9.

In addition, it includes security mechanisms based on IPSec which is also conventionally employed for communications between the USSD Center (77) and the USSD controller (10a), and between the SMS message Center (76) and the SMS controller (10b) and consists of a series of security protocols that allow for aggregating encryption and authentication to the IP communications (Internet protocol). Accordingly, this is not described in greater detail in that it is conventionally used.

Regarding the SMS controller (10b), it is equipped with first storing means (10b₁) with the information on the functioning of the payments and operations processor, a protocol translator (10b₂) which converts the SMS messages into the protocol used by the payments and operations processor (1) and vice versa, to detect whether the information received is sent to the operations processor (11) or the wallet processor (12).

In addition, the SMS controller (10b) is equipped with a switching module (10b₃) which accesses the second storing means (10b₄) to retrieve the routes to follow and send the information received to the operations processor (11) or to the wallet processor (12) depending on the routes established.

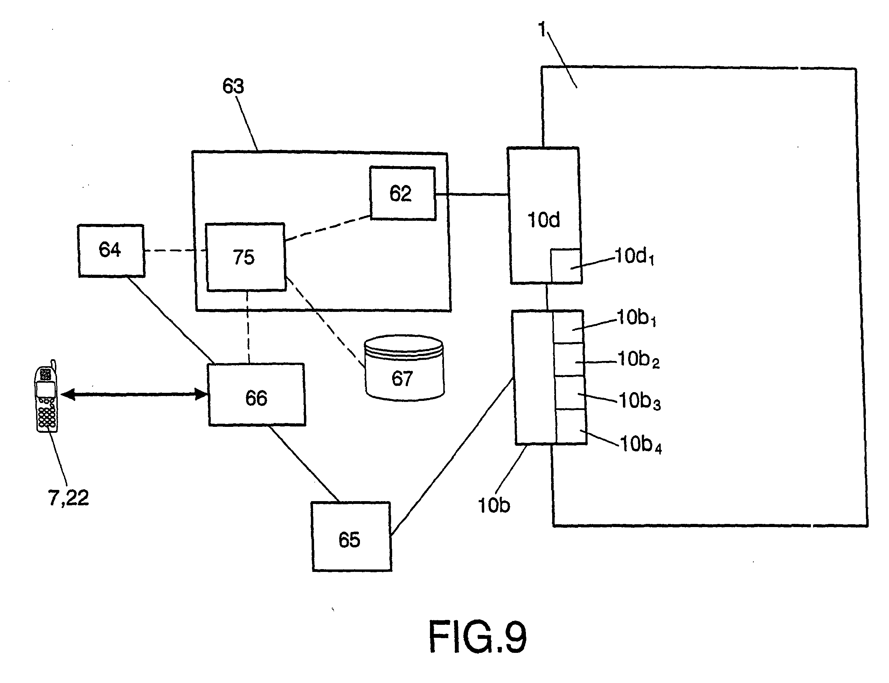

In the case wherein the network uses either the TDMA or CDMA technologies, ANSI version (American National Standards Institute) (41-E), the communications, in one example of the realization, will be carried out through an intelligent network (63) as detailed on figure 9.

In this case, the communication controller means (10) are equipped with an intelligent network controller (10d) and, optionally, may also use the SMS controller (10b) which was already described previously.

The intelligent network controller (10d) is equipped with a protocol translation means (10d₁) that converts the protocol used by the intelligent network to that protocol used by the payments and operations processor, and vice versa, in order for the payment operations processor to communicate with the Service Control Points (SCP) (62) which contain information on the functioning of the payments and operations processor.

The SCP (62) of the intelligent network (conventionally known) contains the architecture needed to carry out gateway functions for operations that move from the intelligent network (63) to the payments and operations processor (1) and vice versa. Accordingly, in a communication initiated from a mobile telephone (7, 22), such as a transaction request, said mobile equipment generates a trigger for the intelligent network from the mobile telephone of the user that is detected in the MSC (Mobile Switch Center) (66) of the intelligent network (63). In other words, a trigger is programmed in the MSC based on a call number to the payment operations processor. Upon detecting the trigger, it sends instructions to the HLR (Home Location Register) (67) of the network to obtain the call instructions. The parameters that the MSC (66) sends to the HLR (67) of the mobile telephone network indicate a call number and the digits of the number called. The HLR determines that it is a call to the payments and operations processor (1) that is located within a determined SCP (62). Immeanstely thereafter, the HLR (67) communicates with the SCP (62) sending the information relating to the payment operations processor (1) and, in response, the SCP (62) establishes communications with the intelligent network controller (10d), from which the information is sent to the operations processor (11) or to the wallet processor (12) depending on the operation to be carried out.

In the case of when a transaction request is issued from a cellular POS (8), the process is the same as for that described. However, in this case, the POS sends a trigger signal that contains the data relating to the buyer, product or service and the amount of the product or service.

The STP (Service Transport Point) (75) of the network carries out the switching for the communications among the different network elements described.

For the communications of the SCP (62) with the intelligent network controller (10d) the TCP/IP protocol is used with IPSec security.

In either of the two cases, the trigger to the intelligent network may include all of the data that the user requires to carry out the transaction, that is, the operation code, reference, means of payment and security parameter, which are introduced directly on initiating a transaction, and based on which the said trigger is generated, or, conversely, only part of the said data is introduced in the rest is requested to process the transaction.

Communications from a payments and operations processor (1) to a mobile telephone (7, 22) can take two different forms:
- Using the IVR capabilities (Interactive Voice Response) of the IP (intelligent peripheral) (64), which the network (63) conventionally includes. Accordingly, for example, an authentication request is sent from the intelligent network controller (10d) to the intelligent peripheral (64), which carries out the interactions through the MSC (66) with the user by means of pre-recorded voice messages stored in the IP (64), which correspond to each of the possible messages that can be sent.
- The other possibility is using the SMS controller (10b) in the manner already described, which communicates with a short message service center (65) which, through the MSC (66), sends the corresponding messages.

Communications from the intelligent network controller (10d) and the SMS controller (10b) are also carried out using the TCP/IP protocol with IPSec security. Communications over the intelligent network (63) use the same form as that for the GSM network, encryption and authentication mechanisms which are those that are conventionally use on CDMA/TDMA networks, but with the difference that in this case, as it is conventionally performed on the said networks, CAVE authentication centers are used (Cellular Authentication Voice Encryption).

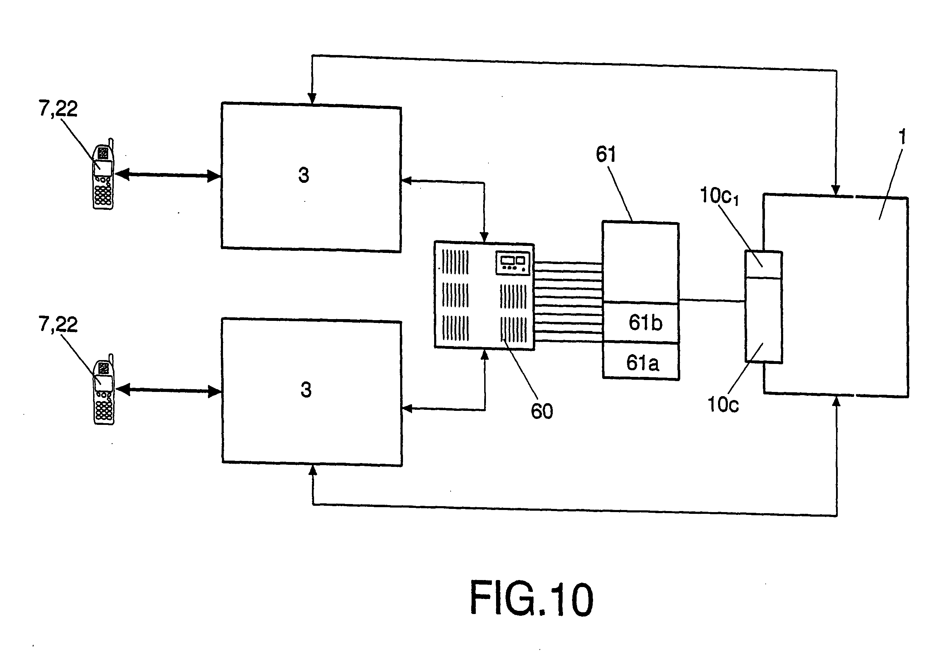

The invention allows for, regardless of the technology of the mobile telephone network, be it GSM, TDMA, or CDMA, carrying out communications from the payments and operations processor (1) to the mobile telephones (7) of the users-payers, with the cellular POS's (8) or mobile telephones (22) of the beneficiaries, by means of voice messaging. To this end, the payments and operations processor (1) is connected to an IVR device (Interactive Voice Response) (61) as can be seen on the attached figure 10. Moreover, the payments and operations processor (1) is equipped with an IVR controller (10c) through which the connection to the IVR (61) is carried out, and the communications therewith, as in the previous cases, use the TCP/IP protocol with IPSec security.

For this purpose, the IVR controller (10c) is equipped with a protocol translator (10c1) that carries out the translation of protocols between that used by the operations processor (11) and wallet processor (12), and that used by the IVR device (61).

This device may be used consistently in those cases wherein the mobile telephone (7, 22) and a cellular POS (8) are DMTF enabled (Dual Tone Multi-frequency) as is standard for the mobile telephones in the prior state of the art.
The IVR device (61) is of a conventional type and contains a connection interface (61b), based on the mentioned protocol, to allow for connection with the IVR controller (10c) . It further comprises the first storing means (61a) that contain the information on the functioning of the payments and operations processor (1).

In addition the IVR device (61) is connected to a. PABX (60) (Private Automated Branch Exchange) through which it carries out the generation and reception of the calls originating from the mobile telephone network (3), which, as was described earlier, can be of any type of technology. In this way, the PBX (60) handles the call setup signalling, with specific signalling for primary ISDN access (Integrated Services Digital Network), or any other type of communication link as may be used.

These communications between the IVR device (61) and the mobile telephone networks (3) operating by voice, one or more links are established between the IVR (61) and the MSC (not included in figure 10) of the mobile telephone network (3), which was commented on above.

In this way, the different messages are received through the pre-recorded voice statements of the IVR device (61), such as, for example, to request a means of payment, security parameter, telephone number to be recharged, etc., or to be notified of the results of a transaction. This is due to the fact that, in this case, it is also allowed to completely enter all of the data required for the transaction, or just partially introduce said data, so that the navigation is initiated by requesting information through the IVR on the data needed for the transaction that had been excluded.

In any of the above cases, to assure the authentication of the IVR when a call is made, either by a user-payer or by a beneficiary, the system incorporates security mechanisms that consist of providing an individualized call tone for this operation, as well as an individualized welcome message for each user-payer and beneficiary.

Below we have explained the voice menu for the case of an operation using a mobile phone as a POS using IVR.

The transaction is initiated from the mobile telephone of the beneficiary by means of introducing a specific chain calling a telephone number. The beneficiary launches the call and is connected to an IVR device. In this case, the dialogue is maintained through the telephone call where the beneficiary will listen to a series of voice instructions that will guide him through the transaction. The following is a step-by-step breakdown of the messages exchanged:

The beneficiary initiates a voice call from his or her mobile telephone, introducing a sequence that identifies the operation or by introducing the appropriate telephone number. This data is collected by the IVR and forwarded to the payments and operations processor (1). The operations processor, which is changed with maintaining the context of the transaction, sends a request to the merchant administration processor to verify the data of the beneficiary. If everything is correct, in order is given to the IVR device (61) to reproduce the welcome message for the beneficiary, together with the menu of available transactions (purchase-sale, returns, consultations). The beneficiary introduces the option corresponding to the desired transaction. In this case, the option may be chosen either by using a keypad or by voice. The IVR (61) recognizes this data and forwards it to the payments and operations processor. Immeanstely thereafter, the operations processor gives the order to the IVR to reproduce the voice instruction corresponding to a request to introduce the amount.

The beneficiary introduces the relevant amount for the transaction. The IVR recognizes this data and again forwards it to the payments and operations processor. The operations processor, in turn, issues a new order to the IVR to reproduce the voice instruction corresponding to a request to introduce the transaction currency. The beneficiary introduces the desired currency. The IVR collects this data and forwards it to the payments and operations processor which, as for the previous examples, gives the order through the operations processor to the IVR to instruct the beneficiary to introduce the payer identifier. The beneficiary introduces the identifier for the mobile telephone of the payer. The IVR recognizes this data and forwards it to the payments and operations processor. Thereafter, and for the beneficiary to authorize the transaction, the operations processor orders the IVR to instruct the beneficiary to introduce the security parameter corresponding thereto. The beneficiary introduces the security parameter using the keypad by DTMF tones. The IVR forwards this information to the payments and operations processor, and the operations processor then communicates with the merchant authentication processor (14) to authenticate the merchant (beneficiary).

In the next step, the wallet processor orders the IVR to initiate a telephone call to the mobile telephone of the payer and, in addition, to reproduce a voice message with the information of the purchase/sale transaction. Said information includes the identity of the merchant and the amount. The payer is then instructed to select a means of payment and to introduce the security parameter associated with the means of payment selected. The IVR recognizes this data and forwards it to the payments and operations processor. The wallet processor verifies the data received and, if everything is correct, the operations processor authorizes the operation and gives the order to the IVR to notify the beneficiary of the results of the transaction.

The wallet processor then gives the order to the IVR to notify the payer of the transaction results.

In addition, in this case, the system will also employ the security mechanisms available for the GSM, CDMA, and TDMA networks, as were described earlier in this document.

The mechanisms for the CDMA/TDMA networks can be summarized as:
- Basic authentication procedure based on ESN (Electronic Serial Number) and MIN (Mobile Identification Number) /IMSI (International Mobile Subscription Identity) for versions of the ANSI network "41" prior to version "c".
- Global authentication and registration procedures (Global Challenge/Base Stations Challenge and Unique Challenge Procedures). These procedures are based on the CAVE algorithm and a 128 bit key known as SSD (Shared Secret Data) that is generated locally on both sides (mobile telephone and network authentication center). The SSD is never transmitted over the network.
- Chipering procedure for the signaling channel. Signaling Message Encryption Procedure (SME) based on the CMEA algorithm for the voice channel: voice privacy procedure (VP) based on the CAVE algorithm, and last data channel; based on the ORYX algorithm.

The following section describes the technology detection process, mentioned above, used in the different communications mentioned with the user-payer and with the beneficiary or merchant depending on the technology of the network and of the mobile telephone.

This communication requires that the technology of the mobile telephone of a user-payer or of the beneficiary must be detected beforehand.

The payments and operations processor of the invention is equipped with a technology detecting processor (68) (figure 1) that carries out said detection. To this end, the first storing means (13) will include fifth information identifying the mobile telephone networks (3) and their technology, associated to each user-payer, and sixth information identifying the technology of the mobile telephone of each associated user-payer, associated with the telephone number thereof.

It should be noted that a mobile telephone can allow for different technologies. To this end, there will be a sixth layer of information indicating the different technologies supported by each mobile telephone of each associated user-payer.

This same circumstance also assists in the case of a cellular POS (8) and for mobile telephones used as a POS (22) by beneficiaries, that is, the second storing means (15) include third identification information on the mobile telephone network and the technology of each, associated to each associated beneficiary and to a fourth information identifying the technology associated to each communications equipment of each associated beneficiary.

In this regard, it should be noted that a parameterization operation may consist of changing the priorities of the different technologies of each mobile telephone as well as in selecting/changing the technology that is selected by default.

All of this information is associated to an expiration date to allow for updating, and also are related with the latest date on which they were updated.

Prior to communication, the operations processor (11) or the wallet processor (12) generates a technology detection request for the network and the mobile telephone associated with the telephone number with which it must communicate.

This request is received by the technology detecting processor (68) which performs the detection in three possible ways:
1. Real-time detection, which consists of: once the operations processor or the wallet processor have generated the technology detection request, they remain in a wait state until receiving the results of the request. In this negligible period of time, the technology detecting processor (68) consults with the data in the first storing means (13) or in the second storing means (15) depending on whether the request refers to the equipment of a user-payer or to a beneficiary, and checks the associated expiration date on the information obtained unless otherwise indicated by means of an entrance parameter. The technology detection module then directly returns the value of the data recovered regardless of the expiration. If the data is expired or it is so indicated by the entrance parameter, the technology detecting processor (68) sends by means of the telecommunications means controller (10e) a technology updating request for the specified telephone number to the mobile telephone network detected. To this end, the payments and operations processor (1) includes a communications controller (10e) that consists of and HTTP controller (10e) that communicates with the mobile telephone network to process the request.
   It important to note that conventionally a number is assigned by the mobile telephone manufacturers that unequivocally identifies the mobile telephone. This number, in the case of the GSM network, is known as the International Mobile Equipment Identifier, or, IMEI. In the case of the CDMA/TDMA networks it is known as the electronic serial number, or, ESN.
   This international identifier is associated to the technology of the mobile telephone and the capacities of each, such as, for example, it being WAP enabled (Wireless Application Protocol), STK enabled (SIM Application Toolkit), J2ME (Java 2 platform, micro edition) or BREW (Binary Runtime Environment For Wireless), all of which refers to smart mobile telephones, as well as their ability for USSD and SMS as mentioned earlier.
   In addition, the international identification number is stored in some nodes of the mobile telephone network, and it is related with the telephone number of the unit, so that the mobile telephone network technology detected for the number in question in available by accessing the said international number in accordance with the resources available on the network itself.
   For example, in the case of the GSM mobile telephone network, the way to obtain the IMEI number is the same as for that described in the European patent application number EP-00202720.9.
   Similarly, in the CDMA/TDMA networks, a similar process is performed to access those nodes in the network that contain the information associated with a pair MIN/ESN.
   The relationship between ESN/mobile telephone technologies must exist on the mobile operator table or in another delegated agency of the mobile operator (MO) . The MIN/technology pair is obtained from the matching of the two tables, and is the data used for the technology detection.
   Once the operator has detected the technology completely, it responds to the request generated by the technology detecting processor (68), which receives the response and immeanstely updates the information for the technology received in the first storing means (13) for the associated users-payers, or in the second storing means (15) for the associated beneficiaries, in accordance with the number queried.
2. For detection that is not in real time, the process is similar as to that for the above, but in this case the wallet processor (12) or the operations processor (11) generates the technology detection request and then continues with the operation being performed. Meanwhile, the technology detecting processor (68) sends the request message to the mobile telephone network and upon receiving the response, it communicates with the operations processor (11) or the wallet processor (12) and simultaneously updates the information in the manner already commented.
3. Lastly, there is also a possibility that the mobile telephone network implement the possibility of periodically sending updating messages, or in any other manner as may be implemented. In this case, the update is received by the technology detecting processor (68), which updates the data based on the expiration specified and then sends it to the mobile telephone network through the HTTP controller (10e) in a response message with the results of the updating performed.

It should also be noted that in any of the three cases described, the technology detection request may refer to one or more telephones to be verified, the data whereby must respectively updated to increase the performance of the system. In this case, the response from the mobile telephone network refers to the different telephone numbers queried.

It has been mentioned that the invention can also allow for carrying out delegated authorizations following a delegated authentication in the wallet processor (12). Accordingly, the payments and operations processor is equipped with a local authorizing center (69) which is connected to the operations processor by means of its communications controller (21) (figure 1). This was designed primarily to allow for micropayments, that is, payments of small amounts, so that the local authorizing center (69) will allow for the streamlining of the transaction process by reducing the processing costs and transaction times, which is especially useful in the case of micropayments. When the authorization is delegated, so is the authentication.

The delegated authentication is carried out in the wallet processor by means of the verification of the security parameter stored in the first storing means. Following the authentication, the delegated authorization is carried out in the local authorizing center.

Micropayments can be used in all of the different payment modalities described previously.

Prior to describing the functioning, it should be noted that it is necessary for at least the associated payer to be subscribed to at least one means of payment associated to a maximum purchase amount. This spending limit is reflected in the second information for the means of payments included in the first storing means (13) for each associated payer. To this end, the second identification information on the means of payment mentioned above is associated to a maximum spending limit. The wallet processor (12) generates a validation that includes indication of the existence of at least one means of payment associated to a spending limit, obtaining said means of payment together with the validation carried out on the associated payer. In addition, each means of payment associated to a spending limit is related with an identification of a local authorizing center (69) for the case of delegated authorizations.

Moreover, the merchants or beneficiaries may accept or refuse micropayments, with this information being included in the second information of the second storing means (15). On carrying out a validation operation on an associated beneficiary, as described above, the merchants processor (14) generates a validation message that includes the authorization profile of the merchants, which can be of three types, specifically: online authorization (does not allow delegated authorizations), off-line authorization (only allows delegated authorizations and transactions of less than a specified amount), or mixed off-line and online authorization (allows for delegated authorizations based on whether the transaction amount is above or below a specified limit).

When it is detected in the transaction request originates with the mobile telephone of an associated payer (7) or with the communications equipment of an associated beneficiary comprising a cellular POS (8) or a mobile telephone as a POS (22), and if the results of the validation of the payer and the beneficiary indicate that the payer has at least one means of payment associated with a maximum spending limit, and the authorization profile of the beneficiary is off-line, and if the transaction amount is less than the maximum associated to the said beneficiary, an authentication message is then generated that includes the matching of the means of payments admitted by the beneficiary and the means of payments of the payer which are associated to a maximum amount. Upon receiving the authentication message, it detects the means of payment associated to the maximum amount and generates a delegated authentication and authorization, obtaining the identification of the local authorizing center (69) based on the identification of the means of payment selected. In this way, the operations processor (11) generates an authorization and authentication request with the authentication being carried out in the wallet processor and the authorization request being sent to the local authorizing center (69) through the communications controller (21).

The local authorizing center (69) carries out the authorization in a manner as will be described below and sends the results to the operations processor (11) as well as storing the different transactions carried out in the seventh storing means (71) and storing the identification of the beneficiary and the acquiring financial entities processor and the transaction data, with said information being passed on to the local authorization center (69) in the authentication and authorization request. In addition, the local authorizing center is equipped with a batch processor (70) which on a regular basis, for example daily, sends the various transactions to the financial entities processors (4) (including both the acquiring processors to which the beneficiaries are associated, as well as the issuing processors to which the payers means of payments are associated) through the communications controller (21). The said financial entities processors perform the credits to the account of the beneficiaries and the debits to the accounts of the payers through the conventional financial network.

In the event that the merchant has an off-line authorization profile and the transaction amount exceeds the limit established in said profile, a rejection message is generated refusing the transaction and terminating the operation.

In the event that different transactions are carried out in a same means of payment with a maximum spending limit, an authentication is performed (verification of the security parameter in the manner already described), and then the delegated authorization is executed, whereby, in this case, the local authorizing center (69) is equipped with the means to subtract the transaction amounts from the total authorized spending limit over a specified period of time. In this manner, each transaction results in the net available balance being generated so that if any individual transaction resulting in the said balance exceeding the maximum available limit, results in the generation of a rejection message refusing the operation and terminating the transaction. Otherwise, the results of the authorization are sent and stored for the different transactions as indicated.

Moreover, to perform all of these functions, the local authorizing center (69) includes first storing means (69a) of the second identification information on the means of payment associated to each associated payer and related with a maximum spending limit, first identification information on each associated beneficiary that is associated to a maximum amount, to be able to receive a delegated authentication and authorization request message and perform a delegated authentication and authorization, in addition to the available balance described above. This balance is cleared, re-establishing the maximum, in the manner dictated by the issuing financial institution for the means of payment, which can be performed by means of the dumping of the transactions in the financial entities processors as described further on.

In the case that the merchant has an online authorization profile, the authorizations are performed in the financial entities processors in the manner described previously.

The third modality is intermeanste, a mixed off-line and online authorization profile, wherein the authorization may be delegated or performed by a financial entities processor depending on the amount of the transaction. Specifically, if the transaction amount exceeds the maximum limit associated with the beneficiary, a message is generated to carry out the authentication in accordance with the type thereof associated with the means of payment in the authorization in the financial entities processors, and if the amount of the transaction is less than said limit, a delegated authorization authentication request is generated and carried out in the manner already commented.

As has been commented on above, the mobile telephones (7) of the associated users-payers may be of any type including WAP, STK, J2ME and/or BREW, and can therefore include the ability to store the information corresponding to each application (WAP, STK, J2ME and/or BREW) and, accordingly, these applications may be able to implement different functionalities or applications that allow for the simplification of the different modes of functioning described herein.

For example, said storing means may, optionally, include the means of payments associated to the users-payers (5). Wherein case, it would be the mobile telephone (7) that identifies the common means of payments between the beneficiary and the payer. In this case the authentication message contains only the means of payment of the associated beneficiary and the request to introduce the security parameter. There is also the option that the verification be carried out by the mobile telephone of the payer (7), wherein case the authentication is performed based on an encrypted sequence that indirectly represents the security parameter, as will be described below.

In this case, it is necessary that when the payer subscribes to a means of payment, the financial entities processor (4) to which it belongs generates an encrypted algorithm associated to an activation key, a random parameter (challenge) and an assigned key, so that this data is sent over a secure connection, outside of the system of the invention, to the mobile telephone wherein it is stored. In this way the activation key generates a request to the payer to introduce a security parameter, which after being introduced is stored on the mobile telephone and the said parameter is thereby validated and only the user payer is aware of the said key.

This configuration allows for the possibility of, when the security parameter is requested, indicating that the payer introduced the sequence incorrectly, a random parameter is then encrypted with the key and an encrypted sequence is generated and sent in a response message to the authentication request message so that the encrypted sequence arrives at the financial entities processor of the payer which confirms that the said encrypted sequence corresponds to the integrated sequence that is stored in the said financial entities processor. If the two encrypted sequences coincide, the authentication is generated.

In the case of a delegated authentication, the algorithm and the activation key as well as the security parameter in the assigned key are stored in the first storing means (13) and the transaction is carried out in the manner described through the local authentication processor (12c).

In the case that the authentication is carried out in the financial entities processor of the payer, but, in this case, through the financial entities processor of the beneficiary, the encrypted sequence is sent by the mobile telephone of the payer, and is again encrypted by the communication controller means (21) upon receipt of the response message to the authentication request.

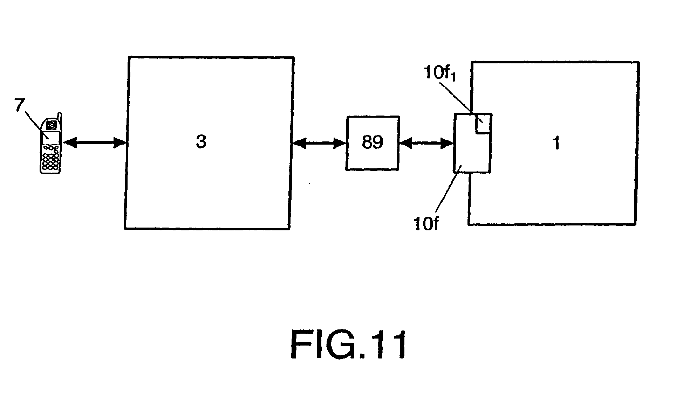

In the case that the payer has a WAP enabled telephone (figure 11) this function may be carried out using WAP protocol, as described below.

To this end, the telecommunication controller means (10) include a WAP Push controller (10f) that stores the conventional WAP applications to allow for communications of the payments and operations processor (1) through a WAP gateway (89) (WAP Push proxy gateway) with the mobile telephone (7) of the associated payer by means of the conventionally used WAP protocols. The protocol used between the WAP Push controller (10f) and the WAP gateway (89), which acts as a gateway, is the PAP (Push Access Protocol). The protocol used for communications between the mobile telephone (7) and the mobile telephone network (3) is known as the Push over the Air Protocol.

In this regard, it is important to note that the mobile telephone network may be of the technologies CDMA, TDMA, GSM, as well as 2.5G, 3G, GPRS, EDGE (Enhanced Data GSM Evolution), CDMA One, UMTS (Universal mobile telecommunications system), and CDMA 2000, etc., in that the WAP protocols are independent of the carrier used by the mobile telephone network (3).

This allows for including in the WAP protocol messages the functioning of the payments and operations processor (1) written in WML (Wireless Mark-up Language), and includes the appropriate storing means (10fl) wherein to store said information and the different messages to be sent written in WML.

Accordingly, when a payments and operations processor wants to send a message to a mobile telephone (7), the wallet processor informs the WAP controller (10f), having previously verified that the telephone is WAP enabled via the technology detection of processor (68) in the form described previously.

Immeanstely following, the WAP processor generates a PUSH request (the request that is conventionally sent using the WAP protocols when wanting to send information to one or more mobile telephones).

This request includes the content sent to the mobile telephone, for example, the operation authorization request, and request for the introduction of the security parameter. This content is programmed in WML using the elements p (conventional) to indicate that phrases should be displayed on the screen of the mobile telephone of the payer, and using the element input (conventional) to allow for the introduction of the security parameter. Additionally, the language WML Script may be used to verify whether in the same mobile telephone that the security parameter was introduced, has a valid format and thereby avoid transmitting incorrect chains over the network.

Once communication is established with the terminal or mobile telephone, the results are sent very simply, by means of a WML page that is sent to the mobile telephone once the transaction is complete.

Conversely, when it is the payer that generates a transaction request, accessing a specific WAP address assigned to the payments and operations processor (1). This address is viewed on the screen of the mobile telephone as a WML page with a menu of the various available operations that can be carried out within the system. Using the conventional elements p, select, and option, the payer selects the desired option introducing his or her security parameter, if needed, and the information requested that is subsequently displayed as a WML page.

In this case, to carry out the individualization of the authentication process explained above, standard security protocols of the WAP stack are used, such as WTLS (Wireless Transport Layer Security) which is a protocol based on the SSL (Secure Sockets Layer) standard used in the Web environment to provide security for data transfers. It allows for cryptography and PKI (Public Key Infrastructure). This protocol contains services to establish the authenticity of the mobile telephone and of the WAP controller (10f). If the application requires greater restrictions such as certificates with a public Key or digital signatures, another security mechanism should be employed (WIM or WPKI), which are supported by this layer.

Below we describe the STK technology, wherein the mobile telephone of the user-payer will have the "specific application for payments based on the SIM Toolkit". This application will be stored in the SIM card of the mobile telephone of the payer.

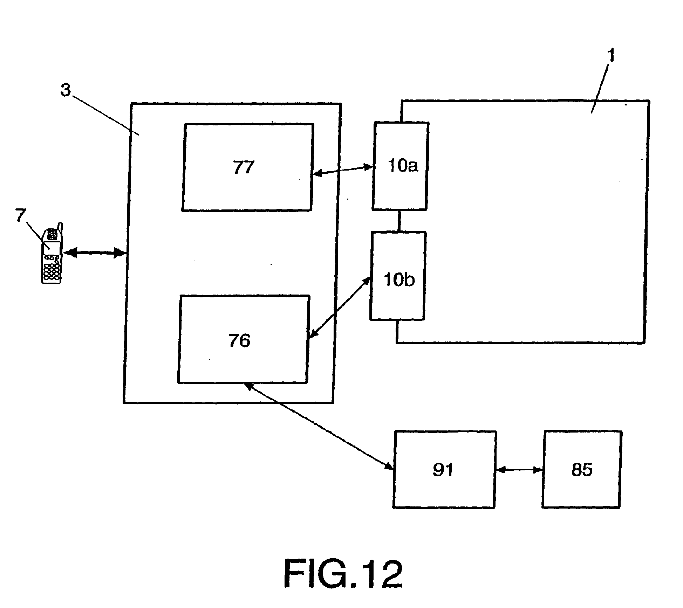

The application is downloaded to the telephone from an STK application server (85) through a SMS message center (76) using an OTA interface (91) (Over the Air), as it is seen on figure 12. The STK application server (85) can communicate with the SIM card of the user not only to carry out the download of the STK based user payment application, but also for making modifications and updating the application remotely.

In the case that the mobile telephone (7) of the user payer is STK enabled (SIM Toolkit) (figure 12), the controller that participates in activating this application is limited to the SMS controller (10b), given that the STK application is only applicable to the GSM network.

In this type of mobile telephone, the short message application is associated in a conventional manner by means of the mechanisms established for STK applications.

The STK application that is sent to the mobile telephone contains menus referring to the functioning of the payments and operations processor and is stored on the STK enabled mobile telephone.

In this case, said application, if needed, can store the means of payment of the associated payer to establish the common means of payments between the payer and the beneficiary as was commented on earlier. In such an event, this data is recognized by the payments and operations processor by means of the technology detecting processor (68) which accesses the first storing means (13) and the sixth information thereon, which is associated to the type mobile telephone and the different operating functions thereof.

The STK application includes menus offering the different available operations that can be carried out using the system of the invention, for example, a purchase by reference, payment between individuals, consultations, balances, etc. as has been described herein. Accordingly, when the payer wants to make a transaction request, the appropriate choices are made on said menu, which calls up a new menu requesting the information needed to carry out the selected transaction. Obviously, both menus are stored locally within the STK application on the mobile telephone of the payer.

The menu of the STK application has a tree structure. When the payer selects the payment option by means of the payments and operations processor, the SIM Toolkit application communicates with the mobile telephone of the payer using the commands existing in the prior state of the art therefor, which, conventionally, are the proactive commands of the SIM Toolkit application. The mobile telephone communicates with the STK application using the commands existing in the prior state-of-the-art for the telephone, such as terminal profile, fetch, and terminal response.

Specifically, the most commonly used proactive commands used by the STK application, inter alia, are:

"Set up Menu": the user-payer selects this parameter of the STK payment application to activate the application resident in the memory of the telephone.

"Select Item" this proactive command allows the user-payer to select the option desired, be it a payment transaction, consultation or modifications to the electronic wallet. Once an item is selected, for example "consultation" the STK application displays a menu on the screen of the telephone of the user payer with the available choices, including balance inquiries for a specific means of payment, or any other of the operations described herein.

"Display Text" this proactive command of the STK application displays information on the screen of the telephone of the user-payer, such as, introduction of a reference, request means of payment, selection of a telephone number to be recharged, selection of PIN. In this regards, it should be noted that the STK application hides the numbers keyed in by the user payer so that they cannot be seen by third parties.

"Get Input" this proactive command of the STK application collects the data introduced by the user and stores it, such as the selected means of payment, the PIN introduced, the reference, the mobile telephone to be recharged, etc.

"Get Inkey" with this proactive command, the application collects a selection associated to a number so that when the command "Display Text" of the STK application presents information associated to a number, the selection keyed in by the user is saved by the application, such as, for example, the selected means of payment.

The STK application of the mobile telephone of the client writes an SMS message with the information keyed in by the user.

Accordingly, for example, if a purchase by reference has been selected, the menu would prompt the payer to introduce the reference and the STK application of the mobile telephone of the user-payer would encapsulate the information introduced, generating an SMS message that includes the number of the SMS center (76) to which the payments and operations processor is associated, as well as the code for the type of operation, which in this case would be a purchase by reference, aw well as the reference itself, which is sent to the payment and operations center through the SMS center (76). The payment and operations center carries out the validation processes of the user-payer, of the reference, and of the beneficiary associated to the reference introduced, all of which is carried out in the manner commented on previously. The wallet processor communicates with the SMS controller (10b) of the payments and operations processor associated to the transaction, which generates a new SMS message that it sends to the SMS short message center (76) so that this center, in turn, can communicate with the STK application of the mobile telephone of the payer. Upon receipt of said message, which contains the authentication request, the application activates the processes for the selection of the means of payment and for the introduction of the security parameter using the proactive commands established for said purpose. Once the user-payer introduces the required parameters, the STK application of the mobile telephone of the user-payer again generates a message with the information introduced on the means of payment and the security parameter, which is sent to the SMS controller of the payments and operations processor (1) through the short message center (76). The controller (10b) routes said information to the wallet processor so that, depending on the authentication model, it authenticates the information in accordance with that set forth above. Next, once the transaction has been authorized in the corresponding authorization center, be it through the communications processors of the financial institutions, or delegated to the wallet processor, the operations processor handles the management of the transaction and communicates with the SMS controller (10b) of the payments and operations processor (1) so that the latter can issue a short message with notification of the results of the transaction by means of an SMS message.

In addition, the STK application can store different records in the memory of the SIM card of the mobile telephone of the users-payers as well as the mobile telephones of the POS's that are STK enabled. In this way, both the users-payers and the beneficiaries may consult said records on their telephones, locally carrying out consultations on such information as prior transactions.

For all of the rest of the transactions, the process of sending and receiving short messages is applied in the same way as for the case explained for a purchase by reference. It should be noted that in the current state of the art, SMS communications are half duplex, which means that the information travels only in one direction at a time and interactive sessions cannot be established between the payments and operations processor and the mobile telephone of the payer. Accordingly, each time the payments and operations processor has to communicate with the STK application of the user-payer, or vice versa, an SMS message would have to be sent.

In the process described for the authentication and encryption on a mobile telephone with an STK application, the messages that are issued and received between the mobile telephone and the payments and operations processor are encrypted using the conventional process 3DES (Triple Data Encryption Standard), which is not described in greater deal given that it is very well known in the prior state of the art and is not an object of the invention.

Below we will describe the STK technology in the case of the mobile telephone of the beneficiary will act as a mobile telephone POS with an STK application. The beneficiary will access the "specific mobile telephone as POS application based on the SIM Toolkit". This application will be loaded in the SIM card of the mobile telephone of the beneficiary.

The application is downloaded to the telephone through the SMS short message center by means of the OTA interface (Over the Air) (91) as illustrated on the figure 12. It should be noted that the STK application server can communicate with the SIM card of the beneficiary not only to carry out the download of the user payment application based on STK, but also to remotely carry out the modifications and updates to the application as may be needed.

Below we describe the SMS message process in the case of a purchase/sale through a mobile telephone as a POS (22) which is STK enabled. As for the previous cases, we do not describe the operations for the cases of consultations on transactions or returns given that the messages exchanged between the payments and operations processor and the mobile telephone of the beneficiary are the same.

By way of example, we will describe an on-site purchase using a mobile telephone as a POS that is STK enabled. Upon the beneficiary selecting the mobile telephone as a POS application, which is stored in the telephone (22), the proactive command of the STK application will display a menu with the available options (purchase/sale, returns, consultations, parameterization).

In this case, the beneficiary selects the option sale from the initial menu of the STK application, which then ask for the identification of the user-payer, which can be either a telephone number or the corresponding PAN code.

If the beneficiary introduces the identification of the user-payer, the STK application will then request that the amount of the transaction be introduced.

Once the amount of the sale is introduced, and before sending the SMS with the transaction data to the payments and operations processor, the STK application of the beneficiary requests the security parameter thereof. If the beneficiary introduces the security parameter, the SMS is sent in accordance with the protocol defined by the SMS telecommunications controller (10b) of the payments and operations processor. If the sending of the message is successful, the STK application will briefly display a message informing the beneficiary that the request has been sent. If there is any problem with the communication, a message will be displayed in forming the beneficiary that the request has not been sent.

Once the message has been sent successfully by the SMS application to the telecommunications controller of the payments and operations processor, the latter communicates with the operations processor so that it initiate the authentication process in the authentication module of the merchant processor (14).

Next, the operations processor (11) communicates with the wallet processor (12) so that the latter communicates with the user - payer to carryout the authentication process and the notification of the results, both of which have been described previously.

After carrying out the transaction, the operations processor sends, through the SMS of the communications controller, a notification message on the results of the transaction which contains the relevant information on the purchase.

The encryption of the STK interfaces of the user and the merchant are supported on the exchange of SMS messages between the telephone of the user-payer and the telephone as a POS. These messages must have an unencrypted heading for identification purposes, with the body of the message containing the transaction data which is encrypted from point to point.

The encryption used is 3DES with a symmetric key. This symmetric key is composed of two parts, one of which is stored in the SIM card of the mobile telephone of the user-payer, or the beneficiary, with the second being stored in the operations processor of the payments and operations processor. On the side of the STK application of the user-payer, the key is comprised of data related to the IMSI (International Mobile Subscriber Identity), the identification that is handled by the mobile network instead of the MSISDN (Mobile Subscriber Integrated Services Digital Network).

In the case of the beneficiary, the data related with its SIM card is a series of 16 keys that are loaded by means of a secure procedure in the SIM card of the telephone in an operation that forms part of the initialization and activation of the telephone as a POS. Of the 16 keys, only one will be active at any time, with the payments and operations processor being able, at its own discretion, to change which key is active at any given time, communicating the choice to the STK application of the mobile telephone as a POS in the field of any message sent for said purpose.

The other part of the symmetric key refers to the security parameter of the user and the security parameter of the beneficiary respectively.

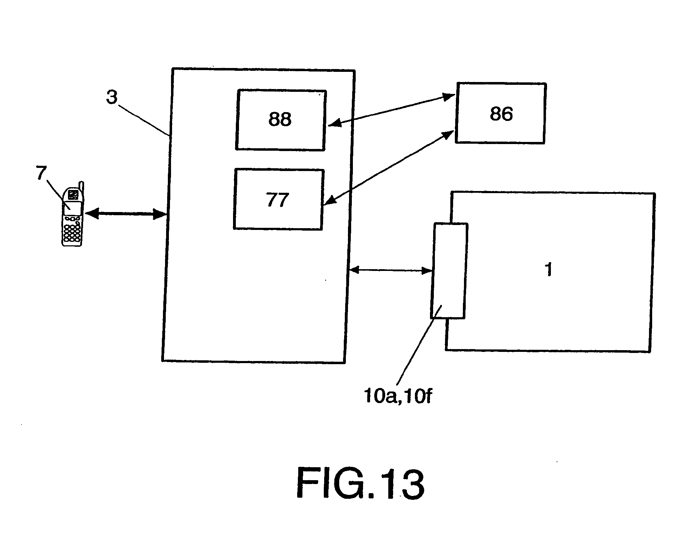

In the case of the mobile telephone (7) of a user-payer (5) is J2ME enabled (figure 13) allowing access to J2ME applications that reside on a J2ME content server (86) which includes the functioning of the payments and operations processor (1) according to the J2ME application, so that when a payer subscribes, the application is downloaded to the mobile telephone (7) of the payer.

There are three possible ways of downloading the application, as is conventionally applied for applications of this type, through a WAP gateway (88), a short message center (76), or by means of CBDD messages (Cell Broadcast Data Download). It is case, the mobile telephone network (3), which may also be of any type of technology, given that the J2ME applications can be executed over any mobile telephone carrier. To this end, the sixth information contained in the first storing means identifies the telecommunication means (10a-10f) to use for communications.

Once the user has installed the application corresponding to the functioning of the payments and operations processor, as in the previous case, the application displays the various menus for selecting options and introducing data as required for each operation.

Similarly, the J2ME applications can include the means the payment of the payer, and, accordingly, obtain and identify the common means the payment between said payer and the relevant beneficiary.

Regarding the authentication, it should be noted that in this case, the security requirements for the download process use J2ME APIs (Application Programming Interface) for the MIDP platform (Mobile Information Device Profile) as specified in java cryptography, such as, for example, "Bouncy Castle".

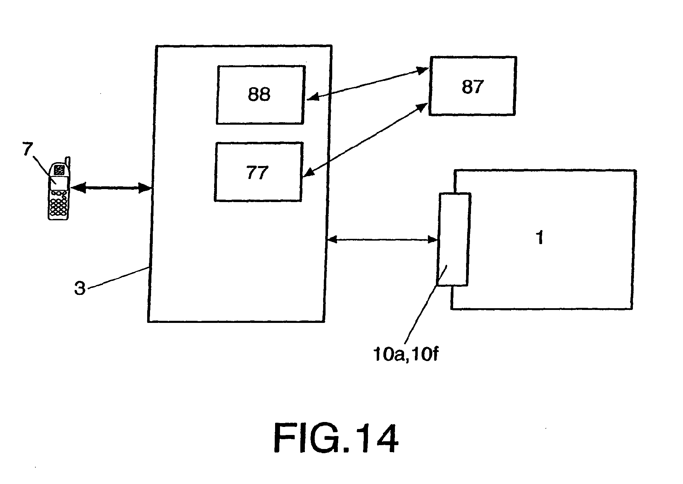

In the case of a BREW enabled mobile telephone, the process is the same as for the previous example, given that BREW is also carrier independent, but in this case the difference is that instead of using a J2ME content server (86), a BREW content server (87) is used (figure 14).

In this case the security is handled by using QIS (Qualcomm Internet Services) which allows for secure testing, authentication and downloads. These applications carry a digital signature.

It should also be noted that, in addition, the invoicing and transactions management processor (45) stores the different operations carried out in the payments and operations processors (1,1') in order provide access to the operation history.

## Claims

1. A method for processing payments and transactions between a user-payer (5) and a beneficiary (6) utilizing a digital mobile telephone, wherein the user-payer (5) is subscribed at a remote payments and operations processor (1') of the payment and transaction system located in a first country and the beneficiary (6) is subscribed at a payments and operations processor (1) of the payment and transaction system located in a different, second country, the method comprising the steps of:
receiving a transaction request at a telecommunication controller (10) of the payments and operations processor (1) associated to the beneficiary (6), wherein the transaction request comprises identification data of the user-payer (5) and identification data of the beneficiary (6), and passing the transaction request to an operations processor (11) of the payments and operations processor (1),
generating, by the operations processor (11) of the payments and operations processor (1), a beneficiary validation request comprising the identification data of the beneficiary (6) and transmitting the beneficiary validation request to a merchant processor (14) of the payments and operations processor (1),
validating, by the merchant processor (14) of the payments and operations processor (1), the identification data of the beneficiary (6),
generating, at the merchant processor (14) of the payments and operations processor (1), a beneficiary validation message comprising information identifying the respective means of payments admitted by the beneficiary (6) and a respective identification of a financial entities processor (4) of the beneficiary (6) associated to the respective means of payment,
transmitting the beneficiary validation message from the merchant processor (14) to a wallet processor (12) of the payments and operations processor (1),
generating, at the operations processor (11) of the payments and operations processor (1), a user-payer validation request comprising the identification data of the user-payer (6) and transmitting the user-payer validation request to the wallet processor (12) of the payments and operations processor (1),
detecting, by the wallet processor (12) of the payments and operations processor (1) that the user-payer identified by the identification data in the user-payer validation request is associated to the remote payments and operations processor (1'),
generating, by the wallet processor (12) of the payments and operations processor (1), a routing message comprising a user-payer validation and authentication request and the respective means of payments admitted by the beneficiary (6),
transmitting, by the wallet processor (12) of the payments and operations processor (1), the routing message via an international addressing processor (2) to a remote wallet processor (12) of the remote payments and operations processor (1'), wherein the international addressing processor (2) is interconnecting the payments and operations processor (1) and the remote payments and operations processor (1'),
validating, by the remote wallet processor (12) of the remote payments and operations processor (1'), the identification data of the user-payer (5),
obtaining, by the remote wallet processor (12) of the remote payments and operations processor (1'), the respective means of payments admitted by the user-payer (5) and a respective identification of a financial entities processor (4) of the user-payer (5) associated to the respective means of payment of the user-payer (5),
determining, by the remote wallet processor (12) of the remote payments and operations processor (1'), means of payments common to the user-payer (5) and the beneficiary (6),
generating, by the remote wallet processor (12) of the remote payments and operations processor (1'), a user-payer authentication request comprising the means of payments common to the user-payer (5) and the beneficiary (6), a request to input a security parameter of the user-payer (5) for the selected means of payment, a request to select one of the means of payments common to the user-payer (5) and the beneficiary (6), and an identification of the beneficiary (6),
transmitting, by the remote wallet processor (12) of the remote payments and operations processor (1'), the user-payer authentication request to the mobile telephone (7) of the user-payer (5),
receiving, at the remote wallet processor (12) of the remote payments and operations processor (1'), a response to the user-payer authentication request from the mobile telephone (7) of the user-payer (5), wherein the response to the user-payer authentication request comprises a selected means of payment common to the user-payer (5) and the beneficiary (6) and the security parameter of the user-payer (5) for the selected means of payment,
authenticating the security parameter of the user-payer (5) for the selected means of payment in the response to the user-payer authentication request to authenticate the transaction request,
generating, by the remote wallet processor (12) of the remote payments and operations processor (1'), a routing message comprising the result of the user-payer validation and authentication request and the respective means of payments selected by the user-payer (5),
transmitting, by the remote wallet processor (12) of the remote payments and operations processor (1'), the routing message via the international addressing processor (2) to an operations processor (11) of the payments and operations processor (1),
forwarding, by the operations processor (11) of the payments and operations processor (1), the transaction request together with the result of the user-payer validation and authentication request to a financial entities processor (4) of the beneficiary (6) that is associated to the selected means of payment in the routing message received from the wallet processor (12) of the remote payments and operations processor (1'),
receiving, by the operations processor (11) of the payments and operations processor (1), a response to the transaction request including the results of the transaction performed by the financial entities processor (4) of the beneficiary (6) that is associated to the selected means of payment,
forwarding, by the operations processor (11) of the payments and operations processor (1), the response to the transaction request including the results of the transaction to the beneficiary (6),
forwarding, by the operation processor (11) of the payments and operations processor (1), another routing message comprising the response to the transaction request to the mobile telephone (7) of the user-payer (5).

2. The method according to claim 1, further comprising the step of selecting by the remote wallet processor (12) of the remote payments and operations processor (1'), a type of authentication to carry out of the following types of authentication:
- authentication of the user-payer (5) by a financial entities processor (4) associated to the user-payer (5),
- authentication of the user-payer (5) by a financial entities processor (4) associated to the user-payer (5) through a financial entities processor (4) associated to the beneficiary (6), and
- authentication of the user-payer (5) by a wallet processor (12) of a payments and operations processor (1, 1'),
wherein the selection of the type of authentication is based on the selected means of payment comprised in the response to the user-payer authentication request, the selected means of payment being associated to a corresponding type of authentication of the security parameter for the selected means of payment.

3. The method according to claim 2, wherein the selected type of authentication is the authentication of the user-payer (5) by a financial entities processor (4) associated to the user-payer (5), and the method further comprises the steps of:
providing, by the remote wallet processor (12) of the remote payments and operations processor (1'), the response to the user-payer authentication request including the security parameter of the user-payer (5) for the selected means of payment and an indication of the financial entities processor (4) of the user-payer (5) associated to the selected means of payment to a communications controller (21) of the remote payments and operations processor (1'),
encrypting, by the communications controller (21) of the remote payments and operations processor (1'), the security parameter of the user-payer (5) in the response to the user-payer authentication request,
sending, by the communications controller (21) of the remote payments and operations processor (1'), the response to the user-payer authentication request including the encrypted security parameter of the user-payer (5) to the indicated financial entities processor (4) of the user-payer (5) associated to the selected means of payment, and
receiving, by the operations processor (11) of the remote payments and operations processor (1'), a confirmation of the security parameter of the user-payer (5) from the financial entities processor (4) of the user-payer (5) associated to the selected means of payment.

4. The method according to claim 2, wherein the selected type of authentication is the authentication of the user-payer (5) by a financial entities processor (4) associated to the user-payer (5) through a financial entities processor (4) associated to the beneficiary (6), and the method further comprises the steps of:
providing the response to the user-payer authentication request including the security parameter of the user-payer (5) for the selected means of payment and an indication of the financial entities processor (4) of the beneficiary (6) associated to the selected means of payment to a communications controller (21) of the payments and operations processor (1),
encrypting, by the communications controller (21) of the payments and operations processor (1), the security parameter of the user-payer (5) in the response to the user-payer authentication request, and
sending, by the communications controller (21) of the payments and operations processor (1), the response to the user-payer authentication request including the encrypted security parameter of the user-payer (5) to the indicated financial entities processor (4) of the beneficiary (6) associated to the selected means of payment.

5. The method according to claim 2, wherein the selected type of authentication is the authentication of the user-payer (5) by a wallet processor (12) of a payments and operations processor (1, 1'), and the method further comprises the step of verifying, by the wallet processor (12) of the remote payments and operations processor (1'), the security parameter of the user-payer (5) for the selected means of payment received in the response to the user-payer authentication request.

6. The method according to one of claims 1 to 5, wherein the transaction request is received from the beneficiary (6) via a mobile communication network (3) in the first country.

7. The method according to one of claims 1 to 5, wherein the transaction request is received from the remote payments and operations processor (1').

8. The method according to claim 7, further comprising the steps of:
receiving, by the operations processor (11) of the remote payments and operations processor (1'), the transaction request, wherein the transaction request comprises a reference enabling the identification of the beneficiary (6),
providing, by the operations processor (11) of the remote payments and operations processor (1'), a reference validation request to a reference processor (16) of the remote payments and operations processor (1'), wherein the reference validation request includes the reference of the transaction request by the user-payer (5),
detecting, by the reference processor (16) of the remote payments and operations processor (1'), that the reference in the reference validation request is associated to the payments and operations processor (1),
generating, by the reference processor (16) of the remote payments and operations processor (1'), a routing message including the reference validation request comprising the reference, and a validation of the user-payer (5),
transmitting the routing message including the reference validation request, the reference and a validation of the user-payer (5) from the remote payments and operations processor (1') to a reference processor (16) of the payments and operations processor (1), and
validating, by the reference processor (16) of the of the payments and operations processor (1), the reference included in the reference validation request comprised in said routing message.

9. The method according to one of claims 1 to 8, wherein the transaction request relates to one of:
- a recharge service for the mobile telephone (7) of the user-payer (5),
- a service for content download to the mobile telephone (7) of the user-payer (5),
- a transaction between the user-payer (5) and a vending machine (a) as the beneficiary (6),
- a prepaid purchase or order between the user-payer (5) the beneficiary (6),
- a payment between two user-payers (5), wherein one of the user-payers is acting as the beneficiary (6),
- a purchase of the user-payer (5) via the Internet,
- a purchase of the user-payer (5) from a catalogue,
- a teleshopping service,
- a payment of an invoice of or delivery to the user-payer (5),
- a pay-per-view service delivered to the user payer (5).

10. The method according to one of claims 1 to 9, further comprising the step of:
detecting, by a technology detecting processor (68) of a payments and operations processor (1, 1'), the technology supported by the mobile telephone (7) of the user-payer (5) or a wireless point-of-sales equipment of the beneficiary (6) to enable the payments and operations processor (1, 1') to utilize the appropriate communication protocol for communication with the mobile telephone (7) of the user-payer (5) or the wireless point-of-sales equipment of the beneficiary (6), respectively.

11. A system for processing payments and transactions between a user-payer (5) and a beneficiary (6) utilizing a digital mobile telephone, wherein the user-payer (5) is subscribed at a remote payments and operations processor (1') of the payment and transaction system located in a first country and the beneficiary (6) is subscribed at a payments and operations processor (1) of the payment and transaction system located in a different, second country, the system comprising:
the payments and operations processor (1) associated to the beneficiary (6) comprising:
- a telecommunication controller (10) for receiving a transaction request from the beneficiary via a mobile communication network (3), wherein the transaction request comprises identification data of the user-payer (5) and identification data of the beneficiary (6), and for passing the transaction request to an operations processor (11) of the payments and operations processor (1),
- the operations processor (11) for generating a beneficiary validation request comprising the identification data of the beneficiary (6) and for transmitting the beneficiary validation request to a merchant processor (14) of the payments and operations processor (1),
- the merchant processor (14) for validating the identification data of the beneficiary (6), wherein the merchant processor is adapted to generate a beneficiary validation message comprising information identifying the respective means of payments admitted by the beneficiary (6) and a respective identification of a financial entities processor (4) of the beneficiary (6) associated to the respective means of payment, and wherein the merchant processor (14) is further adapted to transmit the beneficiary validation message to a wallet processor (12) of the payments and operations processor (1),
wherein the operations processor (11) of the payments and operations processor (1) is adapted to:
- generate a user-payer validation request comprising the identification data of the user-payer (6), and
- transmit the user-payer validation request to the wallet processor (12) of the payments and operations processor (1), and
wherein the payments and operations processor (1) further comprises:
- the wallet processor (12) for detecting that the user-payer (5) identified by the identification data in the user-payer validation request is associated to the remote payments and operations processor (1'),
wherein the wallet processor (12) of the payments and operations processor (1) is adapted to:
- generate a routing message comprising a user-payer validation and authentication request and the respective means of payments admitted by the beneficiary (6), and
- transmit the routing message via an international addressing processor (2) of the system to a remote wallet processor (12) of the remote payments and operations processor (1'), wherein the international addressing processor (2) is adapted to interconnect the payments and operations processor (1) and the remote payments and operations processor (1'), and
wherein the system further comprises the remote payments and operations processor (1'), the remote payments and operations processor (1') comprising:
- the remote wallet processor (12) for validating the identification data of the user-payer (5),
wherein the remote wallet processor (12) of the remote payments and operations processor (1') is adapted to:
- obtain the respective means of payments admitted by the user-payer (5) and a respective identification of a financial entities processor (4) of the user-payer (5) associated to the respective means of payment of the user-payer (5),
- determine means of payments common to the user-payer (5) and the beneficiary (6),
- generate a user-payer authentication request comprising the means of payments common to the user-payer (5) and the beneficiary (6), a request to input a security parameter of the user-payer (5) for the selected means of payment, a request to select one of the means of payments common to the user-payer (5) and the beneficiary (6), and an identification of the beneficiary (6),
- transmit the user-payer authentication request to the mobile telephone (7) of the user-payer (5), and
- receive a response to the user-payer authentication request from the mobile telephone (7) of the user-payer (5), wherein the response to the user-payer authentication request comprises a selected means of payment common to the user-payer (5) and the beneficiary (6) and the security parameter of the user-payer (5) for the selected means of payment,
wherein the system is adapted to authenticate the security parameter in the response to the user-payer authentication request to authenticate the transaction request, and
wherein the remote wallet processor (12) of the remote payments and operations processor (1') is further adapted to:
- generate a routing message comprising the result of the user-payer validation and authentication request and the respective means of payments selected by the user-payer (5), and
- transmit the routing message via the international addressing processor (2) to a wallet processor (12) of the payments and operations processor (1), and
wherein the operations processor (11) of the payments and operations processor (1) is adapted to:
- forward the transaction request together with the result of the user-payer validation and authentication request to a financial entities processor (4) of the beneficiary (6) that is associated to the selected means of payment in the routing message received from the wallet processor (12) of the remote payments and operations processor (1'),
- receive a response to the transaction request including the results of the transaction performed by the financial entities processor (4) of the beneficiary (6) that is associated to the selected means of payment,
- forward the response to the transaction request including the results of the transaction to the beneficiary (6), and
- forward another routing message comprising the response to the transaction request to the mobile telephone (7) of the user-payer (5).
